(19) Europäisches Patentamt / European Patent Office / Office européen des brevets

(11) **EP 2 033 009 B1**

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(21) Anmeldenummer: **07764845.9**

(22) Anmeldetag: **25.06.2007**

(51) Int Cl.:
*G01S 1/00* (2006.01)   *H04B 1/00* (2006.01)

(86) Internationale Anmeldenummer:
**PCT/EP2007/005617**

(87) Internationale Veröffentlichungsnummer:
**WO 2008/000428 (03.01.2008 Gazette 2008/01)**

(54) **EMPFÄNGER UND VERFAHREN ZUM EMPFANGEN EINES ERSTEN NUTZFREQUENZBANDES UND EINES ZWEITEN NUTZFREQUENZBANDES**

RECEIVER AND METHOD FOR RECEIVING A FIRST USEFUL FREQUENCY BAND AND A SECOND USEFUL FREQUENCY BAND

RÉCEPTEUR ET PROCÉDÉ DE RÉCEPTION D'UNE PREMIÈRE ET D'UNE SECONDE BANDE DE FRÉQUENCES UTILES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.06.2006 DE 102006029482**

(43) Veröffentlichungstag der Anmeldung:
**11.03.2009 Patentblatt 2009/11**

(73) Patentinhaber: **Fraunhofer-Gesellschaft zur Förderung der angewandten Forschung e.V.**
**80686 München (DE)**

(72) Erfinder:
• **CARRERA, Alfonso**
**20011 Donostia - San Sebastian (ES)**
• **KÖHLER, Stefan**
**90461 Nürnberg (DE)**
• **ROHMER, Günter**
**91058 Erlangen (DE)**

(74) Vertreter: **Zinkler, Franz et al**
**Schoppe, Zimmermann, Stöckeler & Zinkler Patentanwälte**
**Postfach 246**
**82043 Pullach bei München (DE)**

(56) Entgegenhaltungen:
**US-A- 5 805 108     US-A- 6 038 248**
**US-A1- 2004 102 172**

• **CHASTELLAIN F. ET AL: "A Low-Power RF Front-End Architecture for an L1/L2CS GPS receiver" PROCEEDINGS OF ION GNSS 2005, 13. September 2005 (2005-09-13), Seiten 628-634, XP002454344 Long Beach, CA, USA**
• **CHO S ET AL: "A 19-mW 2.6-mm L1/L2 Dual-Band CMOS GPS Receiver" IEEE JOURNAL OF SOLID-STATE CIRCUITS, IEEE SERVICE CENTER, PISCATAWAY, NJ, US, Bd. 40, Nr. 7, Juli 2005 (2005-07), Seiten 1414-1425, XP011135554 ISSN: 0018-9200**
• **HASHEMI H ET AL: "Concurrent dual-band CMOS low noise amplifiers and receiver architectures" 2001 SYMPOSIUM ON VLSI CIRCUITS. DIGEST OF TECHNICAL PAPERS. KYOTO, JAPAN, JUNE 14 - 16, 2001, SYMPOSIUM ON VLSI CIRCUITS, TOKYO : JSAP, JP, 14. Juni 2001 (2001-06-14), Seiten 247-250, XP010551555 ISBN: 4-89114-014-3**
• **DREHER A ET AL: "Planar digital-beamforming antenna for satellite navigation" MICROWAVE SYMPOSIUM DIGEST, 1999 IEEE MTT-S INTERNATIONAL ANAHEIM, CA, USA 13-19 JUNE 1999, PISCATAWAY, NJ, USA,IEEE, US, Bd. 2, 13. Juni 1999 (1999-06-13), Seiten 647-650, XP010343456 ISBN: 0-7803-5135-5**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich im Allgemeinen auf einen Empfänger und ein Verfahren zum Empfangen eines ersten Nutzfrequenzbandes und eines zweiten Nutzfrequenzbandes, im Speziellen auf einen breitbandigen Low-IF Dual-Empfänger.

In vielen Bereichen der Kommunikationstechnik, beispielsweise aber auch bei einer satellitengestützten Positionsbestimmung, ist es wünschenswert, mehrere Nutzfrequenzbänder gleichzeitig oder zumindest zeitlich abwechselnd empfangen zu könnten. Im Übrigen ist es besonders bei portablen Geräten wünschenswert, eine möglichst einfache Schaltungsstruktur und einen geringen Stromverbrauch zu erzielen.

Dual-Empfänger ermöglichen den gleichzeitigen Empfang von zwei verschiedenen Bändern durch einen einzigen Empfänger, was Leistungsaufnahme und Kosten spart.

In der Positionsbestimmung kann es beispielsweise erforderlich sein, gleichzeitig zwei Bänder eines Navigationssystems (z. B. ein L1-Band und L2c-Band des GPS-Satellitennavigationssystems oder ein L5-Band und L6-Band des Galileo-Satellitennavigationssystems) zu empfangen. Ebenso kann aber auch ein gemeinsamer Empfang von Bändern aus verschiedenen Systemen erwünscht sein.

Bei den derzeit verwendeten Empfängern für die oben beschriebenen Anwendungsgebieten gibt es zwei Gruppen zu unterscheiden: sehr breitbandige Empfänger, und relativ schmalbandige Empfänger bzw. Dual-Empfänger. In beiden Fällen len geht es um hochgenaue Empfänger für high-end Navigations- und Ortsbestimmungssysteme.

Bei einer ersten Art von Empfängern ist eine hohe Genauigkeit durch eine große Bandbreite des Übertragungsverfahrens DSSS (Direkt-Sequenz-Verteiltes-Spektrum oder direktsequence spread spectrum) erreicht, wobei die Bandbreite beispielsweise zwischen 20 MHz und 70 MHz oder noch mehr beträgt. Eine derart hohe Bandbreite zu bearbeiten stellt eine große Herausforderung für den Empfänger dar. Vor allem sind Filterung und deren Gruppenlaufzeitänderung im Durchlassbereich, Grenzfrequenz eines Verstärkers mit variabler Verstärkung (auch als VGA bzw. Variable Gain Amplifier bezeichnet) und eine Abtastrate eines Analog/Digital-Umsetzers (auch als ADU bezeichnet) davon betroffen. Aufgrund der hohen Grenzfrequenz ist ein Anti-Alias-Filter passiv implementiert. Ferner benötigen aufgrund der hohen Grenzfrequenz der Verstärker mit variabler Verstärkung (VGA) und der Analog/Digital-Umsetzer (ADU) vergleichsweise viel Strom.

Bei einer zweiten Art von Empfängern ist eine hohe Genauigkeit durch einen gleichzeitigen Empfang von zwei Bändern gelungen. Dieses Verfahren kompensiert, unter anderem, eine ionosphärische Gruppenlaufzeitänderung (eine negative Einflussgröße in Navigationssystemen) durch eine Messung von zwei Verzögerungen aus zwei verschiedenen Trägerfrequenzen.

Die Veröffentlichung "A Low-Power RF Front-End Architecture for an L1/L2CS GPS receiver" von F. Chastellain u.a. beschreibt einen Zweiband-GPS-Empfänger. So beschreibt die genannte Veröffentlichung mögliche Architekturen für Zweifrequenz-GPS-Front-Ends mit geringer Leistungsaufnahme. Unter anderem ist der Einsatz eines Quadraturmischers in einem derartigen Empfänger beschrieben. Außerdem ist eine Weaver-Architektur beschrieben, die verwendet werden kann, um das korrekte Band auszuwählen. Zudem sind verschiedene Frequenz-Konzepte beschrieben.

Die Veröffentlichung "A 19-mW 2.6-mm L1/L2 Dual-Band CMOS GPS Receiver" von J. Ko u.a. (veröffentlicht in: IEEE Journal of Solid-State Circuits, Vol. 40, No. 7, July 2005) beschreibt Entwurf und Implementierung eines L1/L2 Zweiband-GPS-Empfängers. Eine zweifache Frequenzumsetzung in Verbindung mit einer Architektur mit niedriger Zwischenfrequenz wurde für den Zweibandbetrieb verwendet. Der Empfänger umfasst einen Hochfrequenz-Vorverstärker, Mischer zur Frequenzumsetzung, einen Kanalfilter mit variabler Verstärkung, einen zwei-Bit-Analog-Digital-Wandler und einen Synthesizer mit phasengerasteter Schleife sowie einen on-chip spannungsgesteuerten Oszillator.

In Anbetracht des bekannten Standes der Technik ist es die Aufgabe der vorliegenden Erfindung, ein Konzept zum Empfangen eines ersten Nutzfrequenzbandes bei einer ersten Trägerfrequenz und eines zweiten Nutzfrequenzbandes bei einer zweiten Trägerfrequenz zu schaffen, das einen gleichzeitigen Empfang der beiden Nutzfrequenzbänder mit besonders geringen Ressourcenaufwand ermöglicht.

Diese Aufgabe wird durch einen Empfänger gemäß Anspruch 1 sowie durch ein Verfahren zum Empfangen gemäß Anspruch 14 gelöst.

Die vorliegende Erfindung schafft somit einen Empfänger gemäß dem Anspruch 1.

Es ist der Kerngedanke der vorliegenden Erfindung, dass eine besonders effiziente Empfängerstruktur dadurch entsteht, dass ein Kombinationssignal, das beide Nutzfrequenzbänder umfasst, oder zwei einzelne Bandpassfiltersignale, von denen ein erstes Bandpassfiltersignal einen Informationsinhalt des ersten Nutzfrequenzbandes umfasst, und von denen ein zweites Bandpassfiltersignal einen Informationsinhalt des zweiten Nutzfrequenzbandes umfasst, in einer Mischereinrichtung unter Verwendung eines Lokaloszillatorsignals umgesetzt wird (bzw. umgesetzt werden), dessen Frequenz so gewählt ist, dass das erste Nutzfrequenzband und das zweite Nutzfrequenzband bezüglich der Frequenz des Lokaloszillatorsignals zumindest teilweise Spiegelbänder zueinander sind. In anderen Worten, die Frequenz des durch die Mischereinrichtung verwendeten Lokaloszillatorsignals ist gleich einem Mittelwert einer ersten Trägerfrequenz in dem ersten Nutzfrequenzband und einer zweiten Trägerfrequenz in dem zweiten Nutzfrequenzband. Somit werden die beiden Nutzfrequenzbänder auf zumindest teilweise überlappende Frequenzbereiche abgebildet, die ein gemeinsames Zwischenfrequenzband für die beiden Nutzfrequenzbänder darstellen. Die beiden durch die Mischereinrichtung erzeugten Zwischenfrequenzsignale können daher mit einer Zwischenfrequenzfiltereinrichtung in besonders effizienter Weise gefiltert werden.

Da die beiden Nutzfrequenzbänder auf im Wesentlichen gleiche oder zumindest überlappende Zwischenfrequenzbänder abgebildet sind, können die beiden Zwischenfrequenzsignale mit Analog/Digital-Wandlern besonders effizient abgetastet werden, wenn eine für die Abtastung des ersten Zwischenfrequenzsignals gewählte Abtastfrequenz gleich einer für die Abtastung des zweiten Zwischenfrequenzsignals gewählten Abtastfrequenz ist. In anderen Worten, dadurch dass die beiden Zwischenfrequenzbänder aufgrund der erfindungsgemäßen Wahl der Frequenz des Lokaloszillatorsignals auf gleiche oder zumindest überlappende Frequenzbereiche abgebildet werden, wird erreicht, dass die Analog/Digital-Wandler beide bei einer gleichen Abtastfrequenz betrieben werden können, ohne dass an den Ausgängen der Analog/Digital-Wandler eine unnötig große Informationsmenge erzeugt wird.

Ferner ist aufgrund des erfindungsgemäßen Konzepts lediglich ein einziger Frequenzsynthesizer zur Erzeugung des Lokaloszillatorsignals nötig, wobei dennoch der gleichzeitige Empfang von zwei Nutzfrequenzbändern ermöglicht wird. Dadurch werden in erheblicher Weise Ressourcen (im Hinblick auf einen Schaltungsaufwand und einen Leistungsverbrauch) gegenüber herkömmlichen Lösungen eingespart, bei denen zwei getrennte Lokaloszillatorsignale verschiedener Frequenz für eine Umsetzung des ersten Nutzfrequenzbandes und des zweiten Nutzfrequenzbandes eingesetzt werden.

Durch die erfindungsgemäße Wahl der Frequenz des Lokaloszillators wird ferner ermöglicht, dass die Zwischenfrequenzfiltereinrichtung zum Filtern des ersten Zwischenfrequenzsignals und des zweiten Zwischenfrequenzsignals aus zwei gleichartigen Zweigen bestehen kann, da sowohl das erste Nutzfrequenzband als auch das zweite Nutzfrequenzband auf gleiche bzw. zumindest überlappende Zwischenfrequenzbereiche abgebildet werden. Dies resultiert in einem vereinfachten Schaltungsentwurf und verringerten Herstellungskosten.

Die Analog/Digital-Wandlung kann mit gleichen Abtastfrequenzen für die beiden Zwischenfrequenzsignale erfolgen, ohne dass eine unnötig hohe Informationsmenge erzeugt wird.

Ferner wird eine Spiegelfrequenzunterdrückung durch die erfindungsgemäße Wahl der Frequenz des ersten Lokaloszillatorsignals dadurch erleichtert bzw. verbessert, dass die beiden Nutzfrequenzbänder Spiegelbänder zueinander sind. Es müssen also nur noch die beiden Nutzfrequenzbänder voneinander getrennt werden. Zusätzliche zu unterdrückende Spiegelfrequenzen treten bei der Mischung durch die Mischereinrichtung hingegen nicht auf.

Der Patentanspruch 6 definiert ein besonders vorteilhaftes Ausführungsbeispiel der vorliegenden Erfindung. Gemäß einem Aspekt der vorliegenden Erfindung wurde erkannt, dass es vorteilhaft ist, im Rahmen einer ersten Frequenzumsetzung bzw. eines ersten Mischers, also durch die Mischereinrichtung, eine Frequenzumsetzung derart vorzunehmen, dass zwei Nutzfrequenzbänder, die in einem Kombinationssignal enthalten sind, in dem ersten Zwischenfrequenzsignal, das ein Inphase-Signal ist, und in dem zweiten Zwischenfrequenzsignal, das ein Quadratur-Signal ist, auf spektral zumindest teilweise überlappende Frequenzen abgebildet werden.

Es wurde erkannt, dass eine Trennung der Informationsinhalte des ersten Nutzfrequenzbandes und des zweiten Nutzfrequenzbandes nach der Erzeugung des ersten digitalisierten Zwischenfrequenzsignals aus dem ersten Zwischenfrequenzsignal und einer Erzeugung des zweiten digitalisierten Zwischenfrequenzsignals aus dem zweiten Zwischenfrequenzsignal im Rahmen einer digitalen Signalverarbeitung der digitalisierten Zwischenfrequenzsignale erfolgen kann. In anderen Worten, es wurde erkannt, dass trotz der Vereinfachung, die sich durch die Verwendung eines einzigen Lokaloszillatorsignals, das beispielsweise mittig bzw. symmetrisch zwischen den Nutzfrequenzbändern liegt, ergibt, unter Verwendung einer Zwischenfrequenzfiltereinrichtung mit zwei im Wesentlichen identischen Filtern für das erste Zwischenfrequenzsignal und das zweite Zwischenfrequenzsignal, und unter Verwendung von Analog/Digital-Wandlern, die mit einer einzigen gleichen Abtastfrequenz betrieben werden, eine effiziente Trennung der Informationsinhalte der Nutzfrequenzbänder möglich ist.

Die genannte Lösung ermöglicht im Übrigen die Verwendung einer einzigen Zweibandantenne, die für den Empfang der beiden Nutzfrequenzbänder ausgelegt ist, einer einzigen der Antenne nachgeschalteten Bandpassfiltereinrichtung sowie eines einzigen rauscharmen Verstärkers zur Erzeugung des Kombinationssignals. Dadurch entsteht eine Schaltungsstruktur, die besonders wenige Elemente umfasst, die die Verwendung einer besonders geringen gemeinsamen Abtastfrequenz für die Analog/Digital-Wandler ermöglicht, und die ferner durch eine digitale Verarbeitung der digitalisierten Zwischenfrequenzsignale einer Trennung der Informationsinhalte der Nutzfrequenzbänder ermöglicht.

Weitere besonders vorteilhafte Ausführungsbeispiele der vorliegenden Erfindung sind durch die Patentansprüche 14 und 15 definiert. Durch die genannte Implementierung wird gemäß einem Aspekt der vorliegenden Erfindung ein Konzept realisiert, gemäß dem durch die Analog/Digital-Wandler eine Frequenzumsetzung durch Unterabtastung erfolgt. Das durch die Zwischenfrequenz-Filtereinrichtung von der Mischereinrichtung zu dem Analog/Digital-Umsetzer weitergeleitete erste Zwischenfrequenzsignal umfasst lediglich Frequenzanteile im Frequenzintervall $[N \cdot f_s; (N+1/2) \cdot f_s]$. Das genannte Frequenzintervall wird durch die Abtastung mit

der Abtastfrequenz $f_s$ auf das Frequenzintervall [0;$f_s$/2] abgebildet. Somit erfüllt der Analog/Digital-Umsetzer gleichzeitig die Funktion eines Frequenzumsetzers. Die Zwischenfrequenz-Filtereinrichtung erfüllt ferner gleichzeitig die Funktion einer Signalauswahl sowie die Funktion eines Anti-Aliasing-Filters für den Analog/Digital-Umsetzer. Somit kann ein separates Anti-Aliasing-Filter entfallen. Ferner ist durch die Zwischenfrequenz-Filtereinrichtung eine Spiegelfrequenzunterdrückung gewährleitstet.

Durch die genannte Wahl der Abtastfrequenz $f_s$ wird ferner gewährleistet, dass eine präzise Erzeugung eines Inphase-Anteils sowie eines Quadratur-Anteils der ersten digitalisierten Zwischenfrequenzsignals und des zweiten digitalisierten Zwischenfrequenzsignals erzielt werden kann.

Durch die Verwendung der oben genannten Merkmale kann somit ein Empfänger geschaffen werden, bei dem durch eine analoge Mischereinrichtung zwei analoge Zwischenfrequenzsignale, ein Inphase-Signale und ein Quadratur-Signal, erzeugt werden. Die entsprechenden analogen Zwischenfrequenzsignale werden dann Bandpass-gefiltert. Durch eine Unterabtastung durch die Analog/Digital-Umsetzer erfolgt eine Frequenzumsetzung, wodurch ein erstes digitalisiertes Zwischenfrequenzsignal und ein zweites digitalisiertes Zwischenfrequenzsignal entsteht. Die digitalisierten Zwischenfrequenzsignale können dann durch eine jeweilige Quadratur-Abtastung in Inphase-Anteile und Quadratur-Anteile aufgespalten werden, die für eine Trennung der Informationsinhalte der Nutzfrequenzbänder herangezogen werden können.

Die vorliegende Erfindung schafft ferner ein Verfahren zum Empfangen eines ersten Nutzfrequenzbandes bei einer ersten Trägerfrequenz sowie eines zweiten Nutzfrequenzbandes bei einer zweiten Trägerfrequenz, gemäß dem Patentanspruch 22.

Bevorzugte Ausführungsbeispiele der vorliegenden Erfindung werden nachfolgend Bezug nehmend auf die beiliegenden Figuren näher erläutert. Es zeigen:

Fig. 1    ein Blockschaltbild eines erfindungsgemäßen Empfängers gemäß einem Ausführungsbeispiel der vorliegenden Erfindung;

Fig. 2    ein Blockschaltbild eines erfindungsgemäßen Empfängers gemäß einem Ausführungsbeispiel der vorliegenden Erfindung;

Fig. 3a    ein Blockschaltbild einer Mischereinrichtung zur Verwendung in einem Empfänger gemäß der Fig. 1;

Fig. 3b    ein Blockschaltbild einer Mischereinrichtung zur Verwendung in einem Empfänger gemäß der Fig. 2;

Fig. 4    ein Blockschaltbild eines erfindungsgemäßen Empfängers gemäß einem Ausführungsbeispiel der vorliegenden Erfindung;

Fig. 5    einen Frequenzplan innerhalb eines erfindungsgemäßen Empfängers gemäß der Fig. 4;

Fig. 6    eine spektrale Darstellung der sich bei einer Unterabtastung ergebenden digitalisierten Zwischenfrequenzsignale;

Fig. 7a    einen ersten Teil eines Flussdiagramms eines erfindungsgemäßen Verfahrens gemäß einem Ausführungsbeispiel der vorliegenden Erfindung; und

Fig. 7b    einen zweiten Teil eines Flussdiagramms eines erfindungsgemäßen Verfahrens gemäß einem Ausführungsbeispiel der vorliegenden Erfindung.

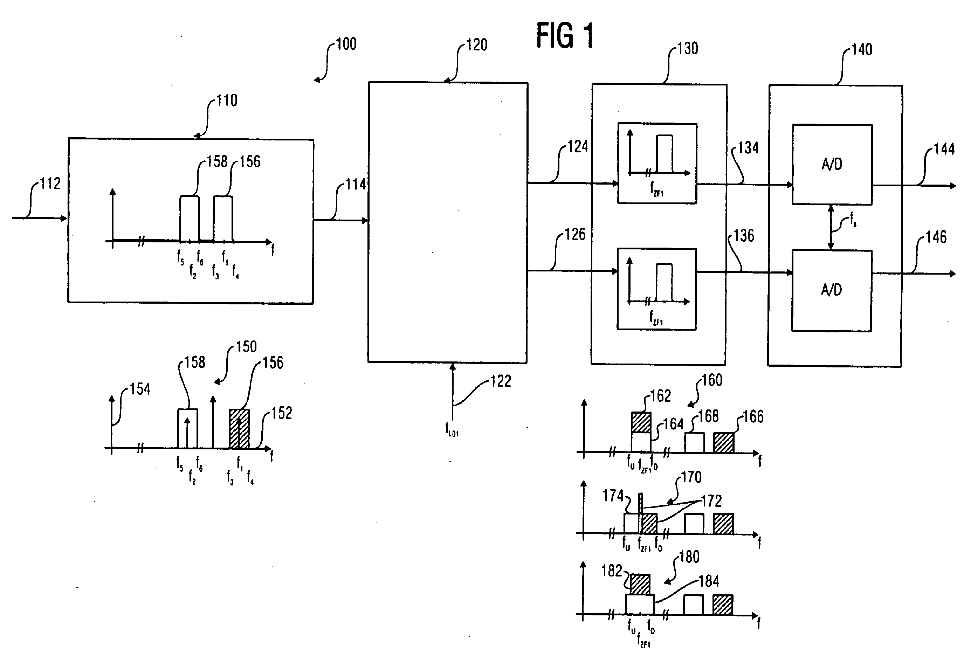

Fig. 1 zeigt ein Blockschaltbild eines erfindungsgemäßen Empfängers gemäß einem Ausführungsbeispiel der vorliegenden Erfindung. Der Empfänger gemäß der Fig. 1 ist in seiner Gesamtheit mit 100 bezeichnet. Der Empfänger 100 umfasst eine Bandpassfiltereinrichtung 110, die ausgelegt ist, um ein Empfangssignal 112 zu empfangen. Die Bandpassfiltereinrichtung 110 (im Folgenden auch kurz als Bandpassfilter 110 bezeichnet) erzeugt basierend auf dem Empfangssignal 112 ein Kombinationssignal 114 und liefert dieses an eine Mischereinrichtung 120. Die Mischereinrichtung 120 empfängt ferner ein Lokaloszillatorsignal 122. Die Mischereinrichtung 120 liefert als ein erstes Ausgangssignal ein erstes Zwischenfrequenzsignal 124, sowie als ein zweites Ausgangssignal ein zweites Zwischenfrequenzsignal 126. Eine Zwischenfrequenzfiltereinrichtung 130 empfängt das erste Zwischenfrequenzsignal 124 und das zweite Zwischenfrequenzsignal 126 und stellt als ein erstes Ausgangssignal ein erstes gefiltertes Zwischenfrequenzsignal 134 sowie als ein zweites Ausgangssignal ein zweites gefiltertes Zwischenfrequenzsignal 136 bereit. Eine Analog/Digital-Wandlereinrichtung 140 empfängt das erste gefilterte Zwischenfrequenzsignal 134 und das zweite gefilterte Zwischenfrequenzsignal 136 und erzeugt durch eine Abtastung mit einer Abtastfrequenz $f_s$ ein erstes digitalisiertes Zwischenfrequenzsignal 144 sowie ein zweites digitalisiertes Zwischenfrequenzsignal 146.

Basierend auf der strukturellen Beschreibung wird im Folgenden die Funktionsweise des Empfängers 100 näher erläutert. Es wird davon ausgegangen, dass das Empfangssignal 112 zwei Nutzfrequenzbänder umfasst. Eine spektrale Darstellung 150 zeigt ein Beispiel eines Spektrums des Empfangssignals 112. An einer Abszisse 152 ist eine Frequenz aufgetragen, während an einer Ordinate 154 beispielsweise eine spektrale Leistungsdichte angetragen ist. Die spektrale Darstellung 150 zeigt ein erstes Nutzfrequenzband 156, das sich von einer unteren Frequenz $f_3$ bis zu einer oberen Frequenz $f_4$ erstreckt. Ein zweites Nutzfrequenzband 158 erstreckt sich von einer unteren Frequenz $f_5$ bis zu einer oberen Frequenz $f_6$. Das erste Nutzfrequenzband 156 ist ferner bevorzugt von dem zweiten Nutzfrequenzband 158 beabstandet. Innerhalb des ersten Nutzfrequenzbandes 156 liegt eine erste Trägerfrequenz $f_1$, und innerhalb des zweiten Nutzfrequenzbandes 158 liegt beispielsweise eine zweite Trägerfrequenz $f_2$. Die Trägerfrequenzen $f_1$, $f_2$ definieren beispielsweise eine Bandmitte der Nutzfrequenzbänder 156, 158. Es ist aber nicht erforderlich, dass bei den Trägerfrequenzen $f_1$, $f_2$ tatsächlich Träger vorhanden sind. Vielmehr können in den Nutzfrequenzbändern 156, 158 auch Signale mit verteiltem Spektrum übertragen werden. In anderen Worten, die genannten Trägerfrequenzen $f_1$, $f_2$ dienen hier nur der Veranschaulichung.

Die Bandpassfiltereinrichtung 110 ist im Übrigen ausgelegt, um das erste Nutzfrequenzband 156 und das zweite Nutzfrequenzband 158 passieren zu lassen. In anderen Worten, die Bandpassfiltereinrichtung 110 ist ausgelegt, um beispielsweise das erste Nutzfrequenzband 156 und das zweite Nutzfrequenzband 158 nicht oder nur vergleichsweise schwach zu bedämpfen, und um einen Frequenzbereich zwischen dem ersten Nutzfrequenzband 156 und dem zweiten Nutzfrequenzband 158 zu bedämpfen bzw. stärker zu bedämpfen als die Nutzfrequenzbänder 156 und 158. Die Nutzfrequenzbänder sind also zwei getrennte Passbänder der Bandpassfiltereinrichtung 110. Bevorzugt ist die Bandpassfiltereinrichtung 110 im Übrigen ausgelegt, um weitere an die Nutzfrequenzbänder 156, 158 angrenzende Frequenzbereiche zu bedämpfen (bzw. stärker zu bedämpfen als die Nutzfrequenzbänder 156, 158).

Es entsteht somit ein Kombinationssignal 114, das sowohl den Informationsinhalt des ersten Nutzfrequenzbandes 156 als auch den Informationsinhalt des zweiten Nutzfrequenzbandes 158 trägt. Die Mischereinrichtung 120 empfängt das Kombinationssignal 114 und ist ausgelegt, um das Kombinationssignal 114 mit dem Lokaloszillatorsignal 122 zu mischen. Die Frequenz des Lokaloszillatorsignals 122 ist so gewählt, dass das erste Nutzfrequenzband 156 und das zweite Nutzfrequenzband 158 ganz oder zumindest teilweise Spiegelbänder zueinander sind. In anderen Worten, das Lokaloszillatorsignal 150 ist so gewählt, dass das erste Nutzfrequenzband 156 und das zweite Nutzfrequenzband 158 bei einer Mischung mit dem Lokaloszillatorsignal 122 auf überlappende Frequenzbänder abgebildet werden.

Beschreibt $f_3$ eine untere Frequenzgrenze des ersten Nutzfrequenzbandes 156, und $f_4$ eine obere Frequenzgrenze des ersten Nutzfrequenzbandes 156, und beschreibt ferner $f_5$ eine untere Frequenzgrenze des zweiten Nutzfrequenzbandes 158 und $f_6$ eine obere Frequenzgrenze des zweiten Nutzfrequenzbandes 158, so gilt: die Frequenzintervalle $[f_3-f_{LO1}; f_4-f_{LO1}]$ und $[f_{LO1}-f_6; f_{LO1}-f_5]$ überlappen sich. Zu diesem Zweck ist die Frequenz des Lokaloszillatorsignals 122 bevorzugt zwischen den Nutzfrequenzbändern 156, 158 gewählt. Bevorzugt liegt beispielsweise die Frequenz $f_{LO1}$ des ersten Lokaloszillatorsignals 122 symmetrisch zwischen dem ersten Nutzfrequenzband 156 und dem zweiten Nutzfrequenzband 158.

Die Mischereinrichtung 120 mischt somit das Kombinationssignal 114, in dem die beiden Nutzfrequenzbänder 156, 158 enthalten sind, mit dem Lokaloszillatorsignal 122. Dabei ergeben sich ein erstes Zwischenfrequenzsignal 124 und ein zweites Zwischenfrequenzsignal 126. Eine spektrale Darstellung 160 zeigt ein Beispiel für das sich bei der Mischung durch die Mischereinrichtung 120 ergebende erste Zwischenfrequenzsignal 124 oder das zweite Zwischenfrequenzsignal 126. In der spektralen Darstellung 160 wird davon ausgegangen, dass das erste Nutzfrequenzband 156 und das zweite Nutzfrequenzband 158 eine gleiche Breite aufweisen, und dass die Frequenz $f_{LO1}$ des Lokaloszillatorsignals symmetrisch zwischen den Nutzfrequenzbändern 156, 158 liegt. Durch ein Heruntermischen entsteht dabei ein Abbild bzw. heruntergemischtes Abbild 162 des ersten Nutzfrequenzbandes 156. Ferner entsteht ein heruntergemischtes Abbild 164 des zweiten Nutzfrequenzbandes 158. Die Abbilder 162, 164 der Nutzfrequenzbänder 156, 158 liegen frequenzmäßig in einem gleichen Bereich und erstrecken sich frequenzmäßig um eine erste Zwischenfrequenz $f_{ZF1}$ herum. Beispielsweise kann die erste Zwischenfrequenz $f_{ZF1}$ als eine Mittenfrequenz der Abbilder 162, 164 definiert sein.

Im Übrigen entstehen durch die Funktion der Mischereinrichtung 120 ferner noch aufwärts gemischte Abbilder 166, 168 der Nutzfrequenzbänder 156, 158, die im Folgenden nicht von Relevanz sind, und die im Übrigen durch die Zwischenfrequenzfiltereinrichtung 130 aus den Zwischenfrequenzsignalen 124, 126 entfernt bzw. herausgefiltert oder unterdrückt werden können.

Eine weitere spektrale Darstellung 170 zeigt den Fall, dass die Frequenz $f_{LO1}$ des Lokaloszillators 122 nicht vollkommen symmetrisch zwischen den Nutzfrequenzbändern 156, 158 liegt. Abbilder 172, 174 der Nutzfrequenzbänder 156, 158 überlappen sich in diesem Fall nur teilweise. Die erste Zwischenfrequenz $f_{ZF1}$ kann beispielsweise als eine Mittenfrequenz eines Überlappungsbereichs, in dem sich die Abbilder 172, 174 überlappen, oder zumindest als eine Frequenz in dem Überlappungsbereich definiert sein.

Eine weitere spektrale Darstellung 180 zeigt durch die Mischung in der Mischereinrichtung 120 entstehende Abbilder 182, 184 der Nutzfrequenzbänder 156, 158, wobei hier davon ausgegangen wird, dass das erste Nutzfrequenzband 156 schmäler als das zweite Nutzfrequenzband 158 ist. Es existiert auch hier ein Überlappungsbereich der beiden Abbilder 182, 184, wobei angenommen wird, dass die erste Zwischenfrequenz $f_{ZF1}$ innerhalb des Überlappungsbereichs liegt.

Die Zwischenfrequenzfiltereinrichtung 130 empfängt beispielsweise das erste Zwischenfrequenzsignal 124 und filtert das erste Zwischenfrequenzsignal 124, um ein gefiltertes erstes Zwischenfrequenzsignal 134 zu erhalten. Die Filtereinrichtung 130 kann dabei entweder ein Bandpassfilter oder ein Tiefpassfilter umfassen, das bevorzugt ausgelegt ist, um genau ein Abbild 162, 172, 182 des ersten Nutzfrequenzbandes 156 und ferner genau ein Abbild 164, 174, 184 des zweiten Nutzfrequenzbandes 158 passieren zu lassen, und um weitere durch die Mischung in der Mischereinrichtung 120 entstehende Abbilder (z.B. durch ein Aufwärts-Mischen entstehende Abbilder 166, 168) der Nutzfrequenzbänder 156, 158 zu bedämpfen oder zu blockieren. Die Zwischenfrequenzfiltereinrichtung 130 ist ferner ausgelegt, um das zweite Zwischenfrequenzsignal 126 zu erhalten, und um basierend darauf das zweite gefilterte Zwischenfrequenzsignal 136 zu erzeugen. Zu diesem Zweck enthält die Filtereinrichtung 130 beispielsweise ein Tiefpassfilter oder ein Bandpassfilter, das von seiner Funktionsweise her dem zur Erzeugung des ersten gefilterten Zwischenfrequenzsignals 134 aus dem ersten Zwischenfrequenzsignal 124 verwendeten Filter entspricht.

Die Analog/Digital-Wandlereinrichtung 140 ist ferner ausgelegt, um die Zwischenfrequenzsignale 134, 136 analog/digital zu wandeln, um basierend auf dem ersten gefilterten Zwischenfrequenzsignal 134 das erste digitalisierte Zwischenfrequenzsignal 144 zu erhalten, und um basierend auf dem zweiten gefilterten Zwischenfrequenzsignal 136 das zweite digitalisierte Zwischenfrequenzsignal 146 zu erhalten. Die Analog/Digital-Wandlereinrichtung ist dabei ausgelegt, um das erste gefilterte Zwischenfrequenzsignal 134 und das zweite gefilterte Zwischenfrequenzsignal 136 mit einer gemeinsamen, gleichen Abtastfrequenz $f_s$ abzutasten. Dies ist besonders vorteilhaft, da die Abbilder 162, 172, 182; 164, 174, 184 der Nutzfrequenzbänder 156, 158 sich frequenzmäßig überlappen. Daher kann durch eine Abtastung mit einer gemeinsamen Abtastfrequenz sowohl ein Informationsinhalt des ersten Nutzfrequenzbandes 156 als auch ein Informationsinhalt des zweiten Nutzfrequenzbandes 158 in einer effizienten Weise digitalisiert werden.

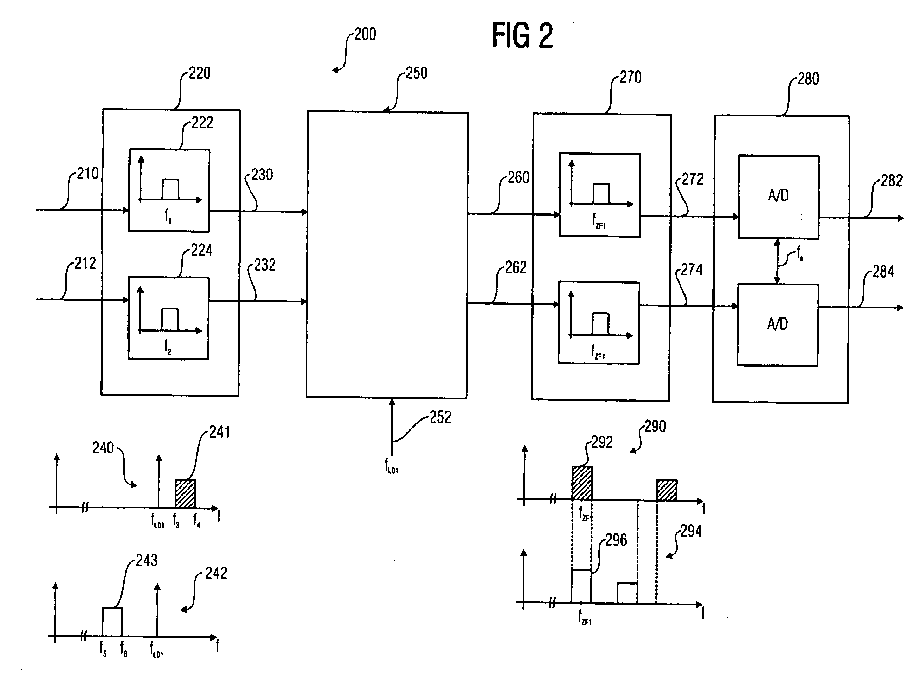

Fig. 2 zeigt ein Blockschaltbild eines erfindungsgemäßen Empfängers gemäß einem Ausführungsbeispiel der vorliegenden Erfindung. Der Empfänger gemäß der Fig. 2 ist in seiner Gesamtheit mit 200 bezeichnet.

Der Empfänger 200 empfängt ein erstes Empfangssignal 210 sowie ein zweites Empfangssignal 212. Eine Bandpassfiltereinrichtung 220 empfängt das erste Empfangssignal 210 und das zweite Empfangssignal 212. Das erste Empfangssignal 210 und das zweite Empfangssignal 212 können beispielsweise von unterschiedlichen Antennen stammen, von denen die eine für das erste Nutzfrequenzband optimiert ist, und von denen die zweite für das zweite Nutzfrequenzband optimiert ist. Die Empfangssignale 210, 212 können aber auch identisch sein.

Es ist hierbei möglich, dass beispielsweise das erste Empfangssignal 210 nur das erste Nutzfrequenzband, nicht aber (bzw. nur in abgeschwächter Form) das zweite Nutzfrequenzband umfasst, oder dass das erste Empfangssignal 210 sowohl das erste Nutzfrequenzband als auch das zweite Nutzfrequenzband umfasst. Ferner kann das zweite Empfangssignal 212 entweder nur das zweite Nutzfrequenzband, nicht aber (bzw. nur in abgeschwächter Form) das zweite Nutzfrequenzband, oder aber sowohl das erste Nutzfrequenzband als auch das zweite Nutzfrequenzband umfassen.

Die Bandpassfiltereinrichtung 220 umfasst bevorzugt ein erstes Bandpassfilter 222, das bevorzugt ausgelegt ist, um das erste Empfangssignal 210 zu empfangen, und um basierend auf dem ersten Empfangssignal 210 ein erstes Bandpassfiltersignal 230 zu erzeugen. Das erste Bandpassfilter 222 ist dabei bevorzugt ausgelegt, um das erste Nutzfrequenzband ungedämpft oder mit geringer Dämpfung passieren zu lassen, und um andere Frequenzbereiche, die das erste Nutzfrequenzband umgeben, zu bedämpfen bzw. zu unterdrücken. Beispielsweise ist das erste Bandpassfilter 222 bevorzugt ausgelegt, um das zweite Nutzfrequenzband stärker (bevorzugt um zumindest 10dB stärker, besser aber um zumindest 20 dB stärker) zu bedämpfen als das erste Nutzfrequenzband. Somit entsteht ein erstes Bandpassfiltersignal 230, das im Wesentlichen das erste Nutzfrequenzband umfasst.

Die Bandpassfiltereinrichtung 220 umfasst ferner bevorzugt ein zweites Bandpassfilter 224, das ausgelegt ist, um das zweite Empfangssignal 212 zu empfangen, und um basierend auf dem zweiten Empfangssignal 212 ein zweites Bandpassfiltersignal 232 zu erzeugen. Das zweite Bandpassfilter 224 ist bevorzugt ausgelegt, um das zweite Nutzfrequenzband passieren zu lassen (d.h. nicht oder nur schwach zu dämpfen), und um andere Frequenzbereiche, die das zweite Nutzfrequenzband umgeben, stärker zu bedämpfen bzw. zu unterdrücken. Bevorzugt ist das zweite Bandpassfilter 224 ausgelegt, um das erste Nutzfrequenzband stärker (bevorzugt um zumindest 10dB stärker, besser aber um zumindest 20 dB stärker) zu bedämpfen als das zweite Nutzfrequenzband. Somit umfasst das zweite Bandpassfiltersignal 232 im Wesentlichen das zweite Nutzfrequenzband. Eine spektrale Darstellung 240 zeigt beispielsweise das erste Bandpassfiltersignal 230, wobei neben dem Informationsinhalt bzw. spektralen Inhalt des ersten Bandpassfiltersignals 230 zusätzlich das Lokaloszillatorsignal der Frequenz $f_{LO1}$ eingetragen ist. Eine weitere spektrale Darstellung 242 zeigt beispielsweise das zweite Bandpassfiltersignal 232, wobei zusätzlich das Lokaloszillatorsignal mit einer Frequenz $f_{LO1}$ eingetragen ist.

Eine Mischereinrichtung 250 empfängt sowohl das erste Bandpassfiltersignal 230 als auch das zweite Bandpassfiltersignal 232 und ferner ein Lokaloszillatorsignal 252 der Frequenz $f_{LO1}$. Die Mischereinrichtung 250 ist bevorzugt ausgelegt, um das erste Bandpassfiltersignal 230 mit dem Lokaloszillatorsignal 252 zu mischen, um ein erstes Zwischenfrequenzsignal 260 zu erhalten. Die Mischereinrichtung 250 ist ferner bevorzugt ausgelegt, um das zweite Bandpassfiltersignal 232 mit dem Lokaloszillatorsignal 252 zu mischen, um ein zweites Zwischenfrequenzsignal 262 zu erhalten. Die Mischereinrichtung 250 ist somit ausgelegt, um das erste Bandpassfiltersignal 230 bezüglich seiner Frequenz in ein Zwischenfrequenzband umzusetzen. Ferner ist die Mischereinrichtung 250 damit in der Lage, das zweite Bandpassfiltersignal 232 bezüglich seiner Frequenz in das Zwischenfrequenzband umzusetzen.

In anderen Worten, ein Informationsinhalt des ersten Nutzfrequenzbandes wird in ein Zwischenfrequenzband um eine Zwischenfrequenz $f_{ZF1}$ herum umgesetzt. Ein Informationsinhalt des zweiten Nutzfrequenzbandes wird ebenso in das Zwischenfrequenzband um die Frequenz $f_{ZF1}$ herum umgesetzt. Die Umsetzung des ersten Nutzfrequenzbandes und des zweiten Nutzfrequenzbandes in das gleiche Zwischenfrequenzband um die Frequenz $f_{ZF1}$ herum ergibt sich dadurch, dass die Frequenz $f_{LO1}$ so gewählt ist, dass das erste Nutzfrequenzband und das zweite Nutzfrequenzband zumindest teilweise Spiegelbänder voneinander sind, wie dies bereits anhand der Fig. 1 ausführlich erläutert wurde.

Der Empfänger 200 umfasst ferner eine Zwischenfrequenzfiltereinrichtung 270, die ausgelegt ist, um das erste Zwischenfrequenzsignal 260 und das zweite Zwischenfrequenzsignal 262 zu empfangen, und um basierend auf den genannten Signalen ein erstes gefiltertes Zwischenfrequenzsignal 272 und ein zweites gefiltertes Zwischenfrequenzsignal 274 zu erzeugen. Der Empfänger 200 umfasst ferner eine Analog/Digital-Wandlereinrichtung 280, die ausgelegt ist, um das erste gefilterte Zwischenfrequenzsignal 272 und das zweite gefilterte Zwischenfrequenzsignal 274 zu empfangen, und um basierend darauf ein erstes digitalisiertes Zwischenfrequenzsignal 282 sowie ein zweites gefiltertes Zwischenfrequenzsignal 284 zu erzeugen.

Zur Verbesserung der Verständlichkeit zeigt eine spektrale Darstellung 290 das erste Zwischenfrequenzsignal 260. Das erste Zwischenfrequenzsignal 260 umfasst dabei ein Abbild 292 des ersten Nutzfrequenzbandes 241, das um die Zwischenfrequenz $f_{ZF1}$ herum gelegen ist. Eine weitere spektrale Darstellung 294 zeigt das zweiten Zwischenfrequenzsignal 262. Das zweite Zwischenfrequenzsignal 262 umfasst ein Abbild 296 des zweiten Nutzfrequenzbandes 243, das ebenso wie das Abbild 292 des ersten Nutzfrequenzbandes um die Zwischenfrequenz $f_{ZF1}$ herum gelegen ist.

Die Filtereinrichtung 270 umfasst beispielsweise ein erstes Bandpassfilter oder Tiefpassfilter, das ausgelegt ist, um das erste Zwischenfrequenzsignal 260 zu empfangen, um das Zwischenfrequenzband, also einen Frequenzbereich um die Zwischenfrequenz $f_{ZF1}$ herum, in dem das Abbild 292 des ersten Nutzfrequenzbandes 241 gelegen ist, passieren zu lassen, und um andere Frequenzbereiche zu unterdrücken bzw. zu bedämpfen. Somit umfasst das gefilterte erste Zwischenfrequenzsignal 272 im Wesentlichen das Abbild 292 des ersten Nutzfrequenzbandes 241.

Die Filtereinrichtung 270 umfasst ferner bevorzugt ein zweites Bandpassfilter oder Tiefpassfilter, das ausgelegt ist, um das zweite Zwischenfrequenzsignal 262 zu empfangen, und um basierend darauf das zweite gefilterte Zwischenfrequenzsignal 274 zu erzeugen. Das zweite Filter der Zwischenfrequenzfiltereinrichtung 270 ist bevorzugt ausgelegt, um das Abbild 296 des zweiten Nutzfrequenzbandes 243 passieren zu lassen, und um andere Frequenzbänder zu bedämpfen bzw. zu unterdrücken.

Es sei im Übrigen darauf hingewiesen, dass für das Filter 270 das im Hinblick auf das Filter 130 Gesagte gilt.

Ferner gilt im Hinblick auf die Analog/Digital-Wandlereinrichtung 280 das im Hinblick auf die Analog/Digital-Wandlereinrichtung 140 Gesagte.

Im Übrigen gelten auch für das Lokaloszillatorsignal 252 und für einen Zusammenhang zwischen der Frequenz $f_{LO1}$ und den Frequenzen der beiden Nutzfrequenzbänder die im Hinblick auf den Empfänger 100 gemachten Ausführungen. In anderen Worten, das erste Nutzfrequenzband 156 entspricht dem ersten Nutzfrequenzband 251, und das zweite Nutzfrequenzband 158 entspricht dem zweiten Nutzfrequenzband 243. Das Lokaloszillatorsignal 122 entspricht dem Lokaloszillatorsignal 252.

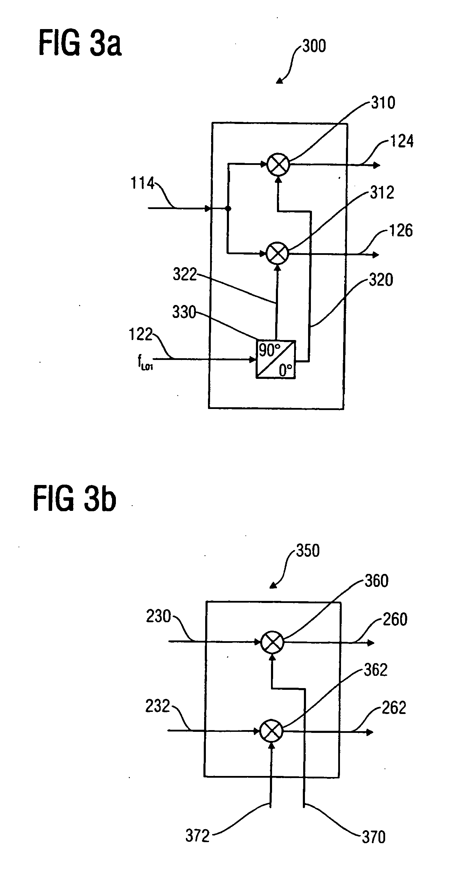

Fig. 3a zeigt im Übrigen ein Blockschaltbild einer Mischeranordnung zum Einsatz in einem Empfänger 100 gemäß Fig. 1. Die Mischeranordnung gemäß Fig. 3a ist in ihrer Gesamtheit mit 300 bezeichnet. Die Mischeranordnung 300 umfasst einen Inphase-Mischer 310 sowie einen Quadraturen-Mischer 312. Der Inphase-Mischer bzw. erste Mischer 310 empfängt das Kombinationssignal 314 und mischt dieses mit einem Lokaloszillatorsignal 320, um das erste Zwischenfrequenzsignal 124 zu erhalten. Der Quadratur-Mischer bzw. zweite Mischer 312 empfängt ebenso das Kombinationssignal 114 und mischt dieses mit einem zweiten Lokaloszillatorsignal 322, um das zweite Zwischenfrequenzsignal 126 zu erhalten.

Die Lokaloszillatorsignale 320, 322 weisen im Übrigen bevorzugt eine Phasenverschiebung von idealerweise 90° bzw. in einem Bereich zwischen 70° und 110° auf. Diese Phasenverschiebung wird beispielsweise durch eine Phasenschiebereinrichtung 330 erzeugt, die das Lokaloszillatorsignal 122 empfängt und basierend darauf die Lokaloszillatorsignale 320, 322 erzeugt.

Fig. 3b zeigt ferner ein Blockschaltbild einer Mischereinrichtung zum Einsatz in einem Empfänger 200 gemäß der Fig. 2. Die Mischereinrichtung gemäß der Fig. 3b ist in ihrer Gesamtheit mit 350 bezeichnet. Die Mischereinrichtung 350 umfasst einen ersten Mischer 360, der das erste Bandpassfiltersignal 230 sowie ein Lokaloszillatorsignal 370 empfängt, und basierend darauf das erste Zwischenfrequenzsignal 260 erzeugt. Der Mischer 350 umfasst ferner einen zweiten Mischer 362, der das zweite Bandpassfiltersignal 232 und ein Lokaloszillatorsignal 372 empfängt, und basierend darauf das zweite Zwischenfrequenzsignal 262 erzeugt. Die Lokaloszillatorsignale 370, 372 weisen bevorzugt eine gleiche Frequenz auf. Eine Phasenlage der Lokaloszillatorsignale 370, 372 zueinander ist allerdings frei wählbar. Beispielsweise kann eine Phasenverschiebung in einem Bereich zwischen 70 Grad und 110 Grad zwischen den Lokaloszillatorsignalen 370, 372 bestehen.

In anderen Worten, der Mischer 350 ist so ausgelegt, dass das erste Zwischenfrequenzsignal 260 auf dem ersten Bandpassfiltersignal 230 basiert und von dem zweiten Bandpassfiltersignal 232 entkoppelt ist. Das zweite Zwischenfrequenzsignal 262 basiert ferner auf dem zweiten Bandpassfiltersignal 232 und ist von dem ersten Bandpassfiltersignal 230 entkoppelt.

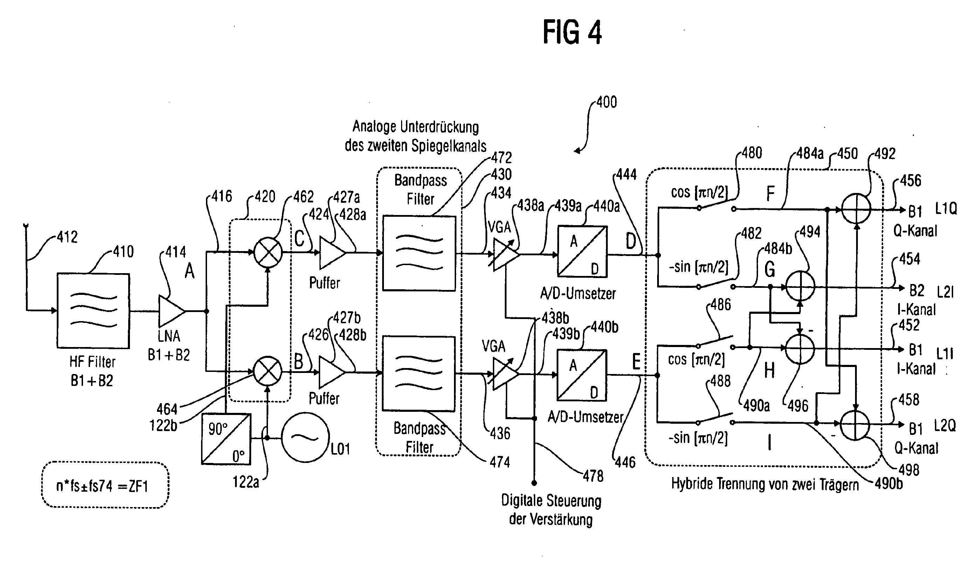

Fig. 4 zeigt ein Blockschaltbild eines erfindungsgemäßen Empfängers gemäß einem Ausführungsbeispiel der vorliegenden Erfindung. Der Empfänger gemäß der Fig. 4 ist in seiner Gesamtheit mit 400 bezeichnet. Der Empfänger 400 gemäß der Fig. 4 ist im Übrigen dem Empfänger 100 gemäß der Fig. 1 ähnlich. Daher gelten weiterhin die bezüglich des Empfängers 100 gemachten Ausführungen im Hinblick auf die Nutzfrequenzsignale 156, 158, im Hinblick auf die Auswahl der Frequenz $f_{LO1}$ des Lokaloszillatorsignals, sowie auch im Hinblick auf den Durchlassbereich der Filter der Zwischenfrequenzfiltereinrichtung 130.

Der Empfänger 400 umfasst ein Bandpassfilter bzw. eine Bandpassfiltereinrichtung 410, das ausgelegt ist, um ein Empfangssignal 412 zu empfangen. Das Empfangssignal 412 kann beispielsweise von einer Zweiband-Antenne stammen, und umfasst typischerweise einen Signalanteil in einem ersten Nutzfrequenzband sowie einen Signalanteil in einem zweiten Nutzfrequenzband, wobei das erste Nutzfrequenzband und das zweite Nutzfrequenzband bevorzugt voneinander frequenzmäßig beabstandet sind, wie dies bereits anhand der Fig. 1 erläutert wurde.

In anderen Worten, das Filter bzw. Hochfrequenzfilter 410 ist ausgelegt, um das erste Nutzfrequenzband und das zweite Nutzfrequenzband passieren zu lassen, und um einen Frequenzbereich zwischen dem ersten Nutzfrequenzband und dem zweiten Nutzfrequenzband bzw. übrige Frequenzbereiche zu unterdrücken bzw. zu bedämpfen. In anderen Worten, das Hochfrequenzfilter 410 ist ein Bandpassfilter mit zwei voneinander beabstandeten Passbändern, wobei das erste Passband das erste Nutzfrequenzband umfasst, und wobei das zweite Passband das zweite Nutzfrequenzband umfasst.

Der Empfänger 400 umfasst ferner einen Verstärker 414 mit geringem Rauschen (low noise amplifier LNA), der ausgelegt ist, um das Ausgangssignal des Bandpassfilters 410 zu empfangen und zu verstärken.

An einem Ausgang des Verstärkers 414 entsteht somit ein Kombinationssignal 416, das auch mit "A" bezeichnet ist. Eine Mischereinrichtung 420 empfängt das Kombinationssignal 416 sowie zwei zueinander um 90° phasenverschobene Lokaloszillatorsignale 122a, 122b. Die Mischereinrichtung 420 erzeugt als ein erstes Ausgangssignal ein erstes Zwischenfrequenzsignal 424 und als ein zweites Ausgangssignal ein zweites Zwischenfrequenzsignal 426. Ein erster Puffer 427a empfängt das erste Zwischenfrequenzsignal 424 und erzeugt basierend darauf ein erstes gepuffertes Zwischenfrequenzsignal 428a. Ein zweiter Puffer 427b empfängt im Übrigen das zweite Zwischenfrequenzsignal 426 von der Mischereinrichtung 420 und erzeugt basierend darauf ein zweites gepuffertes Zwischenfrequenzsignal 428b. Der Empfänger 400 umfasst ferner eine Zwischenfrequenz-Filtereinrichtung 430. Die Zwischenfrequenz-Filtereinrichtung 430 empfängt das erste gepufferte Zwischenfrequenzsignal 428a und stellt basierend darauf ein erstes gefiltertes Zwischenfrequenzsignal 434 bereit. Die Zwischenfrequenz-Filtereinrichtung 430 empfängt ferner das zweite gepufferte Zwischenfrequenzsignal 428b und stellt basierend darauf ein zweites gefiltertes Zwischenfrequenzsignal 436 bereit. Der Empfänger 400 umfasst ferner zwei Verstärker 438a, 438b mit einstellbarer Verstärkung (auch als variable gain amplifier bzw. VGA bezeichnet). Der erste Verstärker 438a empfängt das erste gefilterte Zwischenfrequenzsignal 434 und stellt ein erstes gefiltertes und verstärktes Zwischenfrequenzsignal 439a zur Verfügung. Der zweite Verstärker 438b empfängt das zweite gefilterte Zwischenfrequenzsignal 436 und stellt ein zweites gefiltertes und gestärktes Zwischenfrequenzsignal 439b zur Verfügung. Ein erster Analog/Digital-Umsetzer 440a empfängt das erste gefilterte und verstärkte Zwischenfrequenzsignal 439 und setzt dieses in ein erstes digitalisiertes Zwischenfrequenzsignal 444 um. Ein zweiter Analog/DigitalUmsetzer 440b empfängt das zweite gefilterte und verstärkte Zwischenfrequenzsignal 439b und setzt dieses in ein zweites digitalisiertes Zwischenfrequenzsignal 446 um. Der Empfänger 400 umfasst ferner eine digitale Verarbeitungseinrichtung 450, die das erste digitalisierte Zwischenfrequenzsignal 444 und zweite digitalisierte Zwischenfrequenzsignal 446 empfängt. Die digitale Verarbeitungseinrichtung 450 stellt ferner ein erstes Inphase-Ausgangssignal 452, das im Wesentlichen einen Informationsinhalt des ersten Nutzfrequenzbands umfasst sowie ein zweites Inphase-Ausgangssignal 454, das im Wesentlichen einen Informationsinhalt des zweiten Nutzfrequenzbandes umfasst, zur Verfügung. Die digitale Verarbeitungseinrichtung 450 stellt weiterhin ein erstes Quadratur-Ausgangssignal 456 bereit, das im Wesentlichen den Informationsinhalt des ersten Nutzfrequenzbandes umfasst, sowie ferner ein zweites Quadratur-Ausgangssignal 458, das im Wesentlichen den Informationsinhalt des zweiten Nutzfrequenzbands umfasst.

Die Mischereinrichtung 420 umfasst im übrigen einen ersten Mischer bzw. Inphase-Mischer 462 sowie einen zweiten Mischer bzw. Quadratur-Mischer 464. Der Inphase-Mischer 462 empfängt das Kombinationssignal 416 sowie das Lokaloszillatorsignal 122b und stellt das erste Zwischenfrequenzsignal 424 an seinem Ausgang zur Verfügung. Der zweite Mischer 464 empfängt das Kombinationssignal 416 und das Lokaloszillatorsignal 122a und stellt an einem Ausgang das zweite Zwischenfrequenzsignal 426 zur Verfügung. Die dem ersten Mischer 462 und dem zweiten Mischer 464 zugeführten Lokaloszillatorsignale 122a, 122b weisen im übrigen eine Phasenverschiebung von idealerweise 90° auf. In der Realität kann die Phasenverschiebung zwischen den Lokaloszillatorsignalen 122a, 122b allerdings in einem Bereich zwischen 70° und 110° variieren. Die Frequenz der Lokaloszillatorsignale 122a, 122b ist im übrigen gleich, und ist im wesentlichen durch die frequenzmäßige Lage der Nutzfrequenzbänder 156, 158 (vgl. Fig. 1) festgelegt. Die Frequenz der Lokaloszillatorsignale 122a, 122b liegt bevorzugt symmetrisch zwischen den Nutzfrequenzbändern 156, 158, wie dies bereits weiter oben beschrieben wurde.

Die Zwischenfrequenz-Filtereinrichtung 430 umfasst bei einem ersten Ausführungsbeispiel ein ersten Bandpassfilter 472 sowie ein zweites Bandpassfilter 474. Der erste Bandpassfilter 472 ist bevorzugt ausgelegt, um einen Zwischenfrequenzbereich um eine Zwischenfrequenz $f_{ZF1}$ herum, auf den das erste Nutzfrequenzband 156 und das zweite Nutzfrequenzband 158 durch die Mischeinrichtung 420 abgebildet werden, passieren zu lassen, und um andere Frequenzbereiche zu unterdrücken bzw. zu bedämpfen. Analog dazu ist das zweite Bandpassfilter 474 bevorzugt ausgelegt, um den Zwischenfrequenzbereich um die Zwischenfrequenz $f_{ZF1}$ herum passieren zu lassen und um andere Frequenzbereiche zu unterdrücken bzw. zu bedämpfen.

Details im Hinblick auf die Wahl der Durchlassfrequenzbereiche der Bandpassfilter 472, 474 werden im Folgenden noch erläutert.

Bei einem weiteren Ausführungsbeispiel umfasst die Filtereinrichtung 430 im Übrigen anstelle des ersten Bandpassfilters 472 ein erstes Tiefpassfilter, sowie anstelle des zweiten Bandpassfilters 474 ein zweites Tiefpassfilter, wie später noch ausführlicher erläutert wird.

Die Verstärker 438a, 438b mit einstellbarer Verstärkung sind im übrigen ausgelegt, um gleiche Steuersignale bzw. ein gemeinsames Steuersignal 478 zur Einstellung der Verstärkung zu empfangen, wodurch die digitale Steuerung der Verstärkung ermöglicht wird. Damit wird sichergestellt, dass eine maximale Symmetrie der Anordnung 400 gewährleistet ist, die einer optimalen Trennung der Informationsinhalte der Nutzfrequenzbänder 156, 158 dient.

Die digitale Verarbeitungseinrichtung 450 umfasst im übrigen einen ersten Kosinus-Abtaster 480 sowie einen ersten Sinus-Abtaster 482. Der erste Kosinus-Abtaster 480 empfängt das erste digitalisierte Zwischenfrequenzsignal 440 als ein zeitdiskretes Signal für eine Mehrzahl von Zeitpunkten mit ganzzahligen aufeinanderfolgenden Zeit-Indizes n. Der Kosinus-Abtaster gewichtet das erste digitalisierte Zwischenfrequenzsignal 444 mit Werten, die in Abhängigkeit von dem Zeitindex n als cos[nn/2] definiert sind. In anderen Worten, der Kosinus-Abtaster 480 gewichtet das erste digitalisierte Zwischenfrequenzsignal mit einer sich wiederholenden Wertefolge [1; 0; -1; 0] für Indizes n=0, n=1, n=2, n=3. Der Sinus-Abtaster 482 gewichtet hingegen die Abtastwerte des ersten digitalisierten Zwischenfrequenzsignal 444 mit Werten, die gemäß -sin [nn/2] definiert sind. Der erste Kosinus-Abtaster 480 liefert somit basierend auf dem ersten digitalisierten Zwischenfrequenzsignal 424 eine Wertefolge 484a, während hingegen der erste Sinus-Abtaster 482 basierend auf dem ersten digitalisierten Zwischenfrequenzsignal 444 eine Wertefolge 484b liefert. In anderen Worten, die erste Wertefolge 484a entsteht aus dem ersten digitalisierten Abtastsignal 444 durch Gewichtung mit einer Wertefolge [1; 0; -1; 0], während hingegen die zweite Wertefolge 484b aus dem ersten digitalisiertem Zwischenfrequenzsignal 444 durch Gewichtung mit einer Wertefolge [0; -1; 0; 1] entsteht. In anderen Worten, die erste Wertefolge 484a entspricht im Wesentlichen einer zeitdiskreten Modulation des ersten digitalisierten Zwischenfrequenzsignals 444 mit einem Kosinussignal der Frequenz $f_{s/4}$ wobei $f_s$ die Abtastfrequenz der ersten Analog/Digital-Umsetzung 440a beschreibt. Die zweite Wertefolge 484b entsteht im Übrigen durch eine zeitdiskrete Modulation des ersten digitalisierten Zwischenfrequenzsignals 444 unter Verwendung eines mit dem Faktor -1 skalierten sinusförmigen Signal der Frequenz $f_{s/4}$.

Die digitale Verarbeitungseinrichtung 450 umfasst ferner einen zweiten Kosinus-Abtaster 486, der das zweite digitalisierte Zwischenfrequenzsignal 446 empfängt und basierend darauf eine Wertefolge 490a erzeugt. Die digitale Verarbeitungseinrichtung 450 umfasst ferner einen zweiten Sinus-Abtaster 488, der das zweite digitalisierte Zwischenfrequenzsignal 446 empfängt und basierend darauf eine vierte Wertefolge 490b erzeugt. Die Funktionsweise des zweiten Kosinus-Abtasters 486 entspricht im übrigen der Funktionsweise des ersten Kosinus-Abtasters 480, und die Funktionsweise des zweiten Sinus-Abtasters 488 entspricht der Funktionsweise des ersten Sinus-Abtasters 482.

Optional können im übrigen die Kosinus-Abtaster 480, 486 durch Modulatoren ersetzt sein, die die jeweiligen Eingangssignale 444, 446 mit Kosinus-Signalen der Frequenz $f_{s/4}$ multiplizieren. Die Sinus-Abtaster 482, 488 können im übrigen durch Modulatoren ersetzt sein, die die entsprechenden Eingangssignale mit Sinus-Signalen der Frequenz $f_{s/4}$ multiplizieren.

Die digitale Verarbeitungseinrichtung 450 umfasst ferner einen ersten Kombinierer bzw. Addierer 492, der ausgelegt ist, um die erste Wertefolge 484a von dem ersten Kosinus-Abtaster 480 und die vierte Wertefolge 490b von dem zweiten Sinus-Abtaster 488 zu empfangen und mit gleichem Vorzeichen additiv zu kombinieren. Der erste Kombinierer 492 liefert somit als sein Ausgangssignal das erste Quadratur-Ausgangssignal 456. Ein zweiter Kombinierer 494 empfängt die von dem ersten Sinus-Abtaster 482 gelieferte zweite Wertefolge 484b sowie die von dem zweiten Kosinus-Abtaster 486 gelieferte dritte Wertefolge 490a und kombiniert die genannten Wertefolgen mit gleichem Vorzeichen additiv. Der zweite Kombinierer 494 liefert als sein Ausgangssignal das zweite Inphase-Ausgangssignal 454.

Ein dritter Kombinierer bzw. Addierer 496 empfängt die zweite Wertefolge 484b von dem ersten Sinus-Abtaster 482 und subtrahiert die Wertefolge 484b von der von dem zweiten Kosinus-Abtaster 486 gelieferten Wertefolge 490a. Der dritte Kombinierer 496 liefert somit als sein Ausgangssignal das erste Inphase-Ausgangssignal 452. Ein vierter Kombinierer 498 empfängt die erste Wertefolge 484a von dem ersten Kosinus-Abtaster 480 und subtrahiert davon die vierte Wertefolge 490b, die von dem zweiten Sinus-Abtaster 488 geliefert wird. Der vierte Kombinierer 498 liefert somit als sein Ausgangssignal das zweite Quadratur-Ausgangssignal 458.

Basierend auf der obigen strukturellen Beschreibung wird im Folgenden die Funktionsweise des Empfängers 400 im Detail beschrieben. Dabei wird zunächst auf die Verarbeitung bei der Erzeugung des ersten digitalisierten Zwischenfrequenzsignals 444 und des zweiten digitalisierten Zwischenfrequenzsignal 446 eingegangen.

Es wird hier zunächst angenommen, dass es sich bei den Filtern 472, 474 um Bandpassfilter handelt. Ferner wird zunächst angenommen, dass durch die Analog/Digital-Umsetzer 440a, 440b eine Unterabtastung erfolgt, und dass durch die Unterabtastung eine Frequenzumsetzung vorgenommen wird.

Es sei im Folgenden angenommen, dass die Mischereinrichtung 420 das erste Nutzfrequenzband 156 und das zweite Nutzfrequenzband 158 durch eine Abwärts-Mischung auf einem Bereich abbildet, der zwischen einer unteren Grenzfrequenz $f_u$ und einer oberen Grenzfrequenz $f_o$ liegt. Zur Veranschaulichung wird hierbei auf die Fig. 1 und insbesondere auf die spektralen Darstellungen 160, 170, 180 verwiesen. Die Zwischenfrequenz $F_{ZF1}$ liegt folglich zwischen $f_u$ und $f_o$. Es wird im übrigen davon ausgegangen, dass die Frequenz $f_u$ größer als die Abtastfrequenz $f_s$ der Analog/Digital-Umsetzer 440a, 440b ist.

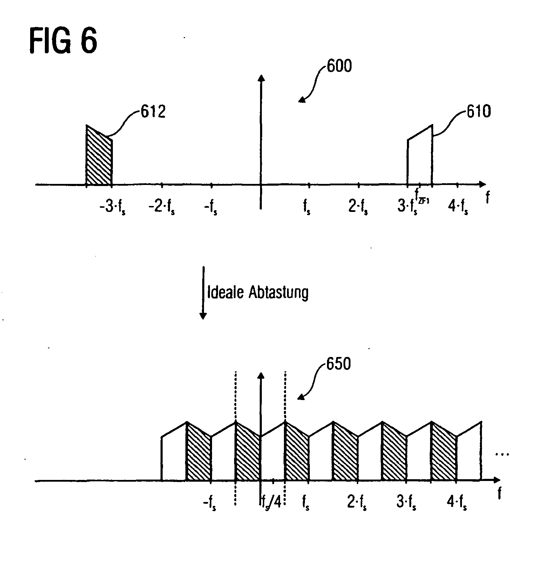

Bei einem bevorzugten Ausführungsbeispiel wird in diesem Fall die Abtastfrequenz $f_s$ so gewählt, dass ein Intervall $[f_u; f_o]$ vollständig in einem Intervall $[N \cdot f_s; (N + \frac{1}{2}) \cdot f_s]$ liegt. Dabei ist N eine ganze Zahl und größer oder gleich 1. Ferner wird davon ausgegangen, dass es sich bei dem ersten Bandpassfilter 472 um ein Filter handelt, das Frequenzen außerhalb des Intervalls $[n \cdot f_s; (N + \frac{1}{2}) \cdot f_s]$ bedämpft bzw. unterdrückt, und das einen Durchlassbereich innerhalb des Intervalls $[N \cdot f_s; (N + \frac{1}{2}) \cdot f_s]$ aufweist, um beispielsweise den Zwischenfrequenzbereich, also das Frequenzintervall $[f_u; f_o]$, passieren zu lassen. Durchlassbereich und Sperrbereich des Bandpassfilters können dabei beispielsweise in der herkömmlichen Weise definiert sein. Beispielsweise wird unter einem Sperrbereich ein Bereich verstanden, in dem eine Dämpfung bzw. Durchlassdämpfung des Bandpassfilters um mindestens 3dB (bevorzugt aber um mindestens 6dB, besser noch um mindestens 10 dB oder 20 dB) größer ist als eine Dämpfung in dem Durchlassbereich. Um dies zu veranschaulichen zeigt eine spektrale Darstellung 600 der Fig. 6 ein gefiltertes Zwischenfrequenzsignal, beispielsweise das erste gefilterte Zwischenfrequenzsignal 434. Hierbei gilt: N=3. In anderen Worten, das in der graphischen Darstellung 600 gezeigte gefilterte Zwischenfrequenzsignal 434 weist lediglich spektrale Anteile in einem Bereich zwischen $3 \cdot f_s$ und $3,5 \cdot f_s$ auf.

Die Zwischenfrequenz $F_{ZF1}$ beträgt in dem gezeigten Fall beispielsweise $3,25 \cdot f_s$, wobei angenommen wird, dass die Zwischenfrequenz $F_{ZF1}$ beispielsweise mit einer Mittenfrequenz die Abbilder der Nutzfrequenzbänder in dem gefilterten ersten Zwischenfrequenzsignal 434 zusammenfällt. Durch eine Abtastung des gefilterten Zwischenfrequenzsignals 434 (bzw. des gefilterten und verstärkten Zwischenfrequenzsignals 439a) durch den ersten Analog/Digital-Umsetzer 440a erfolgt eine Frequenzumsetzung durch eine periodische Fortsetzung des Spektrums. So zeigt eine spektrale Darstellung 650 gemäß der Fig. 6 ein periodisch fortgesetztes Spektrum, das sich nach einer Abtastung des in der spektralen Darstellung 600 gezeigten Spektrums vor der Analog/Digital-Umsetzung ergibt. Es zeigt sich dabei, dass durch die Unterabtastung bei der Analog/Digital-Wandlung durch den ersten Analog/Digital-Wandler 440a der Frequenzbereich zwischen $3 \cdot f_s$ und $3,5 \cdot f_s$ auf den Frequenzbereich zwischen 0 und $\frac{1}{2} \cdot f_s$ abgebildet wird. Die Zwischenfrequenz $F_{ZF1} = 3,25 \, f_s$ wird bei diesem Beispiel somit auf $f_s/4$ abgebildet.

Die bei der Digital/Analog-Umsetzung in dem Analog/Digital-Wandler 440 auftretende Abtastung bzw. Unterabtastung wirkt somit bei geeigneter Wahl der Zwischenfrequenz $F_{ZF1}$ und ferner bei geeigneter Wahl des Durchlass-Frequenzbandes des Bandpass-Filters 472 (und/oder des Bandpassfilters 474) als eine Frequenzumsetzung.

Eine entsprechende Frequenzumsetzung tritt im übrigen auch in dem zweiten Zweig durch den Analog/Digital-Umsetzer 440b auf.

Ferner sei noch darauf hingewiesen, dass ein ähnlicher Effekt auch unter der Voraussetzung auftritt, dass das Frequenzintervall $[f_u; f_o]$ vollständig in dem Intervall $[(N-\frac{1}{2}) \cdot f_s; N \cdot f_s]$ enthalten ist, wobei N wiederum eine ganze Zahl größer oder gleich 1 ist. In diesem Fall ist das Bandpassfilter 472 (und/oder das Bandpassfilter 474) bevorzugt ausgelegt, um Frequenzbereiche außerhalb des Intervalls $[(N-1/2) \cdot f_s; N \cdot f_s]$ zu unterdrücken bzw. zu bedämpfen, sowie das Frequenzintervall $[f_u; f_o]$ passieren zu lassen.

Bei einem alternativen Ausführungsbeispiel erfolgt keine Unterabtastung. Vielmehr werden bei dem alternativen Ausführungsbeispiel anstelle der Bandpassfilter 472, 474 Tiefpassfilter eingesetzt, die bevorzugt eine obere Grenzfrequenz aufweisen, die kleiner oder höchstens gleich $f_s/2$ ist.

Im übrigen sei darauf hingewiesen, dass das oben beschriebene Konzept der Unterabtastung unter Verwendung von Bandpassfiltern 472, 474 und unterabtastenden Analog/Digital-Wandlern 440a, 440b auch in Verbindung mit einer Empfängerarchitektur gemäß der Fig. 2 eingesetzt werden kann. Die Filtereinrichtung 270 umfasst in diesem Fall zwei Bandpassfilter, die den Bandpassfiltern 472, 474 entsprechen, und die Analog/ Digital-Wandlung 280 umfasst Analog/DigitalUmsetzer, die den Analog/Digital-Umsetzern 440a, 440b entsprechen.

In Verbindung mit der Empfängerarchitektur gemäß der Fig. 2 kann im übrigen allerdings auf die digitale Verarbeitungseinrichtung 450 ganz oder teilweise verzichtet werden. Da gemäß der Empfängerarchitektur des Empfängers 200 getrennte Zweige für die beiden Nutzfrequenzbänder verwendet werden, besteht keine Notwendigkeit, in den digitalisierten Zwischenfrequenzsignalen 282, 284, die Nutzfrequenzbänder zu trennen. Daher können in Verbindung mit einer Empfängerarchitektur 200 beispielsweise die Kombinierer 492, 494, 496, 498 optional entfallen.

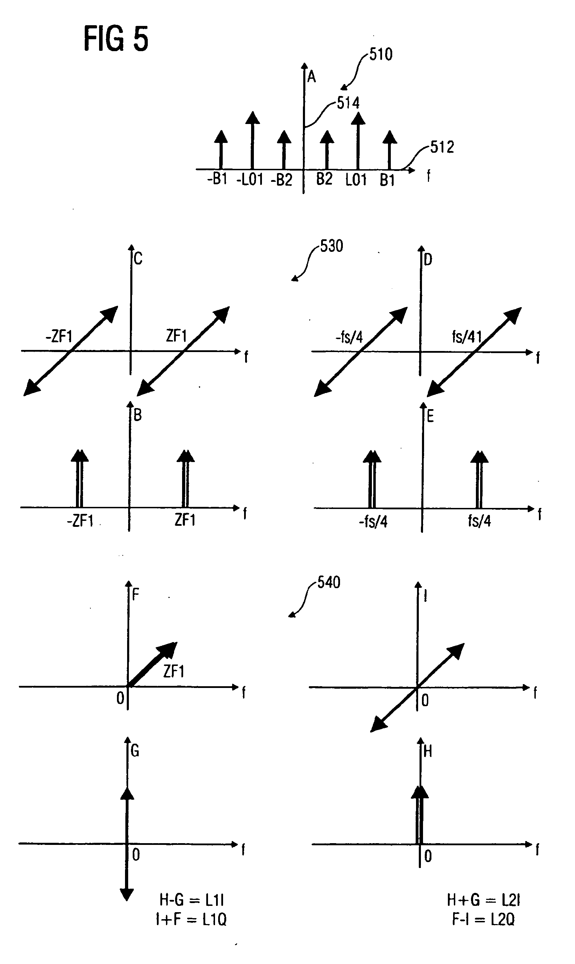

Im Folgenden wird das wesentliche Konzept des Empfängers 400 gemäß der Fig. 4 noch einmal kurz zusammenfassend erläutert. Im Rahmen der folgenden Ausführungen wird im übrigen auf die Fig. 5 Bezug genommen, die einen Frequenzplan des Empfängers 400 beschreibt. In anderen Worten, die Fig. 5 zeigt eine schematische Darstellung eines Frequenzvorgangs innerhalb der modifizierten Weaver-Architektur des Empfängers 400.

Zusammenfassend ist festzuhalten, dass die Fig. 5 eine vereinfachte Frequenzumsetzung innerhalb des hybriden modifizierten Weaver-Mischers zur Spiegelfrequenzunterdrückung zeigt, während hingegen die Fig. 4 die vorgestellte Empfängerarchitektur bzw. die Architektur des vorgestellten breitbandigen Niedrig-Zwischenfrequenz-Empfängers zeigt.

Bezugnehmend auf die Fig. 5 zeigt eine erste spektrale Darstellung 510 das Kombinationssignal 416 (auch mit A bezeichnet). An einer Abszisse 512 ist die Frequenz eingetragen, während eine Ordinate 514 eine spektrale Leistungsdichte beschreibt. B1 und B2 stellen die gewünschten Bänder bzw. Nutzfrequenzbänder da. Ein erster Oszillator LO1 (bzw. eine Frequenz $f_{LO1}$ des ersten Oszillators) liegt in der Mitte beider Bänder (bzw. zwischen den beiden Bändern).

Entsprechend sind die Bänder bzw. Nutzfrequenzbänder B1, B2 (zumindest teilweise) Spiegelband voneinander. Folglich kann die Frequenzumsetzung für beide Bänder B1, B2 durch einen einzigen Frequenzsynthesizer durchgeführt werden. Die Doppelbandantenne, die das Empfangssignal 412 liefert, das Hochfrequenzfilter bzw. Vorauswahlfilter 410 und der rauscharme Verstärker 414 (LNA) unterdrücken Störer neben den Bändern, bewirken aber keine Spiegelbandunterdrückung. Eine Bandpassfilterung (durch die Bandpassfilter 472, 474) nach der ersten komplexen Frequenzumsetzung (durch die Mischereinrichtung bzw. den komplexen Mischer 420) ist passiv. Nach der variablen Verstärkung (durch die Verstärker 438a, 438b mit einstellbarer Verstärkung, die auch mit VGA bezeichnet sind) leistet der Analog/Digital-Umsetzer (beispielsweise bestehend aus dem ersten Analog/DigitalUmsetzer 440a und dem zweiten Analog/Digital-Umsetzer 440b) zwei Funktionen: Eine Digitalisierung und eine Frequenzumsetzung von der ersten Zwischenfrequenz $ZF_1$ (mit einer Frequenz $f_{ZF1}$) auf eine zweite Zwischenfrequenz $ZF_2 = f_{s/4}$. Dabei stellt $f_s$ die Abtastfrequenz des Analog/Digital-Umsetzers (bzw. der Analog/Digital-Umsetzer 440a, 440b) dar. Um eine Frequenzumsetzung derartig durchzuführen, wird es bevorzugt, dass die Abtastrate des Analog/Digital-Umsetzers (bzw. der Analog/Digital-Umsetzer 440a, 440b) und **die erste Zwischenfrequenz ZF1** folgender Gleichung genügen:

$$N \times f_s \pm f_s/4 = \mathbf{ZF_1}$$

Dabei ist N ein Unterabtastfaktor. Anders formuliert, es gilt:

$$N \times f_s + f_s/4 = \mathbf{ZF_1}$$

oder

$$N \times f_s - f_s/4 = \mathbf{ZF_1}$$

Wenn N = 0 ist, erfolgt keine Frequenzumsetzung. In diesem Fall dient ein Tiefpassfilter (der an die Stelle der Bandpassfilter 472, 474 tritt) als ein Anti-Alias-Filter und zweiter Spielbandunterdrücker. Für N ≥ 1 wird bevorzugt ein Bandpassfilter für beide Funktionen (also als Anti-Alias-Filter und als zweiter Spiegelbandunterdrücker) verwendet.

Die Unterdrückung des zweiten Spiegelbands durch das Anti-Alias-Filter (also bevorzugt durch die Bandpassfilter 472, 474 oder durch Tiefpassfilter, die für N = 0 an die Stelle der Bandpassfilter 472, 474 treten) ist eine Besonderheit der erfindungsgemäßen Topologie, weil die zweite Frequenzumsetzung durch Unterabtastung (bevorzugt durch die Analog/Digital-Umsetzer 440a, 440b) nach der Filterung (durch die Zwischenfrequenzfiltereinrichtung 430) stattfindet.

Eine Entscheidung, welche Filterungsoption (Verwendung von Bandpass-Filtern 472, 474 in der Zwischenfrequenz-Filtereinrichtung 430, oder Verwendung von Tiefpassfiltern anstelle der Bandpassfilter 472, 474) verwendet wird, hängt von sich bedingenden Faktoren ab. So ist bei Verwendung eines Tiefpassfilters bzw. von zwei Tiefpassfiltern die Implementierung einfacher. Eine Gruppenlaufzeitänderung ist ferner bei Verwendung eines Tiefpassfilters kleiner als bei einem Bandpassfilter. Andererseits ist in diesem Fall die Taktfrequenz des Analog/Digital-Umsetzers maximal bzw. größer als bei Verwendung einer Unterabtastung. Bei Verwendung eines Tiefpassfilters ist die Taktfrequenz (bzw. die Abtastfrequenz der Analog/Digital-Umsetzer) bevorzugt mindestens zweimal höher als eine größte Bandbreite zwischen den Bändern B1, B2. Die Entscheidung (ob also ein Tiefpassfilter oder ein Bandpassfilter verwendet werden soll, und ob eine Unterabtastung erfolgen soll) hängt daher von den gewünschten (zu empfangenden) Bändern und von deren Frequenzplan ab.

Eine Unterabtastung, versetzt um $f_s/4$, ermöglicht eine einfache Frequenzumsetzung in ein Basisband und eine perfekte Erzeugung von realen und imaginären Anteilen für beide Bänder. So zeigt beispielsweise die Fig. 5 in der spektralen Darstellung 530 die Signale D und E bei der zweiten Zwischenfrequenz ZF2 bzw. $f_{ZF2}$, die gleich $f_s/4$ ist. Das Signal D entspricht dabei dem ersten digitalisierten Zwischenfrequenzsignal 444, und das Signal E entspricht dabei dem zweiten digitalisierten Zwischenfrequenzsignal 446. Eine weitere spektrale Darstellung 540 gemäß der Fig. 5 zeigt im übrigen die Signale F, G, H und I in dem Basisband. Das Signal F entspricht der ersten Wertefolge 484a, das Signal G entspricht der zweiten Wertefolge 484b, das Signal H entspricht der Wertefolge 490a, und das Signal I entspricht der Wertefolge 490b.

Für das erste Inphase-Ausgangssignal L1I (auch mit 452 bezeichnet), das erste Quadratur-Ausgangssignal L1Q (auch mit 456 bezeichnet, das zweite Inphase-Ausgangssignal L2I (mit 454 bezeichnet) und das zweite Quadratur-Ausgangssignal L2Q (auch mit 458 bezeichnet) gelten die folgenden Zusammenhänge.

$$L1I = H - G;$$

$$L1Q = I + F;$$

$$L2I = H + G;$$

$$L2Q = F - I.$$

Dabei ist F das Ausgangssignal 484a des ersten Kosinus-Abtasters 480, G das Ausgangssignal 484b des ersten Sinus-Abtasters 482, H das Ausgangssignal 490a des ersten Kosinus-Abtasters 486 und I das Ausgangssignal 490b des ersten Sinus-Abtasters 488.

Der erfindungsgemäße Empfänger trennt die Bänder bzw. Nutzfrequenzbänder B1 und B2 im digitalen. Durch diese innovative Stufe (bzw. durch die innovative digitale Verarbeitungseinrichtung 450 in Kombination mit der Zwischenfrequenz-Filtereinrichtung 430 und den Analog/Digital-Umsetzern 440a, 440b) sind drei Funktionen auf einmal mit sehr geringem Aufwand realisiert: Eine Frequenzumsetzung ins Basisband, eine komplexe Signalerzeugung und eine Trennung von gleichzeitig empfangenen Signalen.

Die beschriebene zusätzliche Verarbeitung für eine tatsächliche Trennung beider Bänder (die beispielsweise durch die Kombinierer 492, 494, 496, 498 erfolgt) ist einfach und benötigt im Gegensatz zu einer kompletten analogen Spiegelfrequenzunterdrückung eine minimale bzw. eine geringere Leistung (beispielsweise bei einer Implementierung der digitalen Signalverarbeitung 450 in einer CMOS-Technologie). Zudem ist eine digitale Wortbreite des Analog/Digital-Umsetzers (bzw. der Analog/Digital-Umsetzer 440a, 440b) sehr gering (bevorzugt zwischen 2 und 4 Bits), was eine Komplexität der digitalen Signalverarbeitung 450 gering hält. Ein tatsächlicher Grad einer Unterdrückung zwischen den Bändern B1 und B2 ist durch Amplituden- und Phasenungenauigkeiten der analogen Pfade (also beispielsweise der Mischereinrichtung 420, der Puffer 427a, 427b, der Filter 472, 474 und der Verstärker 438a, 438b) bestimmt. Aufgrund der großen Anzahl an analogen Komponenten von der komplexen Mischung abwärts (zum Beispiel der Komponenten 462, 464, 427a, 427b, 472, 474, 438a, 438b) ist eine Unterdrückung (bzw. eine Trennung der Bänder bzw. Nutzfrequenzbänder B1 und B2) begrenzt. Die perfekte Quadraturerzeugung im digitalen (basierend auf den Kosinus-Abtastern 480, 486 und den Sinus-Abtastern 482, 488) kompensiert dennoch eine (vergleichsweise große) Ungenauigkeit im analogen Teil. Im übrigen ist ein Bedarf an Unterdrückung (zwischen den Nutzfrequenzbändern B1 und B2) relativ klein, da das jeweilige Spiegelband als thermisches Rauschen betrachtet werden kann.

Es sei im übrigen darauf hingewiesen, dass eine alternative Topologie zu dem hier vorgestellten Empfänger aus zwei separaten Antennen, Vorwahlfiltern und Verstärkern mit geringem Rauschen (low noise amplifier, LNA) besteht. Solange beide Pfade vor einer komplexen Mischung nicht miteinander kurzgeschlossen sind, liefern die genannten drei Bausteine auch eine Spiegelsignalunterdrückung. In diesem Fall braucht man keine Bandtrennung (im Rahmen der digitalen Signalverarbeitung). Entsprechend kann man auf die vier Addierer 492, 494, 496, 498 nach dem Knoten {F, G, H, I} verzichten. Die alternative genannte Topologie ist allerdings im Wesentlichen dann sinnvoll, wenn es nicht möglich ist, Doppelbandantennen, Vorwahlfilter und Verstärker mit geringem Rauschen (LNAs) zu verwenden, um dadurch die zwei Pfade nicht durch einen einzigen ersetzen zu können.

Im Folgenden werden kurz die von der vorliegenden Erfindung gelösten Aufgaben beschrieben. Mit der hier vorgestellten Erfindung sind zukünftige sehr breitbandige mobile Empfänger für hochgenaue Ortsbestimmungssysteme möglich, die eine minimale Anzahl an analogen Komponenten benötigen. Sehr kompakte und preiswerte Empfänger sind ein mögliches Ergebnis.

Um eine Dual-Band-Architektur und Architekturen für den Empfang von sehr großer Bandbreite zu vereinigen, müssen zwei Spiegelfrequenzen breitbandig unterdrückt werden. Der vorgestellte Empfänger platziert einen einzigen ersten Oszillator (LO1) symmetrisch zwischen den beiden Bändern (bzw. Nutzfrequenzbändern B1, B2, 156, 158). Dadurch werden die gleichzeitig empfangenen Bänder (B1, B2; 156, 158) Spiegelband voneinander. Aufgrund einer Signalstruktur mit verteiltem Spektrum (auch als Spread-Spektrum-Signalstruktur bezeichnet) können die den Nutzbändern überlagerten Spiegelbänder als Rauschen gewertet werden, was den Bedarf für eine Spiegelbandunterdrückung wesentlich erleichtert.

Die Erfindungsgemäße Empfängerarchitektur trennt gleichzeitig empfangene Bänder in der digitalen Verarbeitungsebene (beispielsweise in der digitalen Signalverarbeitungseinrichtung 450). Durch dieses hybride Verfahren ist eine Anzahl von analogen Komponenten minimal.

Im Folgenden wird auf Verbesserungen und Vorteile gegenüber dem Stand der Technik eingegangen, die die vorliegende Erfindung liefert. Bei der erfindungsgemäßen Empfängertopologie ist eine Anzahl an analogen Komponenten minimal, da eine Trennung von beiden empfangenen Bändern (also beispielsweise des ersten Nutzfrequenzbands B1, 156 und des zweiten Nutzfrequenzbands B2, 158) im digitalen Bereich (bzw. in der digitalen Signalverarbeitungseinrichtung 450) durchgeführt wird. Dies ermöglicht einen kompakten und Stromsparenden Empfänger. Die digitale Signalverarbeitungseinrichtung 450 kann beispielsweise mit stromsparender CMOS-Technologie realisiert werden. Ferner eignet sich der erfindungsgemäße Empfänger bzw. die erfindungsgemäße Empfängertopologie besonders gut für einen Empfänger basierend auf diskreten Komponenten.

Ferner erfüllt das Tiefpassfilter bzw. das Bandpassfilter (472, 474) einen doppelten Zweck: das Tiefpassfilter bzw. Bandpassfilter dient als Anti-Aliasing-Filter und als zweiter Spiegelbandunterdrücker. Diese Besonderheit des erfindungsgemäßen Empfängers resultiert aus der doppelten Funktion des Analog/Digital-Umsetzers (440a bzw. 440b): Quantisierer und zweiter Frequenzumsetzer durch Unterabtastung.

Augrund der Tatsache, dass die zweite Frequenzumsetzung nach der Kanalauswahl (durch die Filter 472, 474) stattfindet, erfüllt die Filterung auch die Funktion als Spiegelbandunterdrücker. Dies bedeutet einen großen Vorteil, da kein analoger Spiegelbandunterdrücker nötig ist, um diese Funktion zu erfüllen. Im Gegensatz zu heutigen Dualempfängern spart die erfindungsgemäße Topologie zwei Spiegelbandunterdrücker dank der hybriden Trennung von empfangenen Bändern und der Unterdrückungsfunktion der Kanalauswahlfilter (also beispielsweise der Filter 472, 474).

Eine innovative digitale Signalkonditionierung (beispielsweise durch die digitale Signalverarbeitung 450) erfüllt drei Funktionen: Frequenzumsetzung in ein Basisband, InPhase (I)-Zerlegung und Quadratur (Q)-Zerlegung für beide Bänder (also beispielsweise für das erste Nutzfrequenzband B1, 156 und das zweite Nutzfrequenzband B2, 158) und Trennung von beiden Bändern. Diese Funktionen können durch die besondere Frequenzplanung ($ZF_2 = f_s/4$ durch Unterabtastung) und durch geringe Wortbreiten äußerst einfach und leistungssparend realisiert werden. Außerdem lässt sich die hier vorgestellte Topologie einfach durch Leistungsverwaltungsstrategien bzw. Power-Management-Strategien in einen Einband-Empfänger verwandeln. In diesem Fall ist nur eine Hälfte des Empfängers aktiv. So kann zwischen einem Sparmodus mit weniger Genauigkeit und einem optimierten Dualmodus ausgewählt werden, ohne dass diese Möglichkeit die ursprüngliche Haardwarekomplexität erhöht.

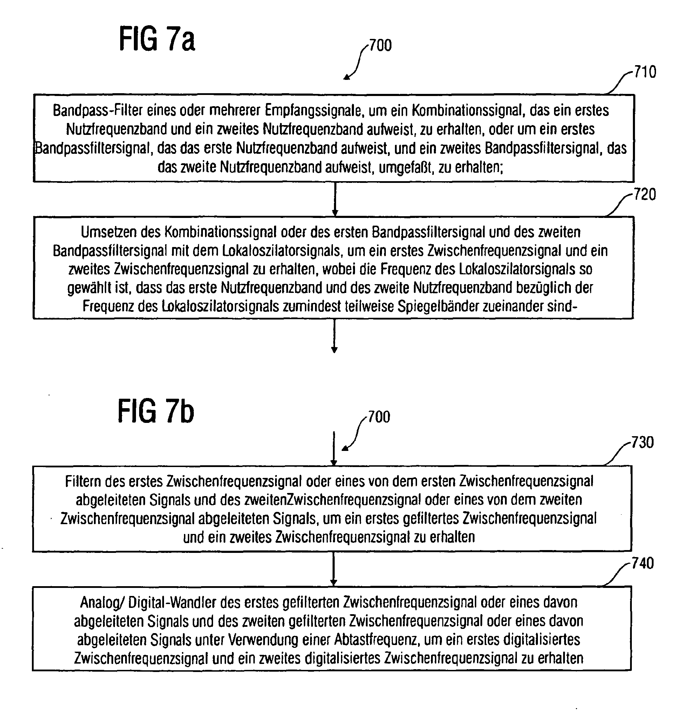

Die vorliegende Erfindung schafft im übrigen ein Verfahren zum Empfangen eines ersten Nutzfrequenzbandes und eines zweiten Nutzfrequenzbandes. Die Figuren 7a und 7b zeigen ein Flussdiagramm des erfindungsgemäßen Verfahrens. Das Verfahren gemäß den Figuren 7a und 7b ist in seiner Gesamtheit mit 700 bezeichnet. Das Verfahren umfasst in einem ersten Schritt 710 ein Bandpass-Filtern eines oder mehrerer Empfangssignale, und ein Kombinationssignal, das ein erstes Nutzfrequenzband und ein zweites Nutzfrequenzband aufweist, zu erhalten, oder um ein erstes Bandpassfiltersignal, das das erste Nutzfrequenzsignal aufweist, und ein zweites Bandpassfiltersignal, das das zweite Nutzfrequenzband aufweist, zu erhalten. Das Verfahren 700 umfasst in einem zweiten Schritt 720 ein Umsetzen des Kombinationssignals oder des ersten Bandpassfiltersignals und des zweiten Bandpassfiltersignals durch Mischen mit dem Lokaloszillatorsignal, um ein erstes Zwischenfrequenzsignal und ein zweites Zwischenfrequenzsignal zu erhalten. Die Frequenz des Lokaloszillatorsignals ist so gewählt, dass das erste Nutzfrequenzband und das zweite Nutzfrequenzband bezüglich der Frequenz des Lokaloszillatorsignals zumindest teilweise Spiegelbänder zueinander sind. Das Verfahren 700 umfasst ferner in einem dritten Schritt 730 ein Filtern des ersten Zwischenfrequenzsignals oder eines von den ersten Zwischenfrequenzsignal abgeleiteten Signals, und des zweiten Zwischenfrequenzsignals oder eines von den zweiten Zwischenfrequenzsignal abgeleiteten Signals, um ein erstes gefiltertes Zwischenfrequenzsignal und ein zweites gefiltertes Zwischenfrequenzsignal zu erhalten. Das Verfahren 700 umfasst ferner in einem vierten Schritt 740 ein Analog/Digital-Wandeln des ersten gefilterten Zwischenfrequenzsignals oder eines davon abgeleiteten Signal, und des zweiten gefilterten Zwischenfrequenzsignals oder eines davon abgeleiteten Signals unter Verwendung einer einzigen Abtastfrequenz für das Analog/Digital-Wandeln des ersten Zwischenfrequenzsignals und des zweiten Zwischenfrequenzsignals. Dadurch wird ein erstes digitalisiertes Zwischenfrequenzsignal und ein zweites digitalisiertes Zwischenfrequenzsignal erhalten.

Das Verfahren 700 kann im Übrigen um alle diejenigen Schritte und Merkmale erweitert werden, die hinsichtlich der oben erläuterten erfindungsgemäßen Vorrichtungen beschrieben wurden.

Es sei im übrigen darauf hingewiesen, dass eine neue und effiziente Topologie, um einen Doppelbandempfänger zu implementieren, auf einer gemeinsamen ersten Zwischenfrequenz (ZF) basiert. Einerseits verursacht diese Auswahl, dass beide Bänder Spiegelband voneinander sind. Andererseits liefert eine Hochfrequenz-Bandselektion keine Spiegelbandunterdrückung, weil beide empfangenen Bänder nach einer entsprechenden Filterung und rauscharmen Verstärkung miteinander addiert werden. Diese beiden Faktoren ergeben den Bedarf für eine Empfängerarchitektur, die Spiegelbandunterdrückung leistet. Die Unterdrückung kann vergleichsweise gering gehalten werden, weil das Spiegelband als verteiltes Spektrum bzw. Spread-Spectrum als thermisches Rauschen betrachtet werden kann. Dies erleichtert die Integrierbarkeit der erfindungsgemäßen Architektur. Um eine Bandbreite eines Verstärkers mit einstellbarer Verstärkung und eine Taktfrequenz eines Analog/Digital-Umsetzers zu optimieren, ist es gewünscht, die Bänder bei einer Zwischenfrequenz, die ungefähr der Hälfte der Bandbreite der Bänder entspricht, zu setzen. Die erste Zwischenfrequenz ist somit durch einen Frequenzabstand zwischen den Bändern festgelegt, egal wie breit die Bänder sind. Die sich so ergebende erste Zwischenfrequenz ist in der Regel deutlich größer als die Hälfte der Bandbreite (der Nutzfrequenzbänder). Eine zusätzliche Frequenzumsetzung wird daher bevorzugt, um eine zweite Zwischenfrequenz zu erhalten. Die zusätzliche Frequenzumsetzung bringt den Nachteil mit sich, dass man auch das wiederum entstehende Spiegelband unterdrücken muss.

Diese Unterdrückung kann beispielsweise durch einen komplexen aktiven Bandpassfilter realisiert werden. Die genannte Lösung ist dabei limitiert bezüglich der Bandbreite, weil die Stromaufnahme einer derart komplexen Filterung mit der Frequenz stark zunimmt. Aus diesem Grund kommen bevorzugt kleine bis mittlere Bandbreiten, ca. 2 bis 5 MHz für mobile Empfänger in Frage.

Eine Weiterentwicklung des genannten Empfängerkonzepts besteht in einem erfindungsgemäßen Einsatz der Zwischenfrequenzfiltereinrichtung 430, durch die eine analoge Unterdrückung des zweiten Spiegelkanals erzielt wird, sowie ferner in der Verwendung der digitalen Verarbeitungseinrichtung 450, durch die eine hybride Trennung von zwei Trägern erfolgen kann.

Die vorliegende Erfindung stellt somit eine Empfängerarchitektur zur maximalen Reduzierung an benötigten Bausteinen von dualen hochgenauen breitbandigen Empfängern dar. Die Empfängerarchitektur kann für einen gleichzeitigen Empfang von zwei Bändern eines Navigationssystems (z.B. von L1 und L2c von GPS, oder von L5 und L6 von Galileo), aber auch für einen gemeinsamen Empfang von Bändern aus verschiedenen Systemen Anwendung finden.

Der erfindungsgemäße vorgestellte Empfänger mit niedriger ZF (Low-IF-Empfänger) trennt beide empfangenen Bänder durch einen innovativen hybriden Analog/Digital-Mischer mit Spiegelfrequenzunterdrückung. Ein digitaler Teil trennt nicht nur beide empfangenen Bänder, sondern mischt auch ins Basisband und extrahiert einen realen und eine imaginären Anteil beider Signale. Eine zweite Frequenzumsetzung ist durch Unterabtastung eines Analog/Digital-Umsetzers gegeben. Das Bandpassfilter dient als Anti-Alias-Filter und zweiter Spiegelfrequenzunterdrücker. Die genannte Topologie besteht aus einer minimalen Anzahl an analogen Bauteilen und einem einzigen Frequenzsynthesizer, was ein kompaktes und leistungsarmes Design ermöglicht.

Die vorliegende Erfindung ermöglicht somit den Aufbau hochgenauer Dualempfänger für Ortsbestimmungssysteme. So können beispielsweise basierend auf der vorliegenden Erfindung ein GPS-Dualempfänger, ein Galileo-Dual-Empfänger, ein Glonass-Dualempfänger, oder ein GNSS-Dualempfänger implementiert werden.

Besondere Vorteile liegen in einer minimalen Anzahl an analogen Komponenten, was einen kompakten und stromsparenden Empfänger ermöglicht. Das erfindungsgemäße Konzept ist im übrigen geeignet, um einen Empfänger basierend auf diskreten Komponenten zu realisieren. Eine Leistungsverwaltung bzw. ein Powermanagement ermöglicht es, einen Einband-Empfang oder einen Dualband-Empfang auszuwählen.

Im Folgenden werden einige Ausführungsbeispiele gemäß der Erfindung kurz zusammengefasst.

Ein Ausführungsbeispiel gemäß der Erfindung umfasst einen Empfänger 100; 200; 400 zum Empfangen eines ersten Nutzfrequenzbandes 156; 241; B1 und eines zweiten Nutzfrequenzbandes 158; 243; B2, wobei die Nutzfrequenzbänder voneinander beabstandet sind, mit folgenden Merkmalen:

- einer Bandpassfiltereinrichtung 110; 220; 410 zur Filterung eines oder mehrerer Empfangssignale (112; 210, 212; 412), wobei die Bandpassfiltereinrichtung ausgebildet ist, um ein Kombinationssignal 114; 416, das das erste Nutzfrequenzband und das zweite Nutzfrequenzband aufweist, zu liefern;

- einer Mischereinrichtung 120; 250; 420 zum Umsetzen des Kombinationssignals mit einem Lokaloszillatorsignal 122; 252; 122a, 122b, dessen Frequenz ($f_{LO1}$; LO1) so gewählt ist, dass das erste Nutzfrequenzband und das zweite Nutzfrequenzband bezüglich der Frequenz des Lokaloszillatorsignals zumindest teilweise Spiegelbänder zueinander sind, um ein erstes Zwischenfrequenzsignal 124; 260; 424 und ein zweites Zwischenfrequenzsignal 126; 262; 426 zu erhalten;

- einer Zwischenfrequenzfiltereinrichtung 130; 270; 430 zum Filtern des ersten Zwischenfrequenzsignals und des zweiten Zwischenfrequenzsignals, um ein erstes gefiltertes Zwischenfrequenzsignal 134; 260; 434 und ein zweites gefiltertes Zwischenfrequenzsignal 136; 262; 436 zu erhalten; und

- einer Analog/Digital-Wandlereinrichtung 140; 280; 440a, 440b zum Analog/Digital-Wandeln des ersten gefilterten Zwischenfrequenzsignals und des zweiten gefilterten Zwischenfrequenzsignals unter Verwendung einer einzigen Abtastfrequenz ($f_s$), um ein erstes digitalisiertes Zwischenfrequenzsignal 144; 282; 444 und ein zweites digitalisiertes Zwischenfrequenzsignal 146; 284; 446 zu erhalten,

wobei die Mischereinrichtung ausgelegt ist, um das Kombinationssignal mit dem Lokaloszillatorsignal 122; 122a, 122b zu mischen, um als das erste Zwischenfrequenzsignal 124; 424 ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und um als das zweite Zwischenfrequenzsignal 126; 426 ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen; und wobei der Empfänger ferner eine Trennungseinrichtung 450 umfasst, die folgende Merkmale aufweist:

- eine Inphase/Quadratur-Zerlegungseinrichtung 480, 482, 486, 48), die ausgelegt ist, um basierend auf dem ersten digitalisierten Zwischenfrequenzsignal 444 einen zugehörigen Inphase-Anteil 484a und einen zugehörigen Quadratur-Anteil (484b) zu bestimmen, und um basierend auf dem zweiten digitalisierten Zwischenfrequenzsignal 446 einen zugehörigen Inphase-Anteil 490a und einen zugehörigen Quadratur-Anteil 490b zu bestimmen;

- einen ersten Kombinierer 492, der ausgelegt ist, um den Inphase-Anteil 484a des ersten digitalisierten Zwischenfrequenzsignals 444 mit dem Quadratur-Anteil 490b des zweiten digitalisierten Zwischenfrequenzsignals 446 mit gleichen Vorzeichen zu kombinieren, um ein Quadratur-Ausgangssignal zu erhalten, das im Wesentlichen den Informationsinhalt des ersten Nutzfrequenzbandes 156; B1 umfasst;

- einen zweiten Kombinierer 494, der ausgelegt ist, um den Quadratur-Anteil 484b des ersten digitalisierten Zwischenfrequenzsignals 444 mit dem Inphase-Anteil 490a des zweiten digitalisierten Zwischenfrequenzsignals 446 mit gleichen Vorzeichen zu kombinieren, um ein Inphase-Ausgangssignal 454 zu erhalten, das im Wesentlichen den Informationsinhalt des zweiten Nutzfrequenzbandes 158; B2 umfasst;

- einen dritten Kombinierer 496, der ausgelegt ist, um den Quadratur-Anteil 484b des ersten digitalisierten Zwischenfrequenzsignals 444 mit dem Inphase-Anteil 490a des zweiten digitalisierten Zwischenfrequenzsignals 446 mit entgegengesetzten Vorzeichen zu kombinieren, um ein Inphase-Ausgangssignal 452 zu erhalten, das im Wesentlichen den Informationsinhalt des ersten Nutzfrequenzbandes 156; B1 umfasst; und

- einen vierten Kombinierer 498, der ausgelegt ist, um den Inphase-Anteil 484a des ersten digitalisierten Zwischenfrequenzsignals 444 mit dem Quadratur-Anteil 490b des zweiten digitalisierten Zwischenfrequenzsignals 446 mit entgegengesetzten Vorzeichen zu kombinieren, um ein Quadratur-Ausgangssignal 458 zu erhalten, das im Wesentlichen den Informationsinhalt des zweiten Nutzfrequenzbandes 158; B2 umfasst;

wobei der Empfänger so ausgelegt ist, dass durch die Analog/Digital-Wandlereinrichtung 140; 280; 440a, 440b eine Unterabtastung erfolgt, und dass durch die Unterabtastung eine Frequenzumsetzung vorgenommen wird.

Bei einem Empfänger gemäß einem bevorzugten Ausführungsbeispiel, ist die Inphase/Quadratur-Zerlegungseinrichtung 480, 482, 486, 488 ausgelegt,

- um den Inphase-Anteil 484a des ersten digitalisierten Zwischenfrequenzsignals 444 in dem Basisband zu erhalten,

- um den Quadratur-Anteil 484b des ersten digitalisierten Zwischenfrequenzsignals 444 in dem Basisband zu erhalten,

- um den Inphase-Anteil 490a des zweiten digitalisierten Zwischenfrequenzsignals 446 in dem Basisband zu erhalten, und

- um den Quadratur-Anteil 490b des zweiten digitalisierten Zwischenfrequenzsignals 446 in dem Basisband zu erhalten.

Bei einem Empfänger 100; 200; 400 gemäß einem bevorzugten Ausführungsbeispiel, ist die Mischereinrichtung ausgelegt, um das Kombinationssignal mit dem Lokaloszillatorsignal 122; 122a, 122b zu mischen, um als das erste Zwischenfrequenzsignal 124; 424 ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und um als das zweite Zwischenfrequenzsignal 126; 426 ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen; wobei der Empfänger ferner eine Trennungseinrichtung 450 umfasst, die ausgelegt ist, um basierend auf dem ersten digitalisierten Zwischenfrequenzsignal 144; 444 und dem zweiten digitalisierten Zwischenfrequenzsignal 146; 446 ein erstes Ausgangssignal 452 zu erhalten, das im Wesentlichen einen Informationsinhalt des ersten Nutzfrequenzbandes umfasst, und in dem ein Informationsinhalt des zweiten Nutzfrequenzbandes gegenüber dem Informationsinhalt des ersten Nutzfrequenzbandes bedämpft oder unterdrückt ist, und um ein zweites Ausgangssignal 454 zu erhalten, das im Wesentlichen einen Informationsinhalt des zweiten Nutzfrequenzbandes umfasst, und in dem ein Informationsinhalt des ersten Nutzfrequenzbandes gegenüber dem Informationsinhalt des zweiten Nutzfrequenzbandes bedämpft oder unterdrückt ist; wobei die Analog/Digital-Wandlereinrichtung 140; 280; 440a, 440b ausgelegt ist, um das erste gefilterte Zwischenfrequenzsignal 134; 272; 434 oder ein davon abgeleitetes Signal 439a durch eine Unterabtastung bezüglich einer Frequenz umzusetzen, und um das zweite gefilterte Zwischenfrequenzsignal 136; 274; 436 oder ein davon abgeleitetes Signal 439b bezüglich einer Frequenz umzusetzen, wobei die Zwischenfrequenz-Filtereinrichtung 130; 270; 430 ausgelegt ist, um als ein Anti-Alias-Filter für die Analog/Digital-Wandlung zu wirken.

Gemäß einem Ausführungsbeispiel handelt es sich bei dem Empfänger 100; 200; 400 um einen Empfänger, bei dem die Trennungseinrichtung 450 eine Inphase/Quadratur-Zerlegungseinrichtung 480, 482, 486, 488 umfasst, die ausgelegt ist, um basierend auf dem ersten digitalisierten Zwischenfrequenzsignal 444 einen zugehörigen Inphase-Anteil 484a und einen zugehörigen Quadratur-Anteil 484b zu bestimmen, und um basierend auf dem zweiten digitalisierten Zwischenfrequenzsignal 446 einen zugehörigen Inphase-Anteil 490a und einen zugehörigen Quadratur-Anteil 490b zu bestimmen; und bei dem die Trennungseinrichtung ferner eine Kombinationseinrichtung 492, 494, 496, 498 umfasst, die ausgelegt ist, um durch eine erste Kombination des Inphase-Anteils 484a oder des Quadratur-Anteils 484b des ersten digitalisierten Zwischenfrequenzsignals 444 mit dem Inphase-Anteil 490a oder dem Quadratur-Anteil 490b des zweiten digitalisierten Zwischenfrequenzsignals 446 das erste Ausgangssignal zu erhalten, und um durch eine zweite Kombination des Inphase-Anteils oder des Quadratur-Anteils des ersten digitalisierten Zwischenfrequenzsignals mit dem Inphase-Anteil oder dem Quadratur-Anteil des zweiten digitalisierten Zwischenfrequenzsignals das zweite Ausgangssignal zu erhalten.

Bei einem Empfänger 100; 200; 400 gemäß einem bevorzugten Ausführungsbeispiel ist die Frequenz ($f_{LO1}$; LO1) des Lokaloszillatorsignals 122; 252; 122a, 122b gleich einem Mittelwert einer ersten Trägerfrequenz ($f_1$) in dem ersten Nutzfrequenzband 156; 241; B1 und einer zweiten Trägerfrequenz ($f_2$) in dem zweiten Nutzfrequenzband 158; 243; B2.

Bei einem Empfänger 100; 400 gemäß einem bevorzugten Ausführungsbeispiel, ist die Bandpassfiltereinrichtung 110; 410 ausgelegt, um ein Empfangssignal 112; 412 zu empfangen, um das erste Nutzfrequenzband 156; B1 und das zweite Nutzfrequenzband 158; B2 weniger stark zu bedämpfen als ein zwischen dem ersten Nutzfrequenzband und dem zweiten Nutzfrequenzband liegendes Frequenzband, und um ein Kombinationssignal 114; 416 bereitzustellen, in dem ein Informationsinhalt des ersten Nutzfrequenzbandes und ein Informationsinhalt des zweiten Nutzfrequenzbandes enthalten sind; wobei die Mischereinrichtung ausgelegt ist, um das Kombinationssignal mit dem Lokaloszillatorsignal 122; 122a, 122b zu mischen, um als das erste Zwischenfrequenzsignal 124; 424 ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und um als das zweite Zwischenfrequenzsignal 126; 426 ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen; wobei der Empfänger ferner eine Trennungseinrichtung 450 umfasst, die ausgelegt ist, um basierend auf dem ersten digitalisierten Zwischenfrequenzsignal 144; 444 und dem zweiten digitalisierten Zwischenfrequenzsignal 146; 446 ein erstes Ausgangssignal 452 zu erhalten, das im Wesentlichen einen Informationsinhalt des ersten Nutzfrequenzbandes umfasst, und in dem ein Informationsinhalt des zweiten Nutzfrequenzbandes gegenüber dem Informationsinhalt des ersten Nutzfrequenzbandes bedämpft oder unterdrückt ist, und um ein zweites Ausgangssignal 454 zu erhalten, das im Wesentlichen einen Informationsinhalt des zweiten Nutzfrequenzbandes umfasst, und in dem ein Informationsinhalt des ersten Nutzfrequenzbandes gegenüber dem Informationsinhalt des zweiten Nutzfrequenzbandes bedämpft oder unterdrückt ist.

Bei einem Empfänger 400 gemäß einem bevorzugten Ausführungsbeispiel, umfasst die erste Mischereinrichtung 420 einen Inphase-Mischer 462, der ausgelegt ist, um das Inphase-Zwischenfrequenzsignal 424 basierend auf dem Kombinationssignal 416 zu erzeugen, und einen Quadratur-Mischer 464, der ausgelegt ist, um das Quadratur-Zwischenfrequenzsignal 426 basierend auf dem Kombinationssignal 416 zu erzeugen, wobei der Inphase-Mischer 462 und der Quadratur-Mischer 464 ausgelegt sind, um zwei gegeneinander in einem Bereich zwischen 70° und 110° phasenverschobene Lokaloszillatorsignale 122a, 122b gleicher Frequenz zu empfangen.

Bei einem Empfänger 400 gemäß einem bevorzugten Ausführungsbeispiel, umfasst die Trennungseinrichtung 450 eine Inphase/Quadratur-Zerlegungseinrichtung 480, 482, 486, 488, die ausgelegt ist, um basierend auf dem ersten digitalisierten Zwischenfrequenzsignal 444 einen zugehörigen Inphase-Anteil 484a und einen zugehörigen Quadratur-Anteil 484b zu bestimmen, und um basierend auf dem zweiten digitalisierten Zwischenfrequenzsignal 446 einen zugehörigen Inphase-Anteil 490a und einen zugehörigen Quadratur-Anteil 490b zu bestimmen; wobei die Trennungseinrichtung ferner eine Kombinationseinrichtung 492, 494, 496, 498 umfasst, die ausgelegt ist, um durch eine erste Kombination des Inphase-Anteils 484a oder des Quadratur-Anteils 484b des ersten digitalisierten Zwischenfrequenzsignals 444 mit dem Inphase-Anteil 490a oder dem Quadratur-Anteil 490b des zweiten digitalisierten Zwischenfrequenzsignals 446 das erste Ausgangssignal zu erhalten, und um durch eine zweite Kombination des Inphase-Anteils oder des Quadratur-Anteils des ersten digitalisierten Zwischenfrequenzsignals mit dem Inphase-Anteil oder dem Quadratur-Anteil des zweiten digitalisierten Zwischenfrequenzsignals das zweite Ausgangssignal zu erhalten.

Bei einem Empfänger 400 gemäß einem bevorzugte Ausführungsbeispiel, umfasst die Trennungseinrichtung 450 als eine erste Inphase/Quadratur-Zerlegungseinrichtung einen Quadratur-Abtaster 482, 484, der ausgelegt ist, um bei einer Erzeugung des Inphase-Anteils 484a aus dem ersten digitalisierten Zwischenfrequenzsignal 444 aufeinanderfolgende Abtastwerte des ersten digitalisierten Zwischenfrequenzsignals mit einer Folge von Werten [+A; 0; -A; 0] oder einer dazu proportionalen Folge von Werten zu gewichten, und um bei einer Erzeugung des Quadratur-Anteils 484b aus dem ersten digitalisierten Zwischenfrequenzsignal aufeinanderfolgende Abtastwerte des ersten digitalisierten Zwischenfrequenzsignals mit einer Folge von Werten [0; -A; 0; +A] oder einer dazu proportionalen Folge von Werten zu gewichten; wobei die Trennungseinrichtung 450 als eine zweite Inphase/Quadratur-Zerlegungseinrichtung einen zweiten Quadratur-Abtaster 486, 488 umfasst, der ausgelegt ist, um bei einer Erzeugung des Inphase-Anteils 490a aus dem zweiten digitalisierten Zwischenfrequenzsignal 446 aufeinanderfolgende Abtastwerte des zweiten digitalisierten Zwischenfrequenzsignals mit einer Folge von Werten [+A; 0; -A; 0] oder einer dazu proportionalen Folge von Werten zu gewichten, und um bei einer Erzeugung des Quadratur-Anteils 490b aus dem zweiten digitalisierten Zwischenfrequenzsignal 446 aufeinanderfolgende Abtastwerte des zweiten digitalisierten Zwischenfrequenzsignals mit einer Folge von Werten [0; -A; 0; +A] oder einer dazu proportionalen Folge von Werten zu gewichten, wobei A ≠ 0.

Bei einem Empfänger 400 gemäß einem bevorzugten Ausführungsbeispiel, weist die Trennungseinrichtung 450 folgende Merkmale auf:

- einen ersten Kombinierer 492, der ausgelegt ist, um den Inphase-Anteil 484a des ersten digitalisierten Zwischenfrequenzsignals 444 mit dem Quadratur-Anteil 490b des zweiten digitalisierten Zwischenfrequenzsignals 446 mit gleichen Vorzeichen zu kombinieren, um ein Quadratur-Ausgangssignal zu erhalten, das im Wesentlichen den Informationsinhalt des ersten Nutzfrequenzbandes 156; B1 umfasst;

- einen zweiten Kombinierer 494, der ausgelegt ist, um einen Quadratur-Anteil 484b des ersten digitalisierten Zwischenfrequenzsignals 444 mit eine Inphase-Anteil 490a des zweiten digitalisierten Zwischenfrequenzsignals 446 mit gleichen Vorzeichen zu kombinieren, um ein Inphase-Ausgangssignal 454 zu erhalten, das im Wesentlichen den Informationsinhalt des zweiten Nutzfrequenzbandes 158; B2 umfasst;

- einen dritten Kombinierer 496, der ausgelegt ist, um einen Quadratur-Anteil 484b des ersten digitalisierten Zwischenfrequenzsignals 444 mit einem Inphase-Anteil 490a des zweiten digitalisierten Zwischenfrequenzsignals 446 mit entgegengesetzten Vorzeichen zu kombinieren, um ein Inphase-Ausgangssignal 452 zu erhalten, das im Wesentlichen den Informationsinhalt des ersten Nutzfrequenzbandes 156; B1 umfasst; und

- einen vierten Kombinierer 498, der ausgelegt ist, um einen Inphase-Anteil 484a des ersten digitalisierten Zwischenfrequenzsignals 444 mit einem Quadratur-Anteil 490b des zweiten digitalisierten Zwischenfrequenzsignals 446 mit entgegengesetzten Vorzeichen zu kombinieren, um ein Quadratur-Ausgangssignal 458 zu erhalten, das im Wesentlichen den Informationsinhalt des zweiten Nutzfrequenzbandes 158; B2 umfasst.

Bei einem Empfänger 100; 200; 400 gemäß einem bevorzugten Ausführungsbeispiel, sind die Frequenz ($f_{LO1}$; LO1) des ersten Lokaloszillatorsignals 122; 252; 122a, 122b und die Abtastfrequenz ($f_s$) so gewählt, dass in dem ersten digitalisierten Zwischenfrequenzsignal 144; 282; 444 ein frequenzmäßig niedrigstes spektrales Abbild des ersten Nutzfrequenzbandes 156; 241; B1 sich um eine Zwischenfrequenz ($f_{ZF2}$) herum erstreckt, die gleich einem Viertel der Abtastfrequenz ($f_s$) ist.

Bei einem Empfänger 100; 200; 400 gemäß einem bevorzugten Ausführungsbeispiel, umfasst die Zwischenfrequenz-Filtereinrichtung 130; 270; 430 ein Tiefpassfilter, das eine Grenzfrequenz aufweist, die kleiner oder gleich einem Halben der Abtastfrequenz ($f_s$) ist.

Bei einem Empfänger 100; 200; 400 gemäß einem bevorzugten Ausführungsbeispiel, beträgt die Abtastfrequenz ($f_s$) zwischen einem 1,8-fachen und einem 2,2-fachen eines Betrages einer Frequenzdifferenz zwischen einer ersten Trägerfrequenz ($f_1$) in dem ersten Nutzfrequenzband 156; 241; B1 und einer zweiten Trägerfrequenz ($f_2$) in dem zweiten Nutzfrequenzband 158; 243; B2.

Bei einem Empfänger 100; 200; 400 gemäß einem bevorzugten Ausführungsbeispiel, ist die Abtastfrequenz ($f_s$) so gewählt, dass ein durch die Mischereinrichtung 120; 250; 420 erzeugtes Abbild 162, 172, 182; 292; 610 des ersten Nutzfrequenzbandes 156; 241; B1 innerhalb eines Frequenzintervalls [$N·f_s$; $(N+1/2)·f_s$] liegt, und dass ein durch die Mischereinrichtung erzeugtes Abbild 164, 174, 184; 296 des zweiten Nutzfrequenzbandes 158; 243; B2 innerhalb des Frequenzintervalls [$N·f_s$; $(N+1/2)·f_s$] liegt, wobei $N \geq 1$, und wobei die Zwischenfrequenz-Filtereinrichtung 130; 270; 430 ein Bandpassfilter 172; 472, 474 aufweist, das ausgelegt ist, um zumindest einen Teil eines Frequenzintervalls [$N·f_s$; $(N+1/2)·f_s$], auf den das erste Nutzfrequenzband und das zweite Nutzfrequenzband durch die Mischereinrichtung abgebildet werden, passieren zu lassen, und um Frequenzen außerhalb des Frequenzintervalls [$N·f_s$; $(N+1/2)·f_s$] zu bedämpfen.

Bei einem Empfänger 100; 200; 400 gemäß einem bevorzugten Ausführungsbeispiel, ist die Abtastfrequenz ($f_s$) so gewählt, dass ein durch die Mischereinrichtung 120; 250; 420 erzeugtes Abbild 162, 172, 182; 292; 610 des ersten Nutzfrequenzbandes 156; 241; B1 innerhalb eines Frequenzintervalls [$(N-1/2)·f_s$; $N·f_s$] liegt, und dass ein durch die Mischereinrichtung erzeugtes Abbild 164, 174, 184; 296 des zweiten Nutzfrequenzbandes 158; 243; B2 innerhalb des Frequenzintervalls [$(N-1/2)·f_s$; $N·f_s$] liegt, wobei $N \geq 1$, und wobei die Zwischenfrequenz-Filtereinrichtung 130; 270; 430 ein Bandpassfilter 172; 472, 474 aufweist, das ausgelegt ist, um zumindest einen Teil eines Frequenzintervalls [$(N-1/2)·f_s$; $N·f_s$], auf den das erste Nutzfrequenzband und das zweite Nutzfrequenzband durch die Mischereinrichtung abgebildet werden, passieren zu lassen, und um Frequenzen außerhalb des Frequenzintervalls [$(N-1/2)·f_s$; $N·f_s$] zu bedämpfen.

Bei einem Empfänger 100; 200; 400 gemäß einem bevorzugten Ausführungsbeispiel, ist die Analog/Digital-Wandlereinrichtung 140; 280; 440a, 440b ausgelegt, um das erste gefilterte Zwischenfrequenzsignal 134; 272; 434 oder ein davon abgeleitetes Signal 439a durch eine Unterabtastung bezüglich einer Frequenz umzusetzen, und um das zweite gefilterte Zwischenfrequenzsignal 136; 274; 436 oder ein davon abgeleitetes Signal 439b bezüglich einer Frequenz umzusetzen, wobei die Zwischenfrequenz-Filtereinrichtung 130; 270; 430 ausgelegt ist, um als ein Anti-Alias-Filter für die Analog/Digital-Wandlung zu wirken.

Bei einem Empfänger 100; 200; 400 gemäß einem bevorzugten Ausführungsbeispiel, ist der Empfänger so ausgelegt, dass eine Mittenfrequenz eines spektralen Abbilds des ersten Nutzfrequenzbandes 156; 141; B1 oder eine Mittenfrequenz eines spektralen Abbilds des zweiten Nutzfrequenzbandes 158; 243; B2 in dem ersten digitalisierten Zwischenfrequenzsignal 144; 282; 444 von einem Halben eines Maximums einer Bandbreite des ersten Nutzfrequenzbandes und einer Bandbreite des zweiten Nutzfrequenzbandes um höchstens 25 % abweicht.

Bei einem Empfänger 100; 200; 400 gemäß einem bevorzugten Ausführungsbeispiel, ist die Mischereinrichtung 120; 250; 420 eine analoge Mischereinrichtung.

Bei einem Empfänger 100; 200; 400 gemäß einem bevorzugten Ausführungsbeispiel, umfasst der Empfänger ferner eine Doppelbandantenne, die ausgelegt ist, um die zwei unterschiedlichen Nutzfrequenzbänder 156; 251; B1; 158; 243; B2 zu empfangen, wobei die Nutzfrequenzbänder frequenzmäßig voneinander beabstandet sind.

Bei einem Empfänger 100; 200; 400 gemäß einem bevorzugten Ausführungsbeispiel, ist die Mischereinrichtung 120; 250; 420 ausgelegt, um eine erste Trägerfrequenz ($f_1$) in dem ersten Nutzfrequenzband 156; 241; B1 auf eine erste Zwischenfrequenz $F_{ZF1}$ abzubilden, so dass gilt:

$$N \cdot f_s + f_s / 4 = f_{ZF1}$$

oder

$$N \cdot f_s - f_s / 4 = f_{ZF1},$$

wobei $N \geq 1$, und wobei $f_s$ die Abtastfrequenz ist.

Bei einem Empfänger 100; 200; 400 gemäß einem bevorzugten Ausführungsbeispiel, ist die Mischereinrichtung 120; 250; 420 ausgelegt, um eine zweite Trägerfrequenz ($f_2$) in dem zweiten Nutzfrequenzband 158; 243; B2 auf eine erste Zwischenfrequenz $f_{ZF1}$ abzubilden, so dass gilt:

$$N \cdot f_s + f_s / 4 = f_{ZF1}$$

oder

$$N \cdot f_s - f_s / 4 = f_{ZF1},$$

wobei N ≥ 1, und wobei $f_s$ die Abtastfrequenz ist.

Ein Ausführungsbeispiel gemäß der Erfindung schafft ein Verfahren zum Empfangen eines ersten Nutzfrequenzbandes 156; 241; B1 und eines zweiten Nutzfrequenzbandes 158; 243; B2, wobei die Nutzfrequenzbänder voneinander beabstandet sind, mit folgenden Schritten:

- Bandpass-Filtern 710 eines oder mehrerer Empfangssignale 112; 210, 212; 412, um ein Kombinationssignal 114; 416, das das erste Nutzfrequenzband und das zweite Nutzfrequenzband aufweist, zu liefern;

- Umsetzen 720 des Kombinationssignals mit einem Lokaloszillatorsignal 122; 252; 122a, 122b, dessen Frequenz ($f_{LO1}$; LO1) so gewählt ist, das das erste Nutzfrequenzband und das zweite Nutzfrequenzband bezüglich der Frequenz des Lokaloszillatorsignals zumindest teilweise Spiegelbänder zueinander sind, um ein erstes Zwischenfrequenzsignal 124; 260; 424 und ein zweites Zwischenfrequenzsignal 126; 262; 426 zu erhalten;

- Filtern 730 des ersten Zwischenfrequenzsignals und des zweiten Zwischenfrequenzsignals, um ein erstes gefiltertes Zwischenfrequenzsignal 134; 260; 434 und ein zweites gefiltertes Zwischenfrequenzsignal 136; 262; 436 zu erhalten; und

- Analog/Digital-Wandeln 740 des ersten gefilterten Zwischenfrequenzsignals und des zweiten gefilterten Zwischenfrequenzsignals unter Verwendung einer einzigen Abtastfrequenz ($f_s$), um ein erstes digitalisiertes Zwischenfrequenzsignal 144; 282; 444 und ein zweites digitalisiertes Zwischenfrequenzsignal 146; 284; 446 zu erhalten;

- wobei das Umsetzen 720 des Kombinationssignals mit dem Lokaloszillatorsignal ein Mischen des Kombinationssignals mit dem Lokaloszillatorsignal umfasst, um als das erste Zwischenfrequenzsignal ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und

- um als das zweite Zwischenfrequenzsignal ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen;

wobei das Verfahren folgende weitere Schritte umfasst:

- Kombinieren des Inphase-Anteils 484a des ersten digitalisierten Zwischenfrequenzsignals 444 mit dem Quadratur-Anteil 490b des zweiten digitalisierten Zwischenfrequenzsignals 446 mit gleichen Vorzeichen, um ein Quadratur-Ausgangssignal zu erhalten, das im Wesentlichen den Informationsinhalt des ersten Nutzfrequenzbandes 156; B1 umfasst;

- Kombinieren des Quadratur-Anteils 484b des ersten digitalisierten Zwischenfrequenzsignals 444 mit dem Inphase-Anteil 490a des zweiten digitalisierten Zwischenfrequenzsignals 446 mit gleichen Vorzeichen, um ein Inphase-Ausgangssignal 454 zu erhalten, das im Wesentlichen den Informationsinhalt des zweiten Nutzfrequenzbandes 158; B2 umfasst;

- Kombinieren des Quadratur-Anteils 484b des ersten digitalisierten Zwischenfrequenzsignals 444 mit dem Inphase-Anteil 490a des zweiten digitalisierten Zwischenfrequenzsignals 446 mit entgegengesetzten Vorzeichen, um ein Inphase-Ausgangssignal 452 zu erhalten, das im Wesentlichen den Informationsinhalt des ersten Nutzfrequenzbandes 156; B1 umfasst; und

- Kombinieren des Inphase-Anteils 484a des ersten digitalisierten Zwischenfrequenzsignals 444 mit dem Quadratur-Anteil 490b des zweiten digitalisierten Zwischenfrequenzsignals 446 mit entgegengesetzten Vorzeichen, um ein Quadratur-Ausgangssignal 458 zu erhalten, das im Wesentlichen den Informationsinhalt des zweiten Nutzfrequenzbandes 158; B2 umfasst.

Bei einem Verfahren gemäß einem bevorzugten Ausführungsbeispiel, wird bei dem Umsetzen das Kombinationssignal mit dem Lokaloszillatorsignal gemischt, um als das erste Zwischenfrequenzsignal ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und um als das zweite Zwischenfrequenzsignal ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen; wobei das Analog/Digital-Wandeln ein Frequenz-Umsetzen des ersten gefilterten Zwischenfrequenzsignals oder eines davon abgeleiteten Signals durch eine Unterabtastung und ein Frequenz-Umsetzen des zweiten gefilterten Zwischenfrequenzsignals oder eines davon abgeleiteten Signals umfasst; wobei das Filtern des ersten Zwischenfrequenz-Signals als ein Antia-Alias-Filtern für das Analog-Digital-Wandeln wirkt; und wobei das Verfahren folgende weitere Schritte umfasst:

- Erhalten eines ersten Ausgangssignals, das im Wesentlichen einen Informationsinhalt des ersten Nutzfrequenzbands umfasst, und in dem ein Informationsinhalt des zweiten Nutzfrequenzbands gegenüber dem Informationsinhalt des ersten Nutzfrequenzbands bedämpft oder unterdrückt ist, basierend auf dem ersten digitalisierten Zwischenfrequenzsignal und dem zweiten digitalisierten Zwischenfrequenzsignal; und

- Erhalten eines zweiten Ausgangssignals, das im Wesentlichen einen Informationsinhalt des zweiten Nutzfrequenzbands umfasst, und in dem ein Informationsinhalt des ersten Nutzfrequenzbands gegenüber dem Informationsinhalt des zweiten Nutzfrequenzbands bedämpft oder unterdrückt ist, basierend auf dem ersten digitalisierten Zwischenfrequenzsignal und dem zweiten digitalisierten Zwischenfrequenzsignal.

**Patentansprüche**

1. Empfänger (100; 200; 400) zum Empfangen eines ersten Nutzfrequenzbandes (156; 241; B1) und eines zweiten Nutzfrequenzbandes (158; 243; B2), wobei die Nutzfrequenzbänder voneinander beabstandet sind, mit folgenden Merkmalen:

   einer Bandpassfiltereinrichtung (110; 220; 410) zur Filterung eines oder mehrerer Empfangssignale (112; 210, 212; 412), wobei die Bandpassfiltereinrichtung ausgebildet ist, um ein Kombinationssignal (114; 416), das das erste Nutzfrequenzband und das zweite Nutzfrequenzband aufweist, zu liefern;
   einer Mischereinrichtung (120; 250; 420) zum Umsetzen des Kombinationssignals mit einem Lokaloszillatorsignal (122; 252; 122a, 122b), dessen Frequenz ($f_{LO1}$; LO1) so gewählt ist, dass das erste Nutzfrequenzband und das zweite Nutzfrequenzband bezüglich der Frequenz des Lokaloszillatorsignals zumindest teilweise Spiegelbänder zueinander sind, um ein erstes Zwischenfrequenzsignal (124; 260; 424) und ein zweites Zwischenfrequenzsignal (126; 262; 426) zu erhalten;
   einer Zwischenfrequenzfiltereinrichtung (130; 270; 430) zum Filtern des ersten Zwischenfrequenzsignals und des zweiten Zwischenfrequenzsignals, um ein erstes gefiltertes Zwischenfrequenzsignal (134; 260; 434) und ein zweites gefiltertes Zwischenfrequenzsignal (136; 262; 436) zu erhalten; und

   einer Analog/Digital-Wandlereinrichtung (140; 280; 440a, 440b) zum Analog/Digital-Wandeln des ersten gefilterten Zwischenfrequenzsignals und des zweiten gefilterten Zwischenfrequenzsignals unter Verwendung einer einzigen Abtastfrequenz ($f_s$), um ein erstes digitalisiertes Zwischenfrequenzsignal (144; 282; 444) und ein zweites digitalisiertes Zwischenfrequenzsignal (146; 284; 446) zu erhalten,

   wobei die Mischereinrichtung ausgelegt ist, um das Kombinationssignal mit dem Lokaloszillatorsignal (122; 122a, 122b) zu mischen, um als das erste Zwischenfrequenzsignal (124; 424) ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und um als das zweite Zwischenfrequenzsignal (126; 426) ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen;
   **gekennzeichnet dadurch, dass** der Empfänger ferner eine Trennungseinrichtung (450) umfasst, die folgende Merkmale aufweist:

   eine Inphase/Quadratur-Zerlegungseinrichtung (480, 482, 486, 488), die ausgelegt ist, um basierend auf dem ersten digitalisierten Zwischenfrequenzsignal (444) einen zugehörigen Inphase-Anteil (484a) und einen zugehörigen Quadratur-Anteil (484b) zu bestimmen, und um basierend auf dem zweiten digitalisierten Zwischenfrequenzsignal (446) einen zugehörigen Inphase-Anteil (490a) und einen zugehörigen Quadratur-Anteil (490b) zu bestimmen;
   einen ersten Kombinierer (492), der ausgelegt ist, um den Inphase-Anteil (484a) des ersten digitalisierten Zwischenfrequenzsignals (444) mit dem Quadratur-Anteil (490b) des zweiten digitalisierten Zwischenfrequenzsignals (446) mit gleichen Vorzeichen zu kombinieren, um ein Quadratur-Ausgangssignal zu erhalten, das im Wesentlichen den Informationsinhalt des ersten Nutzfrequenzbandes (156; B1) umfasst;
   einen zweiten Kombinierer (494), der ausgelegt ist, um den Quadratur-Anteil (484b) des ersten digitalisierten Zwischenfrequenzsignals (444) mit dem Inphase-Anteil (490a) des zweiten digitalisierten Zwischenfrequenzsignals (446) mit gleichen Vorzeichen zu kombinieren, um ein Inphase-Ausgangssignal (454) zu erhalten, das im Wesentlichen den Informationsinhalt des zweiten Nutzfrequenzbandes (158; B2) umfasst;

einen dritten Kombinierer (496), der ausgelegt ist, um den Quadratur-Anteil (484b) des ersten digitalisierten Zwischenfrequenzsignals (444) mit dem Inphase-Anteil (490a) des zweiten digitalisierten Zwischenfrequenzsignals (446) mit entgegengesetzten Vorzeichen zu kombinieren, um ein Inphase-Ausgangssignal (452) zu erhalten, das im Wesentlichen den Informationsinhalt des ersten Nutzfrequenzbandes (156; B1) umfasst; und

einen vierten Kombinierer (498), der ausgelegt ist, um den Inphase-Anteil (484a) des ersten digitalisierten Zwischenfrequenzsignals (444) mit dem Quadratur-Anteil (490b) des zweiten digitalisierten Zwischenfrequenzsignals (446) mit entgegengesetzten Vorzeichen zu kombinieren, um ein Quadratur-Ausgangssignal (458) zu erhalten, das im Wesentlichen den Informationsinhalt des zweiten Nutzfrequenzbandes (158; B2) umfasst, und

dass der Empfänger so ausgelegt ist, dass durch die Analog/Digital-Wandlereinrichtung (140; 280; 440a, 440b) eine Unterabtastung erfolgt, und dass durch die Unterabtastung eine Frequenzumsetzung vorgenommen wird.

2. Empfänger (100; 200; 400) gemäß Anspruch 1, wobei die Mischereinrichtung ausgelegt ist, um das Kombinationssignal mit dem Lokaloszillatorsignal (122; 122a, 122b) zu mischen, um als das erste Zwischenfrequenzsignal (124; 424) ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und

um als das zweite Zwischenfrequenzsignal (126; 426) ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen;

wobei der Empfänger ferner eine Trennungseinrichtung (450) umfasst, die ausgelegt ist, um basierend auf dem ersten digitalisierten Zwischenfrequenzsignal (144; 444) und dem zweiten digitalisierten Zwischenfrequenzsignal (146; 446) ein erstes Ausgangssignal (452) zu erhalten, das im Wesentlichen einen Informationsinhalt des ersten Nutzfrequenzbandes umfasst, und in dem ein Informationsinhalt des zweiten Nutzfrequenzbandes gegenüber dem Informationsinhalt des ersten Nutzfrequenzbandes bedämpft oder unterdrückt ist, und um ein zweites Ausgangssignal (454) zu erhalten, das im Wesentlichen einen Informationsinhalt des zweiten Nutzfrequenzbandes umfasst, und in dem ein Informationsinhalt des ersten Nutzfrequenzbandes gegenüber dem Informationsinhalt des zweiten Nutzfrequenzbandes bedämpft oder unterdrückt ist; wobei die Analog/Digital-Wandlereinrichtung (140; 280; 440a, 440b) ausgelegt ist, um das erste gefilterte Zwischenfrequenzsignal (134; 272; 434) oder ein davon abgeleitetes Signal (439a) durch eine Unterabtastung bezüglich einer Frequenz umzusetzen, und um das zweite gefilterte Zwischenfrequenzsignal (136; 274; 436) oder ein davon abgeleitetes Signal (439b) bezüglich einer Frequenz umzusetzen, wobei die Zwischenfrequenz-Filtereinrichtung (130; 270; 430) ausgelegt ist, um als ein Anti-Alias-Filter für die Analog/DigitalWandlung zu wirken.

3. Empfänger (100; 400) gemäß einem der Ansprüche 1 oder 2, bei dem die Bandpassfiltereinrichtung (110; 410) ausgelegt ist, um ein Empfangssignal (112; 412) zu empfangen, um das erste Nutzfrequenzband (156; B1) und das zweite Nutzfrequenzband (158; B2) weniger stark zu bedämpfen als ein zwischen dem ersten Nutzfrequenzband und dem zweiten Nutzfrequenzband liegendes Frequenzband, und um ein Kombinationssignal (114; 416) bereitzustellen, in dem ein Informationsinhalt des ersten Nutzfrequenzbandes und ein Informationsinhalt des zweiten Nutzfrequenzbandes enthalten sind;

wobei die Mischereinrichtung ausgelegt ist, um das Kombinationssignal mit dem Lokaloszillatorsignal (122; 122a, 122b) zu mischen, um als das erste Zwischenfrequenzsignal (124; 424) ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und

um als das zweite Zwischenfrequenzsignal (126; 426) ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen;

wobei der Empfänger ferner eine Trennungseinrichtung (450) umfasst, die ausgelegt ist, um basierend auf dem ersten digitalisierten Zwischenfrequenzsignal (144; 444) und dem zweiten digitalisierten Zwischenfrequenzsignal (146; 446) ein erstes Ausgangssignal (452) zu erhalten, das im Wesentlichen einen Informationsinhalt des ersten Nutzfrequenzbandes umfasst, und in dem ein Informationsinhalt des zweiten Nutzfrequenzbandes gegenüber dem Informationsinhalt des ersten Nutzfrequenzbandes bedämpft oder unterdrückt ist, und um ein zweites Ausgangssignal (454) zu erhalten, das im Wesentlichen einen Informationsinhalt des zweiten Nutzfrequenzbandes umfasst, und in dem ein Informationsinhalt des ersten Nutzfrequenzbandes gegenüber dem Informationsinhalt des zweiten Nutzfrequenzbandes bedämpft oder unterdrückt ist;

wobei die erste Mischereinrichtung (420) einen Inphase-Mischer (462), der ausgelegt ist, um das Inphase-Zwischenfrequenzsignal (424) basierend auf dem Kombinationssignal (416) zu erzeugen, und einen Quadratur-Mischer (464), der ausgelegt ist, um das Quadratur-Zwischenfrequenzsignal (426) basierend auf dem Kombinationssignal (416) zu erzeugen, umfasst,

wobei der Inphase-Mischer (462) und der Quadratur-Mischer (464) ausgelegt sind, um zwei gegeneinander in einem Bereich zwischen 70° und 110° phasenverschobene Lokaloszillatorsignale (122a, 122b) gleicher Frequenz zu empfangen.

**4.** Empfänger (400) gemäß Anspruch 3, wobei die Trennungseinrichtung (450) eine Inphase/Quadratur-Zerlegungseinrichtung (480, 482, 486, 488) umfasst, die ausgelegt ist, um basierend auf dem ersten digitalisierten Zwischenfrequenzsignal (444) einen zugehörigen Inphase-Anteil (484a) und einen zugehörigen Quadratur-Anteil (484b) zu bestimmen, und um basierend auf dem zweiten digitalisierten Zwischenfrequenzsignal (446) einen zugehörigen Inphase-Anteil (490a) und einen zugehörigen Quadratur-Anteil (490b) zu bestimmen; und

wobei die Trennungseinrichtung ferner eine Kombinationseinrichtung (492, 494, 496, 498) umfasst, die ausgelegt ist, um durch eine erste Kombination des Inphase-Anteils (484a) oder des Quadratur-Anteils (484b) des ersten digitalisierten Zwischenfrequenzsignals (444) mit dem Inphase-Anteil (490a) oder dem Quadratur-Anteil (490b) des zweiten digitalisierten Zwischenfrequenzsignals (446) das erste Ausgangssignal zu erhalten, und um durch eine zweite Kombination des Inphase-Anteils oder des Quadratur-Anteils des ersten digitalisierten Zwischenfrequenzsignals mit dem Inphase-Anteil oder dem Quadratur-Anteil des zweiten digitalisierten Zwischenfrequenzsignals das zweite Ausgangssignal zu erhalten.

**5.** Empfänger (400) gemäß einem der Ansprüche 3 oder 4, wobei die Trennungseinrichtung (450) als eine erste Inphase/Quadratur-Zerlegungseinrichtung einen Quadratur-Abtaster (482, 484) umfasst, der ausgelegt ist, um bei einer Erzeugung des Inphase-Anteils (484a) aus dem ersten digitalisierten Zwischenfrequenzsignal (444) aufeinanderfolgende Abtastwerte des ersten digitalisierten Zwischenfrequenzsignals mit einer Folge von Werten [+A; 0; -A; 0] oder einer dazu proportionalen Folge von Werten zu gewichten, und

um bei einer Erzeugung des Quadratur-Anteils (484b) aus dem ersten digitalisierten Zwischenfrequenzsignal aufeinanderfolgende Abtastwerte des ersten digitalisierten Zwischenfrequenzsignals mit einer Folge von Werten [0; -A; 0; +A] oder einer dazu proportionalen Folge von Werten zu gewichten;

wobei die Trennungseinrichtung (450) als eine zweite Inphase/Quadratur-Zerlegungseinrichtung einen zweiten Quadratur-Abtaster (486, 488) umfasst, der ausgelegt ist, um bei einer Erzeugung des Inphase-Anteils (490a) aus dem zweiten digitalisierten Zwischenfrequenzsignal (446) aufeinanderfolgende Abtastwerte des zweiten digitalisierten Zwischenfrequenzsignals mit einer Folge von Werten [+A; 0; -A; 0] oder einer dazu proportionalen Folge von Werten zu gewichten, und

um bei einer Erzeugung des Quadratur-Anteils (490b) aus dem zweiten digitalisierten Zwischenfrequenzsignal (446) aufeinanderfolgende Abtastwerte des zweiten digitalisierten Zwischenfrequenzsignals mit einer Folge von Werten [0; -A; 0; +A] oder einer dazu proportionalen Folge von Werten zu gewichten, wobei $A \neq 0$.

**6.** Empfänger (400) gemäß Anspruch 4 oder 5, wobei die Trennungseinrichtung (450) folgende Merkmale aufweist:

einen ersten Kombinierer (492), der ausgelegt ist, um den Inphase-Anteil (484a) des ersten digitalisierten Zwischenfrequenzsignals (444) mit dem Quadratur-Anteil (490b) des zweiten digitalisierten Zwischenfrequenzsignals (446) mit gleichen Vorzeichen zu kombinieren, um ein Quadratur-Ausgangssignal zu erhalten, das im Wesentlichen den Informationsinhalt des ersten Nutzfrequenzbandes (156; B1) umfasst;

einen zweiten Kombinierer (494), der ausgelegt ist, um einen Quadratur-Anteil (484b) des ersten digitalisierten Zwischenfrequenzsignals (444) mit eine Inphase-Anteil (490a) des zweiten digitalisierten Zwischenfrequenzsignals (446) mit gleichen Vorzeichen zu kombinieren, um ein Inphase-Ausgangssignal (454) zu erhalten, das im Wesentlichen den Informationsinhalt des zweiten Nutzfrequenzbandes (158; B2) umfasst;

einen dritten Kombinierer (496), der ausgelegt ist, um einen Quadratur-Anteil (484b) des ersten digitalisierten Zwischenfrequenzsignals (444) mit einem Inphase-Anteil (490a) des zweiten digitalisierten Zwischenfrequenzsignals (446) mit entgegengesetzten Vorzeichen zu kombinieren, um ein Inphase-Ausgangssignal (452) zu erhalten, das im Wesentlichen den Informationsinhalt des ersten Nutzfrequenzbandes (156; B1) umfasst; und

einen vierten Kombinierer (498), der ausgelegt ist, um einen Inphase-Anteil (484a) des ersten digitalisierten Zwischenfrequenzsignals (444) mit einem Quadratur-Anteil (490b) des zweiten digitalisierten Zwischenfrequenzsignals (446) mit entgegengesetzten Vorzeichen zu kombinieren, um ein Quadratur-Ausgangssignal (458)

zu erhalten, das im Wesentlichen den Informationsinhalt des zweiten Nutzfrequenzbandes (158; B2) umfasst.

7. Empfänger (100; 200; 400) gemäß einem der Ansprüche 1 bis 6, bei dem die Frequenz ($f_{LO1}$; LO1) des ersten Lokaloszillatorsignals (122; 252; 122a, 122b) und die Abtastfrequenz ($f_s$) so gewählt sind, dass in dem ersten digitalisierten Zwischenfrequenzsignal (144; 282; 444) ein frequenzmäßig niedrigstes spektrales Abbild des ersten Nutzfrequenzbandes (156; 241; B1) sich um eine Zwischenfrequenz ($f_{ZF2}$) herum erstreckt, die gleich einem Viertel der Abtastfrequenz ($f_s$) ist.

8. Empfänger (100; 200; 400) gemäß einem der Ansprüche 1 bis 7, bei dem die Abtastfrequenz ($f_s$) zwischen einem 1,8-fachen und einem 2,2-fachen eines Betrages einer Frequenzdifferenz zwischen einer ersten Trägerfrequenz ($f_1$) in dem ersten Nutzfrequenzband (156; 241; B1) und einer zweiten Trägerfrequenz ($f_2$) in dem zweiten Nutzfrequenzband (158; 243; B2) beträgt.

9. Empfänger (100; 200; 400) gemäß einem der Ansprüche 1 bis 7, bei dem die Abtastfrequenz ($f_s$) so gewählt ist, dass ein durch die Mischereinrichtung (120; 250; 420) erzeugtes Abbild (162, 172, 182; 292; 610) des ersten Nutzfrequenzbandes (156; 241; B1) innerhalb eines Frequenzintervalls [$N \cdot f_s$; $(N+1/2) \cdot f_s$] liegt, und dass ein durch die Mischereinrichtung erzeugtes Abbild (164, 174, 184; 296) des zweiten Nutzfrequenzbandes (158; 243; B2) innerhalb des Frequenzintervalls [$N \cdot f_s$; $(N+1/2) \cdot f_s$] liegt, wobei N≥1, und
wobei die Zwischenfrequenz-Filtereinrichtung (130; 270; 430) ein Bandpassfilter (172; 472, 474) aufweist, das ausgelegt ist, um zumindest einen Teil eines Frequenzintervalls [$N \cdot f_s$; $(N+1/2) \cdot f_s$], auf den das erste Nutzfrequenzband und das zweite Nutzfrequenzband durch die Mischereinrichtung abgebildet werden, passieren zu lassen, und um Frequenzen außerhalb des Frequenzintervalls [$N \cdot f_s$; $(N+1/2) \cdot f_s$] zu bedämpfen.

10. Empfänger (100; 200; 400) gemäß einem der Ansprüche 1 bis 7, bei dem die Abtastfrequenz ($f_s$) so gewählt ist, dass ein durch die Mischereinrichtung (120; 250; 420) erzeugtes Abbild (162, 172, 182; 292; 610) des ersten Nutzfrequenzbandes (156; 241; B1) innerhalb eines Frequenzintervalls [$(N-1/2) \cdot f_s$; $N \cdot f_s$] liegt, und dass ein durch die Mischereinrichtung erzeugtes Abbild (164, 174, 184; 296) des zweiten Nutzfrequenzbandes (158; 243; B2) innerhalb des Frequenzintervalls [$(N-1/2) \cdot f_s$; $N \cdot f_s$] liegt, wobei N≥1, und
wobei die Zwischenfrequenz-Filtereinrichtung (130; 270; 430) ein Bandpassfilter (172; 472, 474) aufweist, das ausgelegt ist, um zumindest einen Teil eines Frequenzintervalls [$(N-1/2) \cdot f_s$; $N \cdot f_s$], auf den das erste Nutzfrequenzband und das zweite Nutzfrequenzband durch die Mischereinrichtung abgebildet werden, passieren zu lassen, und um Frequenzen außerhalb des Frequenzintervalls [$(N-1/2) \cdot f_s$; $N \cdot f_s$] zu bedämpfen.

11. Empfänger (100; 200; 400) gemäß einem der Ansprüche 1 bis 7, 9 oder 10, bei dem die Analog/Digital-Wandlereinrichtung (140; 280; 440a, 440b) ausgelegt ist, um das erste gefilterte Zwischenfrequenzsignal (134; 272; 434) oder ein davon abgeleitetes Signal (439a) durch eine Unterabtastung bezüglich einer Frequenz umzusetzen, und um das zweite gefilterte Zwischenfrequenzsignal (136; 274; 436) oder ein davon abgeleitetes Signal (439b) bezüglich einer Frequenz umzusetzen, wobei die Zwischenfrequenz-Filtereinrichtung (130; 270; 430) ausgelegt ist, um als ein Anti-Alias-Filter für die Analog/Digital-Wandlung zu wirken.

12. Empfänger (100; 200; 400) gemäß einem der Ansprüche 1 bis 11, bei dem die Mischereinrichtung (120; 250; 420) ausgelegt ist, um eine erste Trägerfrequenz ($f_1$) in dem ersten Nutzfrequenzband (156; 241; B1) auf eine erste Zwischenfrequenz $f_{ZF1}$ abzubilden, so dass gilt:

$$N \cdot f_s + f_s/4 = f_{ZF1}$$

oder

$$N \cdot f_s - f_s/4 = f_{ZF1},$$

wobei $N \geq 1$, und wobei $f_s$ die Abtastfrequenz ist.

13. Empfänger (100; 200; 400) gemäß einem der Ansprüche 1 bis 12, bei dem die Mischereinrichtung (120; 250; 420) ausgelegt ist, um eine zweite Trägerfrequenz ($f_2$) in dem zweiten Nutzfrequenzband (158; 243; B2) auf eine erste Zwischenfrequenz $f_{ZF1}$ abzubilden, so dass gilt:

$$N \cdot f_s + f_s/4 = f_{ZF1}$$

oder

$$N \cdot f_s - f_s/4 = f_{ZF1},$$

wobei N ≥ 1, und wobei $f_s$ die Abtastfrequenz ist.

**14.** Verfahren zum Empfangen eines ersten Nutzfrequenzbandes (156; 241; B1) und eines zweiten Nutzfrequenzbandes (158; 243; B2), wobei die Nutzfrequenzbänder voneinander beabstandet sind, mit folgenden Schritten:

Bandpass-Filtern (710) eines oder mehrerer Empfangssignale (112; 210, 212; 412), um ein Kombinationssignal (114; 416), das das erste Nutzfrequenzband und das zweite Nutzfrequenzband aufweist, zu liefern;

Umsetzen (720) des Kombinationssignals mit einem Lokaloszillatorsignal (122; 252; 122a, 122b), dessen Frequenz ($f_{LO1}$; LO1) so gewählt ist, das das erste Nutzfrequenzband und das zweite Nutzfrequenzband bezüglich der Frequenz des Lokaloszillatorsignals zumindest teilweise Spiegelbänder zueinander sind, um ein erstes Zwischenfrequenzsignal (124; 260; 424) und ein zweites Zwischenfrequenzsignal (126; 262; 426) zu erhalten;

Filtern (730) des ersten Zwischenfrequenzsignals und des zweiten Zwischenfrequenzsignals, um ein erstes gefiltertes Zwischenfrequenzsignal (134; 260; 434) und ein zweites gefiltertes Zwischenfrequenzsignal (136; 262; 436) zu erhalten; und

Analog/Digital-Wandeln (740) des ersten gefilterten Zwischenfrequenzsignals und des zweiten gefilterten Zwischenfrequenzsignals unter Verwendung einer einzigen Abtastfrequenz ($f_s$), um ein erstes digitalisiertes Zwischenfrequenzsignal (144; 282; 444) und ein zweites digitalisiertes Zwischenfrequenzsignal (146; 284; 446) zu erhalten,

wobei das Umsetzen (720) des Kombinationssignals mit dem Lokaloszillatorsignal ein Mischen des Kombinationssignals mit dem Lokaloszillatorsignal umfasst, um als das erste Zwischenfrequenzsignal ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen, und

um als das zweite Zwischenfrequenzsignal ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen;

**dadurch gekennzeichnet, dass** das erfahren folgende weitere Schritte umfasst:

Kombinieren des Inphase-Anteils (484a) des ersten digitalisierten Zwischenfrequenzsignals (444) mit dem Quadratur-Anteil (490b) des zweiten digitalisierten Zwischenfrequenzsignals (446) mit gleichen Vorzeichen, um ein Quadratur-Ausgangssignal zu erhalten, das im Wesentlichen den Informationsinhalt des ersten Nutzfrequenzbandes (156; B1) umfasst;

Kombinieren des Quadratur-Anteils (484b) des ersten digitalisierten Zwischenfrequenzsignals (444) mit dem

Inphase-Anteil (490a) des zweiten digitalisierten Zwischenfrequenzsignals (446) mit gleichen Vorzeichen, um ein Inphase-Ausgangssignal (454) zu erhalten, das im Wesentlichen den Informationsinhalt des zweiten Nutzfrequenzbandes (158; B2) umfasst;

Kombinieren des Quadratur-Anteils (484b) des ersten digitalisierten Zwischenfrequenzsignals (444) mit dem Inphase-Anteil (490a) des zweiten digitalisierten Zwischenfrequenzsignals (446) mit entgegengesetzten Vorzeichen, um ein Inphase-Ausgangssignal (452) zu erhalten, das im Wesentlichen den Informationsinhalt des ersten Nutzfrequenzbandes (156; B1) umfasst; und

Kombinieren des Inphase-Anteils (484a) des ersten digitalisierten Zwischenfrequenzsignals (444) mit dem Quadratur-Anteil (490b) des zweiten digitalisierten Zwischenfrequenzsignals (446) mit entgegengesetzten Vorzeichen, um ein Quadratur-Ausgangssignal (458) zu erhalten, das im Wesentlichen den Informationsinhalt des zweiten Nutzfrequenzbandes (158; B2) umfasst; und

dass das Analog-Digital-Wandeln ein Unterabtasten umfasst, so dass durch das Unterabtasten eine Frequenzumsetzung vorgenommen wird.

**15.** Verfahren gemäß Anspruch 14, wobei bei dem Umsetzen das Kombinationssignal mit dem Lokaloszillatorsignal gemischt wird, um als das erste Zwischenfrequenzsignal ein Inphase-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen,

und um als das zweite Zwischenfrequenzsignal ein Quadratur-Zwischenfrequenzsignal zu erhalten, das auf dem Kombinationssignal basiert, und in dem Informationsinhalte des ersten Nutzfrequenzbandes und des zweiten Nutzfrequenzbandes sich zumindest teilweise spektral überlappen;

wobei das Analog/Digital-Wandeln ein Frequenz-Umsetzen des ersten gefilterten Zwischenfrequenzsignals oder eines davon abgeleiteten Signals durch eine Unterabtastung und ein Frequenz-Umsetzen des zweiten gefilterten Zwischenfrequenzsignals oder eines davon abgeleiteten Signals umfasst, wobei das Filtern des ersten Zwischenfrequenz-Signals als ein Antia-Alias-Filtern für das Analog-Digital-Wandeln wirkt; und wobei das Verfahren folgende weitere Schritte umfasst:

Erhalten eines ersten Ausgangssignals, das im Wesentlichen einen Informationsinhalt des ersten Nutzfrequenzbands umfasst, und in dem ein Informationsinhalt des zweiten Nutzfrequenzbands gegenüber dem Informationsinhalt des ersten Nutzfrequenzbands bedämpft oder unterdrückt ist, basierend auf dem ersten digitalisierten Zwischenfrequenzsignal und dem zweiten digitalisierten Zwischenfrequenzsignal; und

Erhalten eines zweiten Ausgangssignals, das im Wesentlichen einen Informationsinhalt des zweiten Nutzfrequenzbands umfasst, und in dem ein Informationsinhalt des ersten Nutzfrequenzbands gegenüber dem Informationsinhalt des zweiten Nutzfrequenzbands bedämpft oder unterdrückt ist, basierend auf dem ersten digitalisierten Zwischenfrequenzsignal und dem zweiten digitalisierten Zwischenfrequenzsignal.

## Claims

1. A receiver (100; 200; 400) for receiving a first usable frequency band (156; 241; B1) and a second usable frequency band (158; 243; B2), wherein the usable frequency bands are spaced apart, comprising:

a band-pass filter device (110; 220; 410) for filtering one or several receiving signals (112; 210, 212; 412), wherein the band-pass filter device is implemented to provide a combination signal (114; 416) having the first usable frequency band and the second usable frequency band; a mixer device (120; 250; 420) for converting the combination signal with a local oscillator signal (122; 252; 122a, 122b), whose frequency ($f_{LO1}$; LO1) is selected such that the first usable frequency band and the second usable frequency band are at least partly image bands of each other with regard to the frequency of the local oscillator signal, for obtaining a first intermediate frequency signal (124; 260; 424) and a second intermediate frequency signal (126; 262; 426); an intermediate frequency filter device (130; 270; 430) for filtering the first intermediate frequency signal and the second intermediate frequency signal for obtaining a first filtered intermediate frequency signal (134; 260; 434) and a second filtered intermediate frequency signal (136; 262; 436); and an analog/digital converter (140; 280; 440a, 440b) for analog/digital converting the first filtered intermediate frequency signal and the second filtered intermediate frequency signal by using a single sampling frequency ($f_s$) for obtaining a first digitized intermediate frequency signal (144; 282; 444) and a second digitized intermediate frequency signal (146; 284; 446),

wherein the mixer device is implemented to mix the combination signal with the local oscillator signal (122; 122a, 122b) for obtaining an inphase intermediate frequency signal as the first intermediate frequency signal (124; 424), which is based on the combination signal, and in which information contents of the first usable frequency band and the second usable frequency band at least partly spectrally overlap, and for obtaining a quadrature intermediate frequency signal as the second intermediate frequency signal (126; 426), which is based on the combination signal, and in which information contents of the first usable frequency band and the second usable frequency band at least partly spectrally overlap; and **characterized in that** the receiver further comprises a separation device (450), comprising:

an inphase/quadrature splitting device (480, 482, 486, 488), which is implemented to determine an associated inphase portion (484a) and an associated quadrature portion (484b) based on the first digitized intermediate frequency signal (444), and to determine an associated inphase portion (490a) and an associated quadrature portion (490b) based on the second digitized intermediate frequency signal (446); a first combiner (492), which is implemented to combine the inphase portion (484a) of the first digitized intermediate frequency signal (444) with the quadrature portion (490b) of the second digitized intermediate frequency signal (446) with same signs, for obtaining a quadrature-output signal substantially comprising the information content of the first usable frequency band (156; B1); a second combiner (494), which is implemented to combine the quadrature portion (484b) of the first digitized intermediate frequency signal (444) with the inphase portion (490a) of the second digitized intermediate frequency signal (446) with same signs, for obtaining an inphase-output signal (454) substantially comprising the information content of the second usable frequency band (158; B2); a third combiner (496), which is implemented to combine the quadrature portion (484b) of the first digitized intermediate frequency signal (444) with the inphase portion (490a) of the second digitized intermediate frequency signal (446) with opposite signs, for obtaining an inphase-output signal (452) substantially comprising the information content of the first usable frequency band (156; B1); and

a fourth combiner (498), which is implemented to combine the inphase portion (484a) of the first digitized intermediate frequency signal (444) with the quadrature portion (490b) of the second digitized intermediate frequency signal (446) with opposite signs, for obtaining a quadrature output signal (458) substantially comprising the information content of the second usable frequency band (158; B2), and

that the receiver is implemented such that subsampling is performed by the analog/digital converter (140; 280; 440a, 440b), and that frequency-conversion is performed by the subsampling.

2. The receiver (100; 200; 400) according to claim 1, wherein the mixer device is implemented to mix the combination signal with the local oscillator signal (122; 122a, 122b) for obtaining an inphase intermediate frequency signal as the first intermediate frequency signal (124; 424), which is based on the combination signal, and in which information contents of the first usable frequency band and the second usable frequency band at least partly spectrally overlap, and

for obtaining a quadrature intermediate frequency signal as the second intermediate frequency signal (126; 426), which is based on the combination signal, and in which information contents of the first usable frequency band and the second usable frequency band at least partly spectrally overlap;

the receiver further comprising a separation device (450), which is implemented to obtain a first output signal (452) based on the first digitized intermediate frequency signal (144; 444) and the second digitized intermediate frequency signal (146; 446), substantially comprising information content of the first usable frequency band, and in which information content of the second usable frequency band is attenuated or suppressed compared to the information content of the first usable frequency band, and

to obtain a second output signal (454), substantially comprising information content of the second usable frequency band, and wherein information content of the first usable frequency band is attenuated or suppressed compared to the information content of the second usable frequency band;

wherein the analog/digital converter device (140; 280; 440a, 440b) is implemented to convert the first filtered intermediate frequency signal (134; 272; 434) or a signal derived therefrom (439a) by subsampling with regard to a frequency, and to convert the second filtered intermediate frequency signal (136; 274; 436) or a signal (439b) derived therefrom with regard to a frequency, wherein the intermediate frequency filter device (130; 270; 430) is implemented to act as an anti-alias filter for the analog/digital conversion.

3. The receiver (100; 400) according to one of claims 1 or 2, wherein the band-pass filter device (110; 410) is implemented to receive a receiving signal (112; 412), for attenuating the first usable frequency band (156; B1) and the second usable frequency band (158; B2) less than a frequency band lying between the first usable frequency band and the second usable frequency band, and to provide a combination signal (114; 416) including information content of the first usable frequency band and information content of the second usable frequency band;

wherein the mixer device is implemented to mix the combination signal with the local oscillator signal (122; 122a, 122b), for obtaining an inphase intermediate frequency signal as the first intermediate frequency signal (124; 424), which is based on the combination signal, and in which information contents of the first usable frequency band and the second usable frequency band at least partly spectrally overlap, and

for obtaining a quadrature intermediate frequency signal as the second intermediate frequency signal (126; 426), which is based on the combination signal, and in which information contents of the first usable frequency band and the second usable frequency band at least partly spectrally overlap;

wherein the receiver further comprises a separation device (450), which is implemented to obtain a first output signal (452) based on the first digitized intermediate frequency signal (144; 444) and the second digitized intermediate frequency signal (146; 446), substantially comprising information content of the first usable frequency band, and in which information content of the second usable frequency band is attenuated or suppressed compared to the information content of the first usable frequency band, and

to obtain a second output signal (454) substantially comprising information content of the second usable frequency band, and in which information content of the first usable frequency band is attenuated or suppressed compared to the information content of the second usable frequency band;

wherein the first mixer device (420) comprises an inphase mixer (462) implemented to generate the inphase intermediate frequency signal (424) based on the combination signal (416), and a quadrature mixer (464), which is implemented to generate the quadrature intermediate frequency signal (426) based on the combination signal (416),

wherein the inphase mixer (462) and the quadrature mixer (464) are implemented to receive two local oscillator signals (122a, 122b) of the same frequency phase shifted to each other in a range between 70° and 110°.

4. The receiver (400) according to claim 3, wherein the separation device (450) comprises an inphase/ quadrature splitting device (480, 482, 486, 488), which is implemented to determine an associated inphase portion (484a) and an associated quadrature portion (484b) based on the first digitized intermediate frequency signal (444), and to determine an associated inphase portion (490a) and an associated quadrature portion (490b) based on the second digitized intermediate frequency signal (446); and wherein the separation device further comprises a combination device (492, 494, 496, 498), which is implemented to obtain the first output signal by a first combination of the inphase portion (484a) or the quadrature portion (484b) of the first digitized intermediate frequency signal (444) with the inphase portion (490a) or the quadrature portion (490b), and to obtain the second output signal by a second combination of the inphase portion or the quadrature portion of the first digitized intermediate frequency signal with the inphase portion or the quadrature portion of the second digitized intermediate frequency signal.

5. The receiver (400) according to one of claims 3 or 4, wherein the separation device (450) comprises a quadrature sampler (482, 484) as a first inphase/ quadrature splitting device, which is implemented to weight, during generation of the inphase portion (484a) from the first digitized intermediate frequency signal (444), subsequent samples of the first digitized intermediate frequency signal with a sequence of values [+A; 0; -A; 0] or a sequence of values proportional thereto, and to weight, during generation of the quadrature portion (484b) from the first digitized intermediate frequency signal, subsequent samples of the first digitized intermediate frequency signal with a sequence of values [0; -A; 0; +A] or a sequence of values proportional thereto; wherein the separation device (450) comprises a second quadrature sampler (486, 488) as a second inphase/quadrature splitting device, which is implemented to weight, during generation of the inphase portion (490a) from the second digitized intermediate frequency signal (446), subsequent samples of the second digitized intermediate frequency signal with a sequence of values [+A; 0; -A; 0] or a sequence of values proportional thereto, and to weight, during generation of the quadrature portion (490b) from the second digitized intermediate frequency signal (446), subsequent samples of the second digitized intermediate frequency signal with a sequence of values [0; -A; 0; +A] or a sequence of values proportional thereto, wherein $A \neq 0$.

6. The receiver (400) according to claim 4 or 5, wherein the separation device (450) comprises:

a first combiner (492), which is implemented to combine the inphase portion (484a) of the first digitized intermediate frequency signal (444) with the quadrature portion (490b) of the second digitized intermediate frequency signal (446) with same signs, for obtaining a quadrature output signal substantially comprising the information content of the first usable frequency band (156; B1);
a second combiner (494), which is implemented to combine a quadrature portion (484b) of the first digitized intermediate frequency signal (444) with an inphase portion (490a) of the second digitized intermediate frequency signal (446) with same signs, for obtaining an inphase output signal (454) substantially comprising the information content of the second usable frequency band (158; B2);
a third combiner (496), which is implemented to combine a quadrature portion (484b) of the first digitized intermediate frequency signal (444) with an inphase portion (490a) of the second digitized intermediate frequency signal (446) with opposite signs, for obtaining an inphase output signal (452) substantially comprising the information content of the first usable frequency band (156; B1); and
a fourth combiner (498), which is implemented to combine an inphase portion (484a) of the first digitized intermediate frequency signal (444) with a quadrature portion (490b) of the second digitized intermediate frequency signal (446) with opposite signs, for obtaining a quadrature output signal (458) substantially comprising the information content of the second usable frequency band (158; B2).

7. The receiver (100; 200; 400) according to one of claims 1 to 6, wherein the frequency ($f_{LO1}$; LO1) of the first local oscillator signal (122; 252; 122a, 122b) and the sampling frequency ($f_s$) are selected such that in the first digitized intermediate frequency signal (144; 282; 444), a spectral image of the first usable frequency band (156; 241; B1), which is the lowest with regard to frequency, extends around an intermediate frequency ($F_{IF2}$), which is equal to a quarter of the sampling frequency ($f_s$).

8. The receiver (100; 200; 400) according to one of claims 1 to 7, wherein the sampling frequency ($f_s$) is between 1.8-fold and 2.2-fold of an amount of a frequency difference between a first carrier frequency ($f_1$) in the first usable frequency band (156; 241; B1) and a second carrier frequency ($f_2$) in the second usable frequency band (158; 243; B2).

9. The receiver (100; 200; 400) according to one of claims 1 to 7, wherein the sampling frequency ($f_s$) is selected such that an image (162, 172, 182; 292; 610) of the first usable frequency band (156; 241; B1) generated by the mixer device (120; 250; 420) lies within a frequency interval $[N \cdot f_s; (N+1/2) \cdot f_s]$, and that an image (164, 174, 184; 296) of the second usable frequency band (158; 243; B2) generated by the mixer device lies within the frequency interval $[N \cdot f_s; (N+1/2) \cdot f_s]$, wherein $N \geq 1$, and wherein the intermediate frequency filter device (130; 270; 430) comprises a band-pass filter (172; 472, 474), which is implemented to pass at least part of a frequency interval $[N \cdot f_s; (N+1/2) \cdot f_s]$ to which the first usable frequency band and the second usable frequency band are imaged by the mixer device, and to attenuate frequencies outside the frequency interval $[N \cdot f_s; (N+1/2) \cdot f_s]$.

10. The receiver (100; 200; 400) according to one of claims 1 to 7, wherein the sampling frequency ($f_s$) is selected such that an image (162, 172, 182; 292; 610) of the first usable frequency band (156; 241; B1) generated by the mixer device (120; 250; 420) lies within a frequency interval $[(N-1/2) \cdot f_s; N \cdot f_s]$, and that an image (164, 174, 184; 296) of the second usable frequency band (158; 243; B2) generated by the mixer device lies within the frequency interval $[(N-1/2) \cdot f_s; N \cdot f_s]$, wherein $N \geq 1$, and wherein the intermediate frequency filter device (130; 270; 430) comprises a band-pass filter (172; 472, 474), which is implemented to pass at least part of a frequency interval $[(N-1/2) \cdot f_s; N \cdot f_s]$ to which the first usable frequency band and the second usable frequency band are imaged by the mixer device, and to attenuate .frequencies outside the frequency interval $[(N-1/2) \cdot f_s; N \cdot f_s]$.

11. The receiver (100; 200; 400) according to one of claims 1 to 7, 9 or 10, wherein the analog/digital converter device (140; 280; 440a, 440b) is implemented to convert the first filtered intermediate frequency signal (134; 272; 434) or a signal (439a) derived therefrom by subsampling with regard to a frequency, and to convert the second filtered intermediate frequency signal (136; 274; 436) or a signal (439b) derived therefrom with regard to a frequency, wherein the intermediate frequency filter device (130; 270; 430) is implemented to act as anti-alias filter for analog/digital conversion.

12. The receiver (100; 200; 400) according to one of claims 1 to 11, wherein the mixer device (120; 250;

420) is implemented to image a first carrier frequency ($f_1$) in the first usable frequency band (156; 241; B1) to a first intermediate frequency $f_{IF1}$, so that the following applies:

$$N \cdot f_s + f_s / 4 = f_{IF1}$$

or

$$N \cdot f_s - f_s / 4 = f_{IF1},$$

wherein $N \geq 1$, and wherein $f_s$ is the sampling frequency.

13. The receiver (100; 200; 400) according to one of claims 1 to 12, wherein the mixer device (120; 250; 420) is implemented to image a second carrier frequency ($f_2$) in the second usable frequency band (158; 243; B2) to a first intermediate frequency $f_{IF1}$, so that the following applies:

$$N \cdot f_s + f_s / 4 = f_{IF1}$$

or

$$N \cdot f_s - f_s / 4 = f_{IF1},$$

wherein $N \geq 1$, and wherein $f_s$ is the sampling frequency.

14. A method for receiving a first usable frequency band (156; 241; B1) and a second usable frequency band (158; 243; B2), wherein the usable frequency bands are spaced apart, comprising:

band-pass filtering (710) of one or several receiving signals (112; 210, 212; 412) for providing a combination signal (114; 416) having the first usable frequency band and the second usable frequency band;
converting (720) the combination signal with a local oscillator signal (122; 252; 122a, 122b), whose frequency ($f_{LO1}$; LO1) is selected such that the first usable frequency band and the second usable frequency band are at least partly image bands of each other with regard to the frequency of the local oscillator signal, for obtaining a first intermediate frequency signal (124; 260; 424) and a second intermediate frequency signal (126; 262; 426);

filtering (730) the first intermediate frequency signal and the second intermediate frequency signal for obtaining a first filtered intermediate frequency signal (134; 260; 434) and a second filtered intermediate frequency signal (136; 262; 436); and

analog/digital converting (740) the first filtered intermediate frequency signal and the second filtered intermediate frequency signal by using a single sampling frequency ($f_s$) for obtaining a first digitized intermediate frequency signal (144; 282; 444) and a second digitized intermediate frequency signal (146; 284; 446),

wherein converting (720) the combination signal with the local oscillator signal comprises mixing the combination signal with the local oscillator signal, for obtaining an inphase intermediate frequency signal as the first intermediate frequency signal, which is based on the combination signal, and in which information contents of the first usable frequency band and the second usable frequency band at least partly spectrally overlap, and

for obtaining a quadrature intermediate frequency signal as the second intermediate frequency signal, which is based on the combination signal, and in which information contents of the first usable frequency band and the second usable frequency band at least partly spectrally overlap; and

**characterized in that** the method comprises the following further steps:

combining the inphase portion (484a) of the first digitized intermediate frequency signal (444) with the quadrature portion (490b) of the second digitized intermediate frequency signal (446) with same signs, for obtaining a quadrature-output signal substantially comprising the information content of the first usable frequency band (156; B1);

combining the quadrature portion (484b) of the first digitized intermediate frequency signal (444) with the inphase portion (490a) of the second digitized intermediate frequency signal (446) with same signs

for obtaining an inphase-output signal (454), substantially comprising the information content of the second usable frequency band (158; B2);

combining the quadrature portion (484b) of the first digitized intermediate frequency signal (444) with the inphase portion (490a) of the second digitized intermediate frequency signal (446) with opposite signs, for obtaining an inphase-output signal (452) substantially comprising the information content of the first usable frequency band (156; B1); and

combining the inphase portion (484a) of the first digitized intermediate frequency signal (444) with the quadrature portion (490b) of the second digitized intermediate frequency signal (446) with opposite signs, for obtaining a quadrature-output signal (458) substantially comprising the information content of the second usable frequency band (158; B2); and

that analog/digital converting comprises subsampling, such that frequency-conversion is performed by the subsampling.

15. The method according to claim 14, wherein during converting, the combination signal is mixed with the local oscillator signal for obtaining an inphase intermediate frequency signal as the first intermediate frequency signal, which is based on the combination signal, and in which information contents of the first usable frequency band and the second usable frequency band at least partly spectrally overlap, and for obtaining a quadrature intermediate frequency signal as the second intermediate frequency signal, which is based on the combination signal, and in which information contents of the first usable frequency band and the second usable frequency band at least partly spectrally overlap,

wherein analog/digital converting comprises frequency converting the first filtered intermediate frequency signal or signal derived therefrom by subsampling, and frequency converting the second filtered intermediate frequency signal or a signal derived therefrom,

wherein filtering the first intermediate frequency signal acts as anti-alias filtering for analog/digital conversion; and

the method comprising the following further steps:

obtaining a first output signal substantially comprising information content of the first usable frequency band, and in which information content of the second usable frequency band is attenuated or suppressed.compared to the information content of the first usable frequency band, based on the first digitized intermediate frequency signal and the second digitized intermediate frequency signal; and

obtaining a second output signal substantially comprising information content of the second usable frequency band, and in which information content of the first usable frequency band is attenuated or suppressed compared to information content of the second usable frequency band, based on the first digitized intermediate frequency signal and the second digitized intermediate frequency signal.

## Revendications

1. Récepteur (100; 200; 400) pour recevoir une première bande de fréquences utiles (156; 241; B1) et une deuxième bande de fréquences utiles (158; 243; B2), les bandes de fréquences utiles étant distantes l'une de l'autre, aux caractéristiques suivantes:

   un moyen de filtre passe-bande (110; 220; 410) destiné à filtrer un ou plusieurs signaux de réception (112; 210, 212; 412), le moyen de filtre passe-bande étant réalisé de manière à fournir un signal de combinaison (114; 416) présentant la première bande de fréquences utiles et la deuxième bande de fréquences utiles;
   un moyen mélangeur (120; 250; 420) destiné à convertir le signal de combinaison par un signal d'oscillateur local (122; 252; 122a, 122b) dont la fréquence ($f_{L01}$; LO1) est choisie de sorte que la première bande de fréquences utiles et la deuxième bande de fréquences utiles soient, par rapport à la fréquence du signal d'oscillateur local, au moins partiellement des bandes miroirs l'une par rapport à l'autre, pour obtenir un premier signal de fréquence intermédiaire (124; 260; 424) et un deuxième signal de fréquence intermédiaire (126; 262; 426);
   un moyen de filtre de fréquence intermédiaire (130; 270; 430) destiné à filtrer le premier signal de fréquence intermédiaire et le deuxième signal de fréquence intermédiaire, pour obtenir un premier signal de fréquence intermédiaire filtré (134; 260; 434) et un deuxième signal de fréquence intermédiaire filtré (136; 262; 436); et
   un moyen convertisseur analogique/numérique (140; 280; 440a, 440b) destiné à la conversion analogique/numérique du premier signal de fréquence intermédiaire filtré et du deuxième signal de fréquence intermédiaire filtré à l'aide d'une seule fréquence de balayage ($f_s$), pour obtenir un premier signal de fréquence intermédiaire numérisé (144; 282; 444) et un deuxième signal de fréquence intermédiaire numérisé (146; 284; 446),
   le moyen mélangeur étant conçu de manière à mélanger le signal de combinaison avec le signal d'oscillateur local (122; 122a, 122b), pour obtenir, comme premier signal de fréquence intermédiaire (124; 424), un signal de fréquence intermédiaire en phase qui est basé sur le signal de combinaison et dans lequel les contenus d'information de la première bande de fréquences utiles et de la deuxième bande de fréquences utiles se recouvrent spectralement au moins en partie, et
   pour obtenir, comme deuxième signal de fréquence intermédiaire (126; 426), un signal de fréquence intermédiaire en quadrature qui est basé sur le signal de combinaison et dans lequel les contenus d'information de la première bande de fréquences utiles et de la deuxième bande de fréquences utiles se recouvrent spectralement au moins en partie;

   **caractérisé par le fait que** le récepteur comporte, par ailleurs, un moyen séparateur (450) présentant les caractéristiques suivantes:

   un moyen de décomposition en phase/en quadrature (480, 482, 486, 488) qui est conçu de manière à déterminer, sur base du premier signal de fréquence intermédiaire numérisé (444), une part en phase associée (484a) et une part en quadrature associée (484b), et à déterminer, sur base du deuxième signal de fréquence intermédiaire numérisé (446), une part en phase associée (490a) et une part en quadrature associée (490b);
   un premier combineur (492) qui est conçu de manière à combiner la part en phase (484a) du premier signal de fréquence intermédiaire numérisé (444) avec la part en quadrature (490b) du deuxième signal de fréquence intermédiaire numérisé (446) à signe identique, pour obtenir un signal de sortie en quadrature qui comporte substantiellement le contenu d'information de la première bande de fréquences utiles (156; B1);
   un deuxième combineur (494) qui est conçu de manière à combiner la part en quadrature (484b) du premier signal de fréquence intermédiaire numérisé (444) avec la part en phase (490a) du deuxième signal de fréquence intermédiaire numérisé (446) à signe identique, pour obtenir un signal de sortie en phase (454) qui comporte substantiellement le contenu d'information de la deuxième bande de fréquences utiles (158; B2);
   un troisième combineur (496) qui est conçu de manière à combiner la part en quadrature (484b) du premier signal de fréquence intermédiaire numérisé (444) avec la part en phase (490a) du deuxième signal de fréquence intermédiaire numérisé (446) à signe contraire, pour obtenir un signal de sortie en phase (452) qui comporte substantiellement le contenu d'information de la première bande de fréquences utiles (156; B1); et
   un quatrième combineur (498) qui est conçu de manière à combiner la part en phase (484a) du premier signal de fréquence intermédiaire numérisé (444) avec la part en quadrature (490b) du deuxième signal de fréquence intermédiaire numérisé (446) à signe contraire, pour obtenir un signal de sortie en quadrature (458) qui comporte substantiellement le contenu d'information de la deuxième bande de fréquences utiles (158; B2), et

que le récepteur est conçu de sorte que par le moyen de conversion analogique/numérique (140; 280; 440a, 440b) ait lieu un sous-balayage, et que par le sous-balayage soit réalisée une conversion de fréquence.

**2.** Récepteur (100; 200; 400) selon la revendication 1, dans lequel le moyen mélangeur est conçu de manière à mélanger le signal de combinaison avec le signal d'oscillateur local (122; 122a, 122b), pour obtenir, comme premier signal de fréquence intermédiaire (124; 424), un signal de fréquence intermédiaire en phase qui est basé sur le signal de combinaison et dans lequel des contenus d'information de la première bande de fréquences utiles et de la deuxième bande de fréquences utiles se recouvrent spectralement au moins partiellement, et

pour obtenir, comme deuxième signal de fréquence intermédiaire (126; 426), un signal de fréquence intermédiaire en quadrature qui est basé sur le signal de combinaison et dans lequel des contenus d'information de la première bande de fréquences utiles et de la deuxième bande de fréquences utiles se recouvrent spectralement au moins partiellement;

dans lequel le récepteur comporte, par ailleurs, un moyen séparateur (450) qui est conçu de manière à obtenir, sur base du premier signal de fréquence intermédiaire numérisé (144; 444) et du deuxième signal de fréquence intermédiaire numérisé (146; 446), un premier signal de sortie (452) qui comporte substantiellement un contenu d'information de la première bande de fréquences utiles et dans lequel un contenu d'information de la deuxième bande de fréquences utiles est atténué ou supprimé par rapport au contenu d'information de la première bande de fréquences utiles, et

à obtenir un deuxième signal de sortie (454) qui comporte substantiellement un contenu d'information de la deuxième bande de fréquences utiles et dans lequel un contenu d'information de la première bande de fréquences utiles est atténué ou supprimé par rapport au contenu d'information de la deuxième bande de fréquences utiles;

dans lequel le moyen de conversion analogique/numérique (140; 280; 440a, 440b) est conçu de manière à convertir le premier signal de fréquence intermédiaire filtré (134; 272; 434) ou un signal dérivé de celui-ci (439a) par un sous-balayage par rapport à une fréquence, et à convertir le deuxième signal de fréquence intermédiaire filtré (136; 274; 436) ou un signal dérivé de celui-ci (439b) par rapport à une fréquence, le moyen de filtre de fréquence intermédiaire (130; 270; 430) étant conçu de manière à agir comme filtre anti-repliement pour la conversion analogique/numérique.

**3.** Récepteur (100; 400) selon l'une des revendications 1 ou 2, dans lequel le moyen de filtre passe-bande (110; 410) est conçu de manière à recevoir un signal de réception (112; 412), pour atténuer la première bande de fréquences utiles (156; B1) et la deuxième bande de fréquences utiles (158; B2) moins fortement qu'une bande de fréquences située entre la première bande de fréquences utiles et la deuxième bande de fréquences utiles, et à mettre à disposition un signal de combinaison (114; 416) dans lequel sont contenus un contenu d'information de la première bande de fréquences utiles et un contenu d'information de la deuxième bande de fréquences utiles;

dans lequel le moyen mélangeur est conçu de manière à mélanger le signal de combinaison avec le signal d'oscillateur local (122; 122a, 122b), pour obtenir, comme premier signal de fréquence intermédiaire (124; 424), un signal de fréquence intermédiaire en phase qui est basé sur le signal de combinaison et dans lequel des contenus d'information de la première bande de fréquences utiles et de la deuxième bande de fréquences utiles se recouvrent spectralement au moins partiellement, et

pour obtenir, comme deuxième signal de fréquence intermédiaire (126; 426), un signal de fréquence intermédiaire en quadrature qui est basé sur le signal de combinaison et dans lequel des contenus d'information de la première bande de fréquences utiles et de la deuxième bande de fréquences utiles se recouvrent spectralement au moins partiellement;

dans lequel le récepteur comporte, par ailleurs, un moyen séparateur (450) qui est conçu de manière à obtenir, sur base du premier signal de fréquence intermédiaire numérisé (144; 444) et du deuxième signal de fréquence intermédiaire numérisé (146; 446), un premier signal de sortie (452) qui comporte substantiellement un contenu d'information de la première bande de fréquences utiles et dans lequel un contenu d'information de la deuxième bande de fréquences utiles est atténué ou supprimé par rapport au contenu d'information de la première bande de fréquences utiles, et

à obtenir un deuxième signal de sortie (454) qui comporte substantiellement un contenu d'information de la deuxième bande de fréquences utiles et dans lequel un contenu d'information de la première bande de fréquences utiles est atténué ou supprimé par rapport au contenu d'information de la deuxième bande de fréquences utiles;

dans lequel le premier moyen mélangeur (420) comporte un mélangeur en phase (462) qui est conçu de manière à générer le signal de fréquence intermédiaire en phase (424) sur base du signal de combinaison (416), et un mélangeur en quadrature (464) qui est conçu de manière à générer le signal de fréquence intermédiaire en quadrature (426) sur base du signal de combinaison (416),

dans lequel le mélangeur en phase (462) et le mélangeur en quadrature (464) sont conçus de manière à recevoir deux signaux d'oscillateur local (122a, 122b) de même fréquence déphasés entre eux dans une plage comprise entre 70° et 110°.

4. Récepteur (400) selon la revendication 3, dans lequel le moyen séparateur (450) comporte un moyen de décomposition en phase/en quadrature (480, 482, 486, 488) qui est conçu de manière à déterminer, sur base du premier signal de fréquence intermédiaire numérisé (444), une part en phase associée (484a) et une part en quadrature associée (484b), et à déterminer, sur base du deuxième signal de fréquence intermédiaire numérisé (446), une part en phase associée (490a) et une part en quadrature associée (490b); et

dans lequel le moyen séparateur comporte, par ailleurs, un moyen combineur (492, 494, 496, 498) qui est conçu de manière à obtenir, par une première combinaison de la part en phase (484a) ou de la part en quadrature (484b) du premier signal de fréquence intermédiaire numérisé (444) avec la part en phase (490a) ou la part en quadrature (490b) du deuxième signal de fréquence intermédiaire numérisé (446), le premier signal de sortie, et à obtenir, par une deuxième combinaison de la part en phase ou de la part en quadrature du premier signal de fréquence intermédiaire numérisé avec la part en phase ou la part en quadrature du deuxième signal de fréquence intermédiaire numérisé, le deuxième signal de sortie.

5. Récepteur (400) selon l'une des revendications 3 ou 4, dans lequel le moyen séparateur (450) comporte, comme premier moyen de décomposition en phase/en quadrature, un balayeur en quadrature (482, 484) qui est conçu de manière à pondérer, lors d'une génération de la part en phase (484a) à partir du premier signal de fréquence intermédiaire numérisé (444), des valeurs de balayage successives du premier signal de fréquence intermédiaire numérisé par une succession de valeurs [+A; 0; -A; 0] ou une succession de valeurs proportionnelle à cette dernière, et

à pondérer, lors d'une génération de la part en quadrature (484b) à partir du premier signal de fréquence intermédiaire numérisé, des valeurs de balayage successives du premier signal de fréquence intermédiaire numérisé par une succession de valeurs [0; -A; 0; +A] ou une succession de valeurs proportionnelle à cette dernière;

le moyen séparateur (450) comportant, comme deuxième moyen de décomposition en phase/en quadrature, un deuxième balayeur en quadrature (486, 488) qui est conçu de manière à pondérer, lors d'une génération de la part en phase (490a) à partir du deuxième signal de fréquence intermédiaire numérisé (446), des valeurs de balayage successives du deuxième signal de fréquence intermédiaire numérisé par une succession de valeurs [+A; 0; -A; 0] ou une succession de valeurs proportionnelle à cette dernière, et

à pondérer, lors d'une génération de la part en quadrature (490b) à partir du deuxième signal de fréquence intermédiaire numérisé (446), des valeurs de balayage successives du deuxième signal de fréquence intermédiaire numérisé par une succession de valeurs [0; -A; 0; +A] ou une succession de valeurs proportionnelle à cette dernière, A ≠ 0.

6. Récepteur (400) selon la revendication 4 ou 5, dans lequel le moyen séparateur (450) présente les caractéristiques suivantes:

un premier combineur (492) qui est conçu de manière à combiner la part en phase (484a) du premier signal de fréquence intermédiaire numérisé (444) avec la part en quadrature (490b) du deuxième signal de fréquence intermédiaire numérisé (446) à signe identique, pour obtenir un signal de sortie en quadrature qui comporte substantiellement le contenu d'information de la première bande de fréquences utiles (156; B1); un deuxième combineur (494) qui est conçu de manière à combiner la part en quadrature (484b) du premier signal de fréquence intermédiaire numérisé (444) avec la part en phase (490a) du deuxième signal de fréquence intermédiaire numérisé (446) à signe identique, pour obtenir un signal de sortie en phase (454) qui comporte substantiellement le contenu d'information de la deuxième bande de fréquences utiles (158; B2); un troisième combineur (496) qui est conçu de manière à combiner la part en quadrature (484b) du premier signal de fréquence intermédiaire numérisé (444) avec la part en phase (490a) du deuxième signal de fréquence intermédiaire numérisé (446) à signe contraire, pour obtenir un signal de sortie en phase (452) qui comporte substantiellement le contenu d'information de la première bande de fréquences utiles (156; B1); et

un quatrième combineur (498) qui est conçu de manière à combiner la part en phase (484a) du premier signal de fréquence intermédiaire numérisé (444) avec la part en quadrature (490b) du deuxième signal de fréquence intermédiaire numérisé (446) à signe contraire, pour obtenir un signal de sortie en quadrature (458) qui comporte substantiellement le contenu d'information de la deuxième bande de fréquences utiles (158; B2).

7. Récepteur (100; 200; 400) selon l'une des revendications 1 à 6, dans lequel la fréquence ($f_{L01}$; LO1) du premier signal d'oscillateur local (122; 252; 122a, 122b) et la fréquence de balayage ($f_s$) sont choisies

de sorte que, dans le premier signal de fréquence intermédiaire numérisé (144; 282; 444), une reproduction spectrale la plus basse en fréquence de la première bande de fréquences utiles (156; 241; B1) s'étende autour d'une fréquence intermédiaire ($f_{ZF2}$) qui est égale à un quart de la fréquence de balayage ($f_s$).

8. Récepteur (100; 200; 400) selon l'une des revendications 1 à 7, dans lequel la fréquence de balayage ($f_s$) est comprise entre 1,8 fois et 2,2 fois une quantité d'une différence de fréquence entre une première fréquence porteuse ($f_1$) dans la première bande de fréquences utiles (156; 241; $B_1$) et une deuxième fréquence porteuse ($f_2$) dans la deuxième bande de fréquences utiles (158; 243; B2).

9. Récepteur (100; 200; 400) selon l'une des revendications 1 à 7, dans lequel la fréquence de balayage ($f_s$) est choisie de sorte qu'une reproduction (162, 172, 182; 292; 610) de la première bande de fréquences utiles (156; 241; B1) générée par le moyen mélangeur (120; 250; 420) se situe dans un intervalle de fréquences [N · $f_s$; (N+1/2) · $f_s$], et qu'une reproduction (164, 174, 184; 296) de la deuxième bande de fréquences utiles (158; 243; B2) générée par le moyen mélangeur se situe dans l'intervalle de fréquences [N · $f_s$; (N+1/2) · $f_s$],

$$N \geq 1,$$

et

le moyen de filtre de fréquence intermédiaire (130; 270; 430) présente un filtre passe-bande (172; 472, 474) qui est conçu de manière à laisser passer au moins une partie d'un intervalle de fréquences [N · $f_s$; (N+1/2) · $f_s$] sur laquelle la première bande de fréquences utiles et la deuxième bande de fréquences utiles sont reproduites par le moyen mélangeur, et à atténuer les fréquences en-dehors de l'intervalle de fréquences [N · $f_s$; (N+1/2) · $f_s$].

10. Récepteur (100; 200; 400) selon l'une des revendications 1 à 7, dans lequel la fréquence de balayage ($f_s$) est choisie de sorte qu'une reproduction (162, 172, 182; 292; 610) de la première bande de fréquences utiles (156; 241; B1) générée par le moyen mélangeur (120; 250; 420) se situe dans un intervalle de fréquences [(N-1/2) · $f_s$; N · $f_s$], et qu'une reproduction (164, 174, 184; 296) de la deuxième bande de fréquences utiles (158; 243; B2) générée par le moyen mélangeur le moyen mélangeur se situe dans l'intervalle de fréquences [(N-1/2) $f_s$; N·$f_s$],

$$N \geq 1,$$

et

le moyen de filtre de fréquence intermédiaire (130; 270; 430) présente un filtre passe-bande (172; 472, 474) qui est conçu de manière à laisser passer au moins une partie d'un intervalle de fréquences [(N-1/2) $f_s$; N·$f_s$] sur laquelle la première bande de fréquences utiles et la deuxième bande de fréquences utiles sont reproduites par le moyen mélangeur, et à atténuer les fréquences en-dehors de l'intervalle de fréquences [(N-1/2) $f_s$; N · $f_s$].

11. Récepteur (100; 200; 400) selon l'une des revendications 1 à 7, 9 ou 10, dans lequel le moyen de conversion analogique/numérique (140; 280; 440a, 440b) est conçu de manière à convertir le premier signal de fréquence intermédiaire filtré (134; 272; 434) ou un signal (439a) dérivé de ce dernier par un sous-balayage par rapport à une fréquence, et à convertir le deuxième signal de fréquence intermédiaire filtré (136; 274; 436) ou un signal (439b) dérivé de ce dernier par rapport à une fréquence, le moyen de filtre de fréquence intermédiaire (130; 270; 430) étant conçu de manière à servir de filtre anti-repliement pour la conversion analogique/ numérique.

12. Récepteur (100; 200; 400) selon l'une des revendications 1 à 11, dans lequel le moyen mélangeur (120; 250; 420) est conçu de manière à reproduire une première fréquence porteuse ($f_1$) dans la première bande de fréquences utiles (156; 241; B1) sur une première fréquence intermédiaire $f_{ZF1}$, de sorte que soit valable:

$$N \cdot f_s + f_s/4 = f_{ZF1}$$

ou

$$N \cdot f_s - f_s/4 = f_{ZF1},$$

où N $\leq$ 1, et où $f_s$ est la fréquence de balayage.

13. Récepteur (100; 200; 400) selon l'une des revendications 1 à 12, dans lequel le moyen mélangeur (120; 250; 420) est conçu de manière à reproduire une deuxième fréquence porteuse ($f_2$) dans la deuxième bande de fréquences utiles (158; 243; B2) sur une première fréquence intermédiaire $f_{ZF1}$, de sorte que soit valable:

$$N \cdot f_s + f_s/4 = f_{ZF1}$$

ou

$$N \cdot f_s - f_s/4 = f_{ZF1},$$

où $N \leq 1$, et où $f_s$ est la fréquence de balayage.

14. Procédé pour recevoir une première bande de fréquences utiles (156; 241; B1) et une deuxième bande de fréquences utiles (158; 243; B2), les bandes de fréquences utiles étant distantes l'une de l'autre, aux étapes suivantes consistant à:

  filtrer passe-bande (710) un ou plusieurs signaux de réception (112; 210, 212; 412), pour fournir un signal de combinaison (114; 416) présentant la première bande de fréquences utiles et la deuxième bande de fréquences utiles;
  convertir (720) le signal de combinaison par un signal d'oscillateur local (122; 252; 122a, 122b) dont la fréquence ($f_{L01}$; LO1) est choisie de sorte que la première bande de fréquences utiles et la deuxième bande de fréquences utiles soient, par rapport à la fréquence du signal d'oscillateur local, au moins partiellement des bandes miroirs l'une par rapport à l'autre, pour obtenir un premier signal de fréquence intermédiaire (124; 260; 424) et un deuxième signal de fréquence intermédiaire (126; 262; 426);
  filtrer (739) le premier signal de fréquence intermédiaire et le deuxième signal de fréquence intermédiaire, pour obtenir un premier signal de fréquence intermédiaire filtré (134; 260; 434) et un deuxième signal de fréquence intermédiaire filtré (136; 262; 436); et
  convertir analogique/numérique (740) le premier signal de fréquence intermédiaire filtré et le deuxième signal de fréquence intermédiaire filtré à l'aide d'une seule fréquence de balayage ($f_s$), pour obtenir un premier signal de fréquence intermédiaire numérisé (144; 282; 444) et un deuxième signal de fréquence intermédiaire numérisé (146; 284; 446),
  la conversion (720) du signal de combinaison par le signal d'oscillateur local comprend un mélange du signal de combinaison avec le signal d'oscillateur local, pour obtenir, comme premier signal de fréquence intermédiaire, un signal de fréquence intermédiaire en phase qui est basé sur le signal de combinaison et dans lequel les contenus d'information de la première bande de fréquences utiles et de la deuxième bande de fréquences utiles se recouvrent spectralement au moins en partie, et
  pour obtenir, comme deuxième signal de fréquence intermédiaire, un signal de fréquence intermédiaire en quadrature qui est basé sur le signal de combinaison et dans lequel les contenus d'information de la première bande de fréquences utiles et de la deuxième bande de fréquences utiles se recouvrent spectralement au moins en partie;

  **caractérisé par le fait que** le procédé comporte d'autres étapes:

  combiner la part en phase (484a) du premier signal de fréquence intermédiaire numérisé (444) avec la part en quadrature (490a) du deuxième signal de fréquence intermédiaire numérisé (446) de même signe, pour obtenir un signal de sortie en quadrature qui comporte substantiellement le contenu d'information de la première bande de fréquences utiles (156; B1);
  combiner la part en quadrature (484b) du premier signal de fréquence intermédiaire numérisé (444) avec la part en phase (490a) du deuxième signal de fréquence intermédiaire numérisé (446) à signe identique, pour obtenir un signal de sortie en phase (454) qui comporte substantiellement le contenu d'information de la deuxième bande de fréquences utiles (158; B2);
  combiner la part en quadrature (484b) du premier signal de fréquence intermédiaire numérisé (444) avec la part en phase (490a) du deuxième signal de fréquence intermédiaire numérisé (446) à signe contraire, pour obtenir un signal de sortie en phase (452) qui comporte substantiellement le contenu d'information de la première bande de fréquences utiles (156; B1); et
  combiner la part en phase (484a) du premier signal de fréquence intermédiaire numérisé (444) avec la part en quadrature (490b) du deuxième signal de fréquence intermédiaire numérisé (446) à signe contraire, pour obtenir un signal de sortie en quadrature (458) qui comporte substantiellement le contenu d'information de la deuxième bande de fréquences utiles (158; B2), et
  la conversion analogique/numérique comportant un sous-balayage, de sorte que par le lieu sous-balayage soit réalisée une conversion de fréquence.

15. Procédé selon la revendication 14, dans lequel, lors de la conversion, le signal de combinaison est mélangé avec le signal d'oscillateur local, pour obtenir, comme premier signal de fréquence intermédiaire, un signal de fréquence intermédiaire en phase qui est basé sur le signal de combinaison et dans lequel des contenus d'information de la première bande de fréquences utiles et de la deuxième bande de fréquences utiles se recouvrent spectralement au moins partiellement,

et pour obtenir, comme deuxième signal de fréquence intermédiaire, un signal de fréquence intermédiaire en quadrature qui est basé sur le signal de combinaison et dans lequel des contenus d'information de la première bande de fréquences utiles et de la deuxième bande de fréquences utiles se recouvrent spectralement au moins partiellement;

la conversion analogique/numérique comportant une conversion en fréquence du premier signal de fréquence intermédiaire filtré ou d'un signal dérivé de celui-ci par un sous-balayage et une conversion en fréquence du deuxième signal de fréquence intermédiaire filtré ou d'un signal dérivé de celui-ci,

le filtrage du premier signal de fréquence intermédiaire agissant comme filtrage anti-repliement pour la conversion analogique/numérique ; et

le procédé comportant les autres étapes suivantes consistant à :

obtenir un premier signal de sortie qui comporte substantiellement un contenu d'information de la première bande de fréquences utiles, et dans lequel un contenu d'information de la deuxième bande de fréquences utiles est atténué ou supprimé par rapport au contenu d'information de la première bande de fréquences utiles, sur base du premier signal de fréquence intermédiaire numérisé et du deuxième signal de fréquence intermédiaire numérisé; et

obtenir un deuxième signal de sortie qui comporte substantiellement un contenu d'information de la deuxième bande de fréquences utiles, et dans lequel un contenu d'information de la première bande de fréquences utiles est atténué ou supprimé par rapport au contenu d'information de la deuxième bande de fréquences utiles, sur base du premier signal de fréquence intermédiaire numérisé et du deuxième signal de fréquence intermédiaire numérisé.

FIG 1

FIG 2

EP 2 033 009 B1

# FIG 3a

# FIG 3b

# FIG 4

EP 2 033 009 B1

Analoge Unterdrückung
des zweiten Spiegelkanals

Bandpass Filter

Bandpass Filter

Hybride Trennung von zwei Trägern

Digitale Steuerung
der Verstärkung

HF Filter
B1+B2

LNA
B1+B2

Puffer

Puffer

VGA

VGA

A/D-Umsetzer

A/D-Umsetzer

$n*fs\pm fs74 = ZF1$

cos [πn/2]

-sin [πn/2]

cos [πn/2]

-sin [πn/2]

B1 L1Q
Q-Kanal

B2 L2I
I-Kanal

B1 L1I
I-Kanal

B1 L2Q
Q-Kanal

# FIG 5

$$H-G = L1I$$
$$I+F = L1Q$$

$$H+G = L2I$$
$$F-I = L2Q$$

# FIG 6

Ideale Abtastung

## FIG 7a

/700

/710

Bandpass-Filter eines oder mehrerer Empfangssignale, um ein Kombinationssignal, das ein erstes Nutzfrequenzband und ein zweites Nutzfrequenzband aufweist, zu erhalten, oder um ein erstes Bandpassfiltersignal, das das erste Nutzfrequenzband aufweist, und ein zweites Bandpassfiltersignal, das das zweite Nutzfrequenzband aufweist, umgefaßt, zu erhalten;

/720

Umsetzen des Kombinationssignal oder des ersten Bandpassfiltersignal und des zweiten Bandpassfiltersignal mit dem Lokaloszilatorsignals, um ein erstes Zwischenfrequenzsignal und ein zweites Zwischenfrequenzsignal zu erhalten, wobei die Frequenz des Lokaloszilatorsignals so gewählt ist, dass das erste Nutzfrequenzband und des zweite Nutzfrequenzband bezüglich der Frequenz des Lokaloszilatorsignals zumindest teilweise Spiegelbänder zueinander sind-

## FIG 7b

/700

/730

Filtern des erstes Zwischenfrequenzsignal oder eines von dem ersten Zwischenfrequenzsignal abgeleiteten Signals und des zweitenZwischenfrequenzsignal oder eines von dem zweiten Zwischenfrequenzsignal abgeleiteten Signals, um ein erstes gefiltertes Zwischenfrequenzsignal und ein zweites Zwischenfrequenzsignal zu erhalten

/740

Analog/ Digital-Wandler des erstes gefilterten Zwischenfrequenzsignal oder eines davon abgeleiteten Signals und des zweiten gefilterten Zwischenfrequenzsignal oder eines davon abgeleiteten Signals unter Verwendung einer Abtastfrequenz, um ein erstes digitalisiertes Zwischenfrequenzsignal und ein zweites digitalisiertes Zwischenfrequenzsignal zu erhalten

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *IEEE Journal of Solid-State Circuits,* Juli 2005, vol. 40 (7